# EUROPEAN PATENT APPLICATION

(11) **EP 4 485 188 A1**
(43) Date of publication of application: **01.01.2025**
(21) Application number: 23806898.5
(22) Date of filing: 15.05.2023
(51) Int. Cl.: G06F 9/451

(54) **INFORMATION TRANSFER METHOD AND ELECTRONIC DEVICE**

(30) Priority: 18.05.2022 CN 202210546903; 20.06.2022 CN 202210701998
(71) Applicant: Huawei Technologies Co., Ltd., Shenzhen, Guangdong 518129 (CN)
(72) Inventor: PENG, Yuzhuo, Shenzhen, Guangdong 518129 (CN)
(74) Representative: Maiwald GmbH
(86) International application number: PCT/CN2023/094357
(87) International publication number: WO 2023/221946

(57) **Abstract**

An information transfer method and an electronic device are provided, and relate to the field of electronic technologies. The method includes: displaying, by the electronic device, a first interface of a first application; detecting an operation performed on a first object, and displaying, by the electronic device, a first floating window of a second application; detecting a second operation performed on the first object; displaying an indicator of the first object in the first floating window in response to the second operation; displaying, by the electronic device, a second interface of a third application or a second interface of the first application in response to detecting a third operation; detecting a fourth operation of dragging the first floating window to a first position in the second interface and releasing the first floating window, or detecting a fourth operation of dragging all content displayed in a stacked form in the first floating window to a first position in the second interface and releasing all the content; and inserting, by the electronic device in response to detecting the fourth operation, all objects included in the first floating window into the first position in the second interface.

## Description

This application claims priority to Chinese Patent Application No. 202210546903.4, filed with the China National Intellectual Property Administration on May 18, 2022 and entitled "INFORMATION TRANSFER METHOD AND ELECTRONIC DEVICE", and priority to Chinese Patent Application No. 202210701998.2, filed with the China National Intellectual Property Administration on June 20, 2022 and entitled "INFORMATION TRANSFER METHOD AND ELECTRONIC DEVICE", which are incorporated herein by reference in their entireties.

### TECHNICAL FIELD

This application relates to the field of electronic device technologies, and in particular, to an information transfer method and an electronic device.

### BACKGROUND

As there are increasingly more applications on an electronic device, there are increasingly more requirements for information sharing between applications. Currently, the electronic devices provide some simple sharing methods for text and a picture. For example, a user can copy selected text in an application 1, and then switch to an application 2 to paste the text, to implement text sharing. For another example, the user may select a picture in the application 1, store the selected picture in a local gallery application, switch to the application 2, and import the picture in the gallery application to the application 2, to implement picture sharing. Alternatively, the user may select the picture from the application 1, select a sharing function, and share the selected picture with the application 2, to implement picture sharing. It may be figured out that, when there is a large amount of content of shared information or there are many types of shared information, or shared information is from a plurality of applications, or shared information is shared with a plurality of applications, the user needs to repeatedly switch between the plurality of applications to perform related operations. Therefore, it can be learned that an operation of an existing method for sharing information between applications is complex. User experience is poor.

### SUMMARY

This application provides an information transfer method and an electronic device, to reduce an information sharing operation and improve information sharing efficiency.

According to a first aspect, this application provides an information transfer method. The method includes: displaying, by an electronic device, a first interface of a first application; detecting that a first object in the first interface is selected, and detecting a first operation performed on the first object; displaying, by the electronic device, a first floating window of a second application in response to detecting the first operation (for example, a touch and hold operation, a touch-and-hold then drag operation, or a touch-and-hold then shake operation); detecting a second operation performed on the first object, where the second operation may be, for example, an operation of dragging the first object to the first floating window; displaying an indicator of the first object in the first floating window in response to the second operation, where the indicator may be a text indicator, a picture indicator, or a combination thereof; displaying, by the electronic device, a second interface of a third application or a second interface of the first application in response to detecting a third operation; detecting a fourth operation of dragging the first floating window to a first position in the second interface and releasing the first floating window, or detecting a fourth operation of dragging all content displayed in a stacked form in the first floating window to a first position in the second interface and releasing all the content; and inserting, by the electronic device in response to detecting the fourth operation, all or some objects included in the first floating window into the first position in the second interface.

The second application herein refers to a "transfer station" application in subsequent embodiments. It should be understood that, an intention of the foregoing operation is to insert all objects in the transfer station, but an actual result may not be that all the objects can be inserted. For example, the first position may not support object insertion of a specific type, and therefore, an object that fails to be inserted may exist in all the objects. It should be understood that the "transfer station" is merely a name of an application in which the solution provided in this application is located, and does not limit this application.

The first application and the third application may be applications preinstalled before delivery of the electronic device, or may be applications installed by a user. It should be noted that any software component installed in the electronic device may be considered as an "application" regardless of size. For example, a software component running on an operating system is an application in a common sense, and a software component (which may also be referred to as a service) in the operating system in this application may also be considered as an "application". This is not limited in this application.

It should be noted that the operation of selecting the first object and the first operation performed on the first object may be one operation, or may be a plurality of consecutive operations, or may be a plurality of discontinuous operations.

In some embodiments, when the user intends to insert all objects in the transfer station or the first floating window, the electronic device may support displaying an effect of dragging the first floating window, or may support displaying an effect of dragging all objects in the first floating window. Optionally, if there are a plurality of objects, the objects are displayed in the stacked form. In this way, the user can drag all objects at a time.

In some embodiments, before the first object is dragged to the first floating window, an indicator of a second object is already displayed in the first floating window, and after the first object is dragged to the first floating window, the displaying an indicator of the first object in the first floating window includes displaying the indicator of the first object and the indicator of the second object in the stacked form in the first floating window. In this application, when the second object already exists in the first floating window, a new first object that is dragged to the first floating window and the second object are displayed in the stacked form. Screen space occupied by the first floating window of the transfer station is reduced, screen information blocking is avoided, and user experience is improved.

In some embodiments, the indicator of the first object is located at a layer above the indicator of the second object. It can be learned that the latest object is displayed above the stacked object. This facilitates user search.

In some embodiments, the method further includes detecting a fifth operation performed on the first floating window; displaying, by the electronic device, a third interface of the second application in the first floating window in response to detecting the fifth operation, where the third interface includes indicators of one or more objects dragged to the first floating window. The second operation may be, for example, an operation of clicking a floating window or clicking an object stacked in the floating window. After the operation is performed, an original stacked object may be opened, and a tiled third interface (which may also be referred to as a home screen or a level-1 interface) is presented.

In some embodiments, the method further includes detecting a sixth operation performed on an indicator of a third object in the first floating window, where the third object is any object included in the first floating window; and inserting, by the electronic device, the third object into a second position into the second interface in response to the sixth operation, where the second position is any position in the second interface or a position at which a cursor is currently located. The sixth operation may be, for example, an operation of dragging the third object to a specific position in the second interface or clicking the third object. In a dragging manner, the third object may be inserted into the position to which the third object is dragged. In a click manner, the third object may be inserted into the position of the current cursor by default.

In some embodiments, the method further includes: detecting a sixth operation performed on a first control in the first floating window, where the first control is used to start a multi-selection state of the second application; corresponding, by an indicator of each object displayed in the first floating window, to one check box in response to detecting the sixth operation; detecting a seventh operation that a user selects indicators of at least two objects in the first floating window by using the check boxes; detecting an eighth operation performed on indicators of the at least two objects or an indicator of any one of the at least two objects, where the eighth operation may be, for example, an operation that the user drags the indicators of the at least two selected objects or the indicator of any one of the at least two objects to a third position; and inserting, by the electronic device, the at least two objects into the third position in the second interface in response to detecting the eighth operation, where the third position is any position in the second interface or a position at which a cursor is currently located. It can be learned that the transfer station provided in this application may also provide a multi-selection function, so that a user is allowed to select a plurality of objects, and the plurality of objects may be inserted after one operation is performed.

In some embodiments, when the electronic device determines the selected first object as a plurality of objects, and each object in the plurality of objects corresponds to one indicator, the displaying an indicator of the first object in the first floating window includes:
displaying a plurality of indicators of the plurality of objects in the stacked form in the first floating window, or displaying a plurality of indicators of the plurality of objects in a tiled form in the first floating window. When the user selects an object and intends to drag the object to the transfer station, the selected object may be stored in the transfer station as one object, or may be stored in the transfer station as a plurality of objects. That is, the transfer station can automatically identify a plurality of objects, so that the user can implement a finer-grained object insertion operation when inserting an object. For example, the user selects a text segment and a picture at the same time, and after the selected objects are dragged to the transfer station, the transfer station divides the text and the picture into two objects for display, and supports the user to drag out the text or picture separately when dragging out the object, so as to achieve effects of one-time storage and dragging out for a plurality of times.

In some embodiments, when the electronic device determines the selected first object as a plurality of objects, the electronic device displays the plurality of first objects in the stacked form in the third interface of the second application. In these embodiments, even in the level-1 interface that is displayed in a tiled form and that is of the transfer station, objects dragged once may be displayed in a stacked form, so as to facilitate distinguishing from other objects that are not dragged once.

In some embodiments, all objects may be displayed in a third interface of the transfer station, that is, the level-1 interface in an order of dragging (or another operation manner) all the objects to the transfer station. In some other embodiments, all objects may alternatively be displayed in the third interface of the transfer station by category. For example, there are one type of picture objects and one type of text objects, and the objects of each type are displayed in the stacked form.

In some embodiments, that the electronic device determines the selected first object as a plurality of objects includes: When the selected first object includes different types of content, the electronic device determines the first object as the plurality of objects. These embodiments provide examples of cases in which the object dragged once is determined as the plurality of obj ects.

In some embodiments, that the electronic device determines the selected first object as a plurality of objects includes: When the selected first object is discontinuous content, the electronic device determines the discontinuous content as the plurality of objects; or when the selected first object is continuous content and the continuous content includes different types of content, the electronic device determines the first object as the plurality of objects. These embodiments provide examples of cases in which the object dragged once is determined as the plurality of objects.

In some embodiments, when displaying a plurality of identifiers of the plurality of objects in the stacked form, the electronic device further displays first indication information in the first floating window, where the first indication information indicates a quantity of the plurality of objects. Because a quantity of objects cannot be viewed in the stacking form, quantity indication information may be displayed, so that the user can know a quantity of objects currently stored in the transfer station.

In some embodiments, the first indication information may change with a position or a status of the transfer station. For example, when the transfer station is dragged to a trash can icon for deleting all content in the transfer station, the first indication information may change from indicating a quantity of objects in the transfer station to indicating a quantity of objects to be deleted in the transfer station. For example, when there are two objects in the transfer station, the first indication information may change from "+2" to "-2". For another example, when there is a newly added object in the transfer station, the first indication information may change from "+2" to "+3".

In some embodiments, after the displaying, by the electronic device, a third interface of the second application in the first floating window, the method further includes: detecting a ninth operation performed on a plurality of objects displayed in the stacked form in the third interface; and inserting, by the electronic device, the plurality of first objects into a fourth position in the second interface in response to the ninth operation, where the fourth position is any position in the second interface or a position at which the cursor is currently located. The ninth operation may be, for example, a dragging operation or a click operation. It can be learned that the plurality of objects displayed in the stacked form in the third interface may be dragged to a specific position for insertion, or the plurality of objects are clicked and automatically inserted into the position where the cursor is located, so that the user can insert the plurality of objects at a time.

In some embodiments, the method further includes: further displaying, by the electronic device, a floating layer in response to detecting the first operation (for example, a touch and hold operation), where all or a part of content of the first object is displayed in the floating layer; and the displaying an indicator of the first object in the first floating window in response to the second operation includes: displaying, by the electronic device, the indicator of the first object in the first floating window in response to detecting that the floating layer is dragged to the first floating window and then released. In these embodiments, the selected object is displayed in a floating layer, so that the user has clear perception of the selected object, and operation experience of the user is improved.

In some embodiments, the method further includes: switching, by the electronic device, the first floating window to a side strip in response to detecting a tenth operation performed on the first floating window (for example, dragging the first floating window to a side of a screen), where the side strip displays a part of content or a specific mark of the first floating window, and a screen area occupied by the side strip is less than a screen area occupied by the first floating window.

In some other embodiments, the tenth operation may not be an operation performed on the first floating window, or may trigger switching of the first floating window to the side strip. For example, the tenth operation may be an operation of dragging one or more objects from the transfer station, an operation of playing a video in full screen, an operation of switching an application, an operation of opening a specific application (for example, the application does not support inserting any content), or no operation performed on the screen for a long time.

In some embodiments, the method further includes: The detecting that a first object in the first interface is selected includes detecting a screen capture operation, where the screen capture operation is used to generate a picture corresponding to all objects in the first interface, and the first object is the picture. It can be learned that the screen capture operation may alternatively be considered as selecting an object in the first interface, or may trigger appearance of the transfer station. In some examples, appearance of the transfer station may be directly triggered after the screen capture operation. In some other examples, appearance of the transfer station may alternatively be triggered after the user performs an operation on the picture obtained by taking the screenshot.

In some embodiments, the method further includes: in a process of dragging the first floating window to the first position in the second interface, when the first floating window is dragged to a region into which content cannot be inserted in the second interface, presenting, by the electronic device, the first floating window in a first style or presenting, by the electronic device, an object in the first floating window in a first style; or when the first floating window is dragged to a region into which content can be inserted in the second interface, presenting, by the electronic device, the first floating window in a second style or presenting, by the electronic device, an object in the first floating window in a second style, where the second style is different from the first style. When the content can be inserted and the content cannot be inserted, the user is prompted by a style of the first floating window or different styles of the object. The style herein includes but is not limited to identification information, a color, a border, or transparency of the floating window or the object.

In some embodiments, after the displaying, by the electronic device, a third interface of the second application in the first floating window, the method further includes: detecting an operation performed on a second control in the first floating window, where the second control is used to start a history clipboard in the second application; and displaying, by the electronic device, the history clipboard in the first floating window in response to detecting the operation performed on the second control in the first floating window. The history clipboard can be started through the transfer station, to provide a new entrance to the history clipboard. A user operation is facilitated.

In some embodiments, after the displaying, by the electronic device, a third interface of the second application in the first floating window, the method further includes: displaying, by the electronic device, historical data in the first floating window in response to detecting a slide-up operation in the third interface, where the historical data includes all objects stored before the second application is exited last time.

In some embodiments, the method further includes: displaying, by the electronic device, a third control in response to detecting an operation of touching and holding the first floating window, where the third control indicates to exit the second application or close the first floating window; and in response to detecting that the first floating window is dragged to the third control, exiting, by the electronic device, the second application or no longer displaying the first floating window. It can be learned that the first floating window may not be displayed when a transfer station application is exited, or the first floating window may not be displayed but a transfer station application is not exited.

In some embodiments, before the detecting a fourth operation of dragging the first floating window to a first position in the second interface and releasing the first floating window, the electronic device further detects the operation of touching and holding the first floating window.

In some embodiments, the detecting that a first object in the first interface is selected includes detecting an operation performed on a specific position in the first interface, and selecting the first interface or all the objects in the first interface as the first object. The specific position may be, for example, a title bar. For example, a current page or all objects in a current page may be selected when the title bar is touched and held, so that the user can quickly select the first object.

In some embodiments, the first operation is an operation of touching and holding the selected first object.

In some embodiments, the second operation is an operation of dragging the first object to the first floating window, an operation of shaking the first object, an operation of swinging the first object, or a click operation performed on a fourth control, where the fourth control indicates to store the first object in the second application.

It should be noted that some or all of embodiments of the first aspect may be independently implemented without relying on the first aspect. It should be understood that for some functions that are not strongly associated, there may be other example solutions that independently implement the functions. For example, in some examples, the transfer station may provide a function of expanding a level-1 interface, but does not need to provide a function of dragging all objects to be inserted into the first position as described in the first aspect. Alternatively, the transfer station may provide a function of the history clipboard, but does not need to provide a function of dragging all objects to be inserted into the first position as described in the first aspect.

According to a second aspect, this application provides an information transfer method, including: displaying, by an electronic device, a first interface of a first application; detecting that a first object in the first interface is selected, and detecting a first operation performed on the first object; displaying, by the electronic device, a first floating window in a first state in response to detecting the first operation, where the first floating window includes an indicator of a second object (the second object is an object that has been stored before the transfer station); detecting a second operation performed on the first object; displaying an indicator of the first object in the first floating window in response to the second operation, where the indicator of the second object and the indicator of the first object are in a stacked state (that is, the first floating window is in the first state, and the first floating window occupies a small area of the screen when the first floating window is in the first state), and the indicator of the first object is located at a layer above the indicator of the second object; displaying, by the electronic device, a second interface in response to detecting a third operation, where the second interface is an interface of a third application or the second interface is a second interface of the first application; changing the first floating window from a first state to a second state in response to detecting a fourth operation, where the indicator of the first object included in the first floating window and the indicator of the second object are displayed in a tiled manner (when the first floating window is in the second state, the first floating window occupies a large area of the screen, and may present more information about the first object and the second object); and inserting the first object or the second object into the second interface in response to an operation performed by a user on the indicator of the first object or the indicator of the second object. Therefore, this embodiment provides a method for selecting a specific object (the first object or the second object) in the transfer station according to a user intention, and inserting the selected object into the second interface.

In some embodiments, the first floating window in the second state further includes indicators of a plurality of third objects displayed in a stacked form, and the method includes displaying the indicators of the plurality of third objects in the tiled form in the first floating window in response to an operation performed on the plurality of third objects. That is, when the first floating window is in the second state, more objects may be displayed, and the user may insert any object stored in the transfer station into the second interface.

According to a third aspect, this application provides an information transfer method, including: displaying, by an electronic device, a first interface of a first application and a first floating window of a second application; detecting an operation of dragging the first floating window to a first position in the first interface and releasing the first floating window, or detecting an operation of dragging all content displayed in a stacked form in the first floating window to a first position in the first interface and releasing all the content; and inserting, by the electronic device in response to detecting the operation, all or some objects included in the second application into the first position in the first interface.

In other words, after starting the second application (namely, the transfer station), the electronic device may directly drag all or some objects in the second application to the first interface of the first application at a time.

According to a fourth aspect, this application provides an information transfer method, including: displaying, by an electronic device, a first interface of a first application and a first floating window of a second application, where the first floating window includes an indicator of a first object and an indicator of a second object, and the indicator of the first object and the indicator of the second object are in a stacked state; detecting an operation on the indicator of the first object or the indicator of the second object; inserting, by the electronic device in response to the operation, all or some objects included in the second application into the first position in the first interface.

The operation is, for example, an operation of dragging the first object or the second object to the first position in the first interface and releasing the first object or the second object.

According to a fifth aspect, this application provides an information transfer method, including: displaying, by an electronic device, a first interface of a first application and a first floating window of a second application, where the first floating window includes an indicator of a first object, an indicator of a second object, an indicator of a third object, and a division indication (for example, a split line and a text prompt, or another prompting manner), the indicator of the first object, the indicator of the second object, and the indicator of the third object are displayed in a tiled manner, the indicator of the first object and the indicator of the second object are located on one side of the division indication, and the indicator of the third object is located on the other side of the division indication; detecting that a user selects the first object and the third object; and detecting an operation performed by the user on the first object and the third object (for example, an operation of dragging the first object and the third object to the first position in the first interface and releasing the first object and the third object), and inserting, by the electronic device, the first object and the third object into the first position in the first interface.

The third object is historical data of a transfer station. In some examples, the historical data of the transfer station includes a target object stored by the transfer station before the transfer station exits last time. In some examples, after a mobile phone exits the transfer station, the mobile phone clears the target object stored before the transfer station exits, and retains, in only historical data of the transfer station, a target object stored before the mobile phone exits this time.

It can be learned that, in this embodiment, both the object in the transfer station and the historical data of the transfer station may be selected, and dragged to the target interface of the target application at a time.

According to a sixth aspect, this application provides an electronic device, where the electronic device includes a processor, a memory, and a touchscreen, the memory and the touchscreen are coupled to the processor, the memory is configured to store computer program code, the computer program code includes computer instructions, and when the processor reads the computer instructions from the memory, the electronic device is enabled to perform the information transfer method provided in any embodiment of the first aspect.

In most embodiments of this application, an example in which the electronic device is a smartphone is used to draw the accompanying drawings and introduce solutions. However, it may be understood that the electronic device may alternatively be another type of electronic device, for example, a tablet, a laptop, or a desktop computer. This is not limited in this application.

According to a seventh aspect, this application provides a computer-readable storage medium, including computer instructions. When the computer instructions are run on an electronic device, the electronic device is enabled to perform the information transfer method provided in any embodiment of the first aspect.

According to an eighth aspect, this application provides a chip system, including one or more processors. When the one or more processors execute instructions, the one or more processors perform the information transfer method provided in any embodiment of the first aspect.

According to a ninth aspect, an apparatus is provided. The apparatus is included in an electronic device, and the apparatus has a function of implementing behavior of the electronic device in any method in the foregoing aspects and the possible implementations of the foregoing aspects. The function may be implemented by hardware, or may be implemented by hardware executing corresponding software. The hardware or the software includes at least one module or unit corresponding to the foregoing function, for example, a receiving module or unit, a display module or unit, and a processing module or unit.

According to a tenth aspect, a computer program product is provided, including computer instructions. When the computer instructions are run on an electronic device, the electronic device is enabled to perform the method according to any one of the foregoing aspects and the possible implementations of the foregoing aspects.

According to an eleventh aspect, a graphical user interface on an electronic device is provided, where the electronic device has a display, a camera, a memory, and one or more processors, the one or more processors are configured to execute one or more computer programs stored in the memory, and the graphical user interface includes a graphical user interface displayed when the electronic device performs the method according to any one of the foregoing aspects and the possible implementations of the foregoing aspects.

### BRIEF DESCRIPTION OF DRAWINGS

FIG. 1 is a diagram 1 of a structure of an electronic device according to an example of this application;
FIG. 2 is a diagram 2 of a structure of an electronic device according to an example of this application;
FIG. 3(1) to FIG. 19(3) are diagrams of some user interfaces of an electronic device according to examples of this application;
FIG. 20A(1) to FIG. 20C(3) are diagrams of some other user interfaces of an electronic device according to examples of this application;
FIG. 21(1) to FIG. 23(3) are diagrams of some other user interfaces of an electronic device according to examples of this application;
FIG. 24A(1) to FIG. 24B are diagrams of some other user interfaces of an electronic device according to examples of this application;
FIG. 25 to FIG. 31 are diagrams of some other user interfaces of an electronic device according to examples of this application;
FIG. 32 to FIG. 35 are flowcharts of some information transfer methods according to examples of this application; and
FIG. 36 is a diagram of a chip system according to an example of this application.

### DESCRIPTION OF EMBODIMENTS

In descriptions of examples of this application, "/" means "or" unless otherwise specified. For example, A/B may represent A or B. In this specification, "and/or" describes only an association relationship between associated objects and represents that three relationships may exist. For example, A and/or B may represent the following three cases. Only A exists, both A and B exist, and only B exists.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of the examples of this application, unless otherwise stated, "a plurality of" means two or more than two.

In the examples of this application, the word "example" or "for example" is used to represent giving an example, an illustration, or a description. Any example or design scheme described as an "example" or "for example" in the examples of this application should not be explained as being more preferred or having more advantages than another example or design scheme. To be precise, use of the word like "example" or "for example" is intended to present a relative concept in a specific manner.

For example, the electronic device in the example of this application may be, for example, a mobile phone, a tablet, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, a vehicle-mounted device, a smart screen, an intelligent automobile, a smart speaker, or a robot. A specific form of the electronic device is not specially limited in this application.

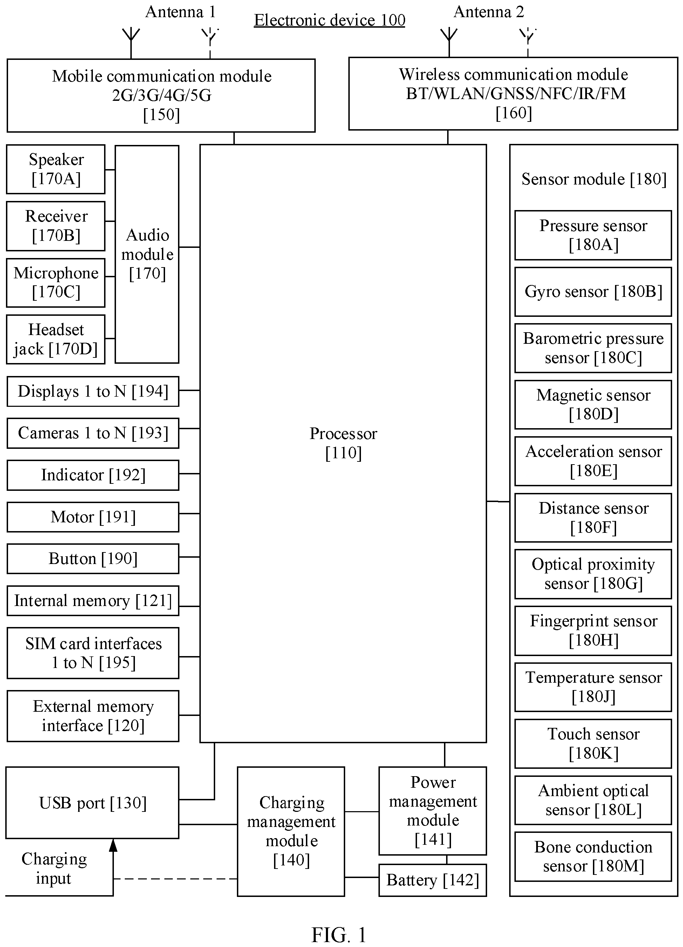

FIG. 1 shows an example of a diagram of a structure of an electronic device 100.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

It may be understood that the structure shown in this example of the present invention does not constitute a specific limitation on the electronic device 100. In some other examples of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that have/has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some examples, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. It may be understood that an interface connection relationship between the modules shown in this example of the present invention is merely used as an example for description, and does not constitute a limitation on the structure of the electronic device 100. In some other examples of this application, the electronic device 100 may alternatively use an interface connection manner different from that in the foregoing example, or a combination of a plurality of interface connection manners.

The charging management module 140 is configured to receive a charging input from the charger.

The power management module 141 is configured to be connected to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local region network. In some other examples, the antenna may be used in combination with a tuning switch.

The mobile communication module 150 can provide a solution, applied to the electronic device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing, for example, filtering or amplification, on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some examples, at least some functional modules in the mobile communication module 150 may be disposed in the processor 110. In some examples, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor.

The application processor outputs a sound signal by an audio device (which is not limited to the speaker 170A, the receiver 170B, or the like), or displays an image or a video by the display 194. In some examples, the modem processor may be an independent component. In some other examples, the modem processor may be independent of the processor 110, and is disposed in a same device as the mobile communication module 150 or another functional module.

The wireless communication module 160 may provide a solution, applied to the electronic device 100, to wireless communications including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some examples, the electronic device 100 may include one or N displays 194, where N is a positive integer greater than 1.

The electronic device 100 may implement a photographing function through the ISP, the camera 193, the video codec, the GPU, the display 194, the application processor, and the like.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage region and a data storage region. The program storage region may store an operating system, an application required by at least one function (for example, a voice playing function or an image playing function), and the like. The data storage region may store data (for example, audio data and a phone book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to perform various function applications of the electronic device 100 and data processing.

The electronic device 100 may implement an audio function, for example, music playing and recording, by using the audio module 170, the speaker 170A, the receiver 170B, the microphone 170C, the headset jack 170D, the application processor, and the like.

A software system of the electronic device 100 may use a layered architecture, an event-driven architecture, a microkernel architecture, a micro service architecture, or a cloud architecture. In the example of the present invention, an Android system of a layered architecture is used as an example to illustrate a software structure of the electronic device 100.

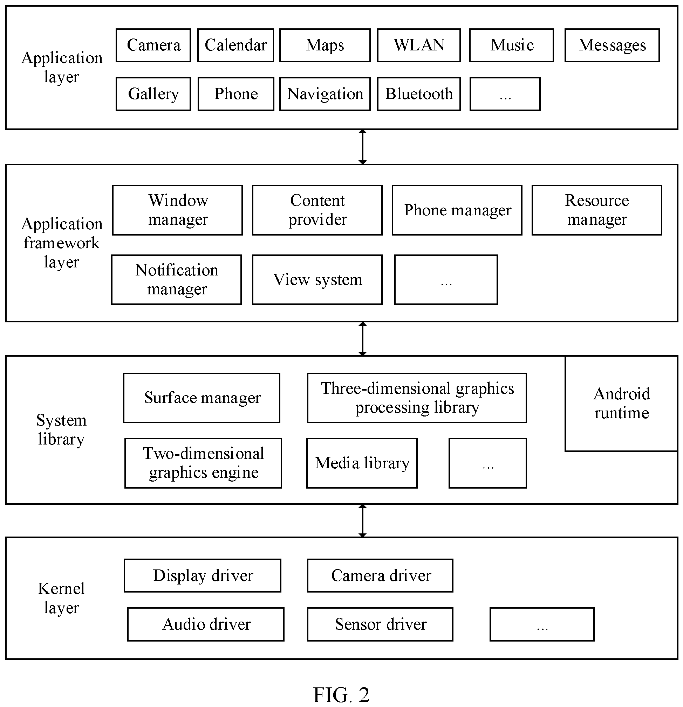

FIG. 2 is a block diagram of a software structure of an electronic device 100 according to an example of the present invention.

In a layered architecture, software is divided into several layers, and each layer has a clear role and task. The layers communicate with each other through a software interface. In some examples, the Android system is divided into four layers: an application layer, an application framework layer, an Android runtime (Android Runtime) and system library, and a kernel layer from top to bottom.

The application layer may include a series of application packages.

As shown in FIG. 2, an application package may include applications such as Camera, Gallery, Calendar, Calls, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert sound is played, the electronic device vibrates, or an indicator blink.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

All technical solutions in the following examples may be implemented on an electronic device 100 that has the foregoing hardware architecture and software architecture.

An example of this application provides an information transfer method, so that information (also referred to as a target object) in an application 1 (also referred to as a source application) on the electronic device 100 can be stored in a transfer station, and then the transfer station inserts the target object into a corresponding position in an application 2 (also referred to as a target application), that is, shares the target object with the application 2. In some examples, there are one or more applications 1. There may be one or more target objects. According to the technical solution provided in this example of this application, a plurality of target objects can be shared with the application 2 at a time, that is, inserted into a corresponding position of the application 2. For example, when there are a plurality of applications 1 (there are also a plurality of target objects), or when there is one application 1 but there are a plurality of target objects, a user may share the plurality of target objects with the application 2 at a time.

In some other examples, there are one or more applications 2. In other words, according to the technical solution provided in this example of this application, one or more target objects may be shared with a plurality of applications at a time.

In still some examples, the application 2 and the application 1 may be a same application. That is, after a target object of a specific application is stored in the transfer station, the target object may be further inserted into another position of the application by using the transfer station, so as to implement a function of moving the target object.

In some examples, the application 1 and the application 2 may be located on different devices, and there is a communication connection between the devices. That is, the target object may be sent to one or more other devices through the transfer station. It should be noted that a type of the communication connection between the devices is not limited in this example. The communication connection may be a wired connection or a wireless connection, for example, the communication connection provided by the mobile communication module 150 or the communication connection provided by the wireless communication module 160 in FIG. 1, or may be another type of communication connection. In some examples, when the target object is sent to another device, the target object may be sent to a specified application, for example, the application 2. Alternatively, an application to which the target object is sent may not be limited. In this case, after the another device receives the target object, an operating system of this device may provide a default storage position to store the target object, and the stored target object may be presented by a transfer station, a clipboard, or another manner of the another device. Subsequently, various operations such as sending, copying, and deletion may be performed on the target object in the device.

It should be noted that the "transfer station" is merely a name provided in this application for ease of solution description, and cannot be used as a limitation on a function of the solution in some examples.

In this specification, an example in which the electronic device 100 is a mobile phone is used, and the technical solutions provided in the examples of this application are described in detail with reference to the accompanying drawings. It may be understood that, when the electronic device is a mobile phone, some of the following user operations are usually implemented by the user by touching a screen with a finger. When the electronic device is another type of device, for example, a tablet, a laptop, a desktop computer, or a large smart screen, some of the following user operations may alternatively be implemented by the user by using a stylus, a mouse, a button, a remote control, a voice, or the like.

### 1. A target object of the application 1 is selected, and the mobile phone is indicated to store the selected target object in the transfer station

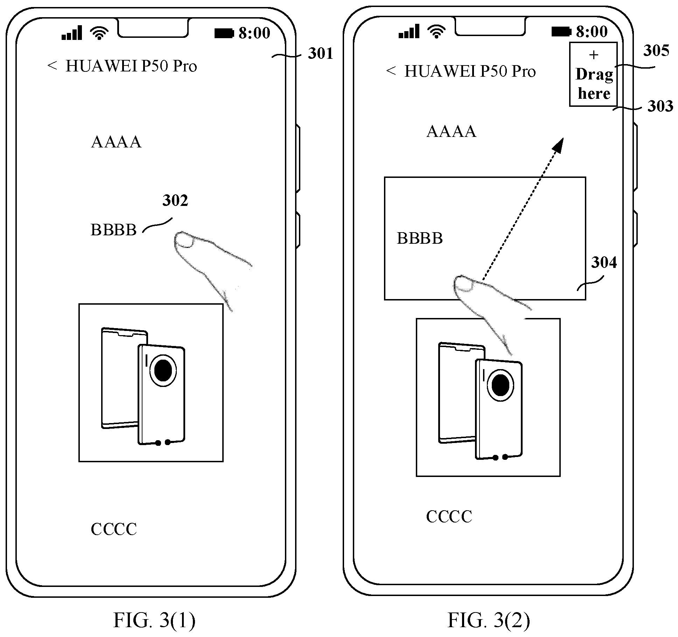

In some examples, as shown in FIG. 3(1), the mobile phone displays an interface 301. The interface 301 is, for example, a web page of a browser application (that is, the application 1), a reading page of a document in a document application (that is, the application 1), or a memo file in a memo application (that is, the application 1). When the user wants to share information (referred to as a target object below) in the interface 301 with another application or insert information into another position of the application, the user may first select the target object. The target object may be entire content in the interface 301 or a part of content in the interface 301, where the part of content in the interface 301 is, for example, any item or any combination of the following items: a text in the interface 301, a picture, a list in the interface, a grid in the interface, and an interface capability (feature ability, FA) document (for example, an FA widget).

Herein, an example in which the user selects the text 302 in the interface 301 is used for description. As shown in FIG. 3(1), the user may perform an operation O₁ on the selected text 302, and the operation O₁ is used to trigger the mobile phone to enable a function of temporarily storing the target object. The operation O₁ is, for example, any one of a touch-and-hold then drag (or referred to as drag-and-drop or the like) operation, an operation of touch-and-hold and then quickly sliding in a preset direction, a shaking operation, and a two-finger sliding operation. In some other examples, the operation O₁ may alternatively be inputting a specific voice command or the like. A specific form of the operation O₁ is not limited in this example of this application.

The following describes a process in which the user indicates to store the target object in the transfer station for different operations O₁. (1) Touch and hold the target object, and then drag the target object to a floating window of the transfer station.

In some examples, in response to detecting that duration in which the user touches and holds the text 302 reaches preset duration T₁ (for example, 3 seconds), the mobile phone displays a floating layer (also referred to as a drag floating layer, drag shadow layer) 304 shown in FIG. 3(2). The floating layer 304 displays entire content or a part of content of the text 302 selected by the user. Optionally, the floating layer 304 may further display one or more pieces of indication information, indicating a quantity or a type of currently selected target objects (for example, a quantity of texts or pictures, or a type of a text or a picture), or indicating an application that can receive the target object, an application recommended by the system, or the like. In some examples, the mobile phone may display information indicating the transfer station after displaying the floating layer 304 or when displaying the floating layer 304 (of course, it may also be before the floating layer 304 is displayed).

An implementation form of the information indicating the transfer station is not limited in this application. For example, the information indicating the transfer station may be graphic information, text information, or a combination of graphic information and text information. The floating window 305 is used as an example in the following example. The floating window 305 indicates a position of the transfer station. For example, a text prompt like "Drag here" may be displayed in the floating window 305. Optionally, a plus sign "+" or another type of symbol prompt may be displayed. The text prompt and the symbol prompt can be both present, or only one of the text prompt and the symbol prompt is present. In some examples, the mobile phone may display the floating window 305 at a preset specific position, for example, display the floating window 305 at an upper right/left corner or at a left/right border of the screen of the mobile phone. In some other examples, the mobile phone may alternatively adaptively select, based on a current display interface of the mobile phone, to display the floating window 305 in a blank position, to avoid blocking content displayed in the current interface. In some examples, the position of the floating window 305 may be fixed. In some other examples, the floating window 305 may be dragged to another position. The another position may be any position in a current interface, or may be one or more positions allowed by the system by default.

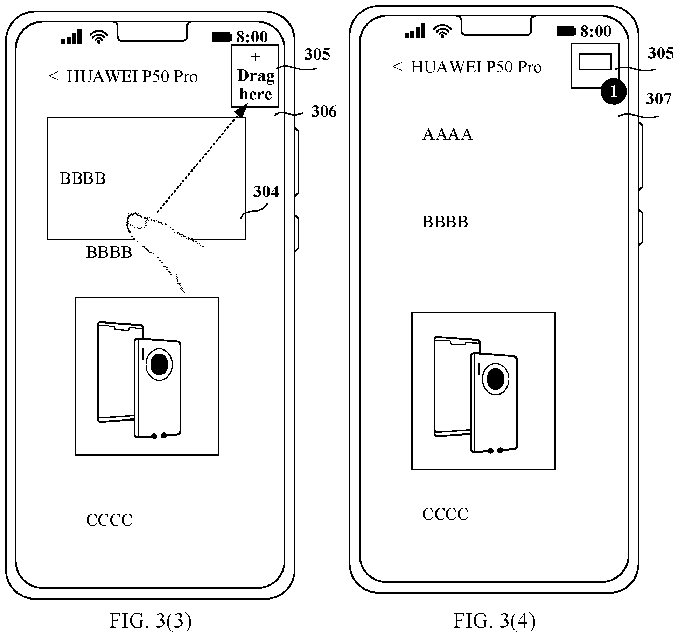

In some examples, after the duration in which the user touches and holds the text 302 reaches the preset duration T₁, the finger of the user does not leave the screen of the mobile phone. In the interface 306 shown in FIG. 3(3), the floating layer 304 is located under the finger of the user, and the floating layer 304 may move along with movement of the finger of the user on the screen. Further, in some examples, in response to detecting that the user drags the floating layer 304 closer to the floating window 305, when a distance between the floating layer 304 and the floating window 305 is less than or equal to a threshold D₁, the mobile phone temporarily stores the content (that is, the text 302) of the floating layer 304 in the transfer station. In some other examples, in response to detecting that the user drags the floating layer 304 and releases the floating layer 304, when a release position is located in a region in which the floating window 305 is located (or a distance between the release position and the floating layer 305 is less than or equal to a threshold 1), the mobile phone temporarily stores the content (that is, the text 302) of the floating layer 304 in the transfer station. In some other examples, in response to detecting the floating layer 304, after the duration in which the finger of the user hovers over the floating layer 304 reaches preset duration T₂ (for example, 2 seconds), the mobile phone temporarily stores the content (namely, the text 302) of the floating layer 304 in the transfer station.

In some examples, when, after, or before the mobile phone temporarily stores the content of the floating layer 304 in the transfer station, the mobile phone may further display an interface 307 shown in FIG. 3(4). A mark (for example, a superscript or a subscript) is displayed in the floating window 305 in the interface 307, where the mark is used to mark the quantity of target objects stored in the transfer station this time. For example, a subscript number "1" is displayed in the interface 307, and is used to mark that a quantity of target objects stored in the transfer station this time is 1. In some other examples, the mark may be used to mark a total quantity of target objects stored in the transfer station. Optionally, the floating window 305 may further display a thumbnail or an icon of the text 302.

In some other examples, after the duration in which the user touches and holds the text 302 reaches the preset duration T₁, and after the mobile phone displays the floating layer 304, the finger of the user may alternatively leave the screen of the mobile phone. Further, in some examples, the user presses the floating layer 304 again, and drags the floating layer 304 closer to the floating window 305. When detecting that the distance between the floating layer 304 and the floating window 305 is less than or equal to the threshold D₁, the mobile phone temporarily stores content (that is, the text 302) of the floating layer 304 in the transfer station. In some other examples, when detecting a dragging and releasing operation, and the release position is located in the region in which the floating window 305 is located (or the distance between the release position and the floating window 305 is less than or equal to the threshold D₁), the mobile phone temporarily stores the content (that is, the text 302) of the floating window 304 in the transfer station. In some other examples, in response to detecting that the user drags the floating layer 304, after duration in which the finger of the user hovers reaches the preset duration T₂ (for example, 2 seconds), the mobile phone temporarily stores the content (that is, the text 302) of the floating layer 304 in the transfer station.

In summary, a specific form of the operation O₁ is not limited in this example of this application. The foregoing example is described by using an example in which the user stores one target object at a time. In some other examples, the user may alternatively choose to store a plurality of target objects at a time.

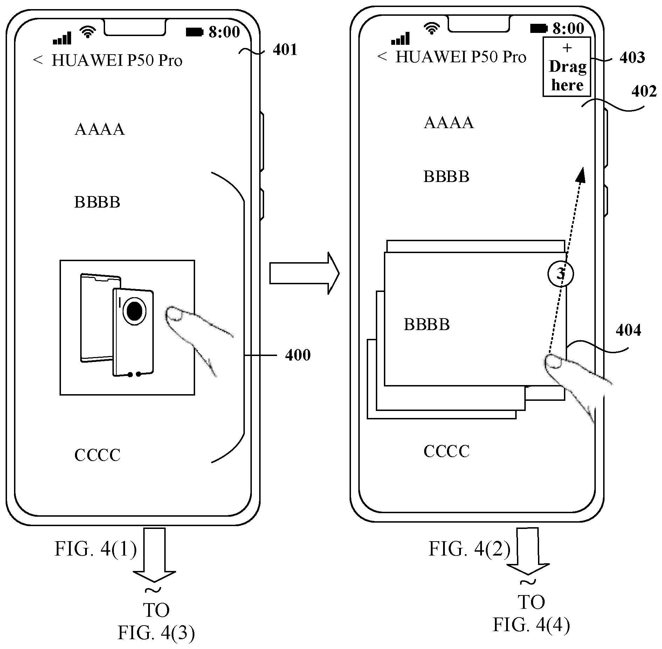

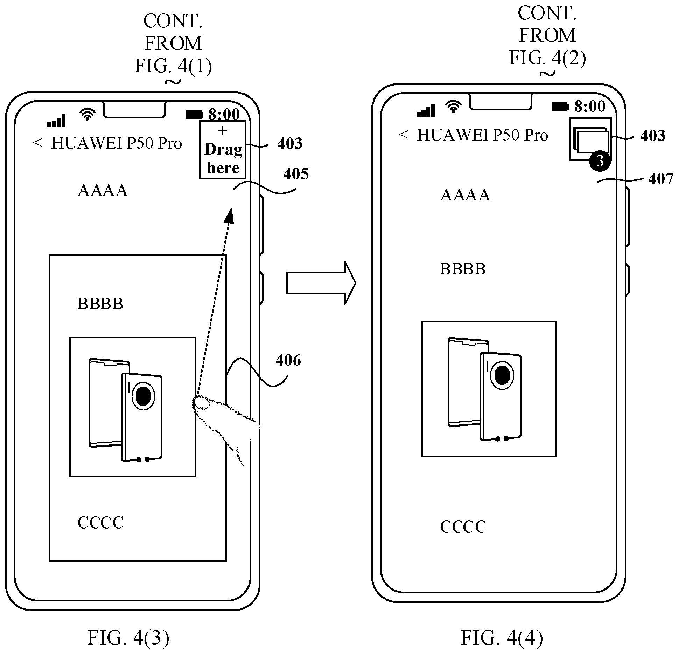

In some examples, as shown in FIG. 4(1), the user may select a plurality of target objects, for example, including a text and a picture. In response to detecting that the duration in which the user touches and holds the selected target objects 400 reaches the preset duration T₁ (for example, 1.5 seconds), the mobile phone displays an interface 402 shown in FIG. 4(2), or displays an interface 405 shown in FIG. 4(3).

In some examples, when selected pieces of content are not continuous (in other words, there is unselected content between the selected pieces of content), the discontinuous pieces of content may be determined as different target objects. In some other examples, when the selected pieces of content are continuous (in other words, there is no unselected content between the selected pieces of content), and the selected pieces of content include different types of content (such as a picture and a text), the mobile phone may divide the selected pieces of content into a plurality of target objects by using the picture in the selected pieces of content as a dividing line. Certainly, in some other examples, any object selected by the user at a time may be determined as one target object regardless of several types of content included in the object.

In some examples, the floating layer 404 is displayed in the interface 402 shown in FIG. 4(2), and is used to prompt the user that an operation may be performed on the selected target objects. Different target objects in the floating layer 404 are stacked together. Specifically, in some examples, this "stacking" effect may be implemented by using one floating layer 404, that is, there is only one floating layer 404, but currently displayed content indicates the foregoing selected text or picture, and some selected pieces of content are not displayed. The "stacking" effect may alternatively be implemented by using a plurality of floating layers 404. FIG. 4(1) is used as an example. A total of three objects: two selected text segments and one picture, are respectively displayed by using three floating windows, and the three floating windows present the stacking effect. Optionally, indication information may be displayed on the floating window located at the top layer to indicate the quantity of floating windows. Optionally, the floating layer 404 may further include a quantity mark of target objects (for example, a mark "W" in FIG. 4(2)). In some examples, the target object 400 in the interface 402 is displayed in a gray background color. In some other examples, the target object 400 may be displayed in a highlighted, transparent, or a like manner. A floating window 403 may be further displayed in the interface 402, and is used to prompt a position of the transfer station. In some examples, in response to detecting that the user drags the floating layer 404 closer to the floating window 403, when a distance between the floating layer 404 and the floating window 403 is equal to or less than the threshold 1, the mobile phone stores the plurality of selected target objects in the transfer station. In an interface 407 shown in FIG. 4(4), optionally, the floating window 403 displays a quantity mark (for example, a number "3") of the target objects. Optionally, indicators of a plurality of target objects may be further displayed in the floating window 403. For example, the indicator may be a text indicator (for example, including all or some texts in the target object), or may be a picture indicator, for example, a thumbnail of the target object, or an icon applied to a source of the target object. Optionally, in the floating window 403, an effect of stacking a plurality of objects may be used to notify the user that there are a plurality of objects in the current transfer station.

It may be understood that, for an implementation of another example, reference may be made to related content in the foregoing example of storing one target object at a time. Details are not described again in the following. In some examples, in the interface 405 shown in FIG. 4(3), a floating layer 406 is displayed, and is used to prompt the user that an operation may be performed on the selected target objects. The different target objects are tiled in the floating layer 406. The floating window 403 is further displayed in the interface 405, and is used to prompt the position of the transfer station. For other implementations, refer to related content in the foregoing examples. Details are not described again in the following.

It should be noted that in the examples shown in FIG. 4(1) to FIG. 4(4), forms of the suspended layer 406 or the suspended layer 404 are different, but a plurality of objects are finally presented in the transfer station, as shown in FIG. 4(4). In some other examples, although the content in the floating layer 406 includes both the picture and the text, the content stored in the transfer station may be presented as one object. The floating layer 404 may be a plurality of stacked floating windows, or a same floating window including a plurality of objects, but may be presented as one object in the transfer station. In other words, consistency of whether the floating layer 404 (or the floating layer 406) is presented as one object or a plurality of objects and whether the floating layer 404 (or the floating layer 406) is considered as one object or a plurality of objects to be finally stored in the transfer station is not limited in this application.

In some examples, after the user performs the operation O₁ once to store the selected target object in the transfer station, the user may further continue to select the target object in the application 1 or another application, and continue to perform the same operation O₁ or another operation different from the operation O₁, to store the newly selected target object in the transfer station again.

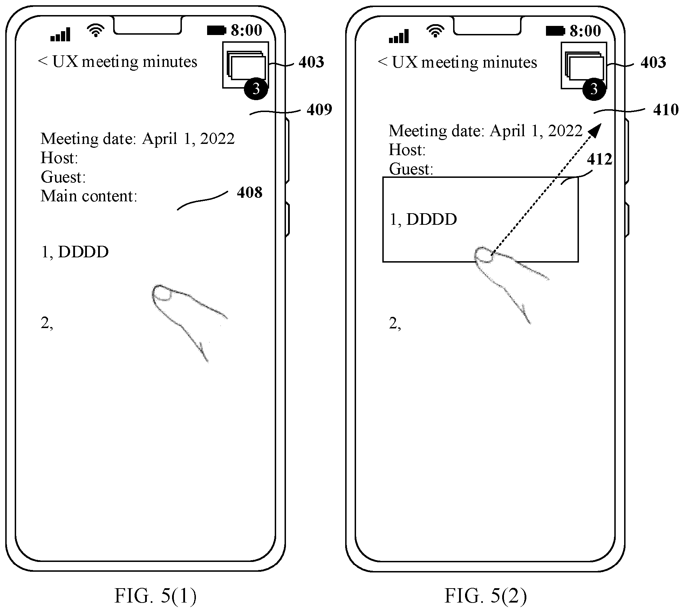

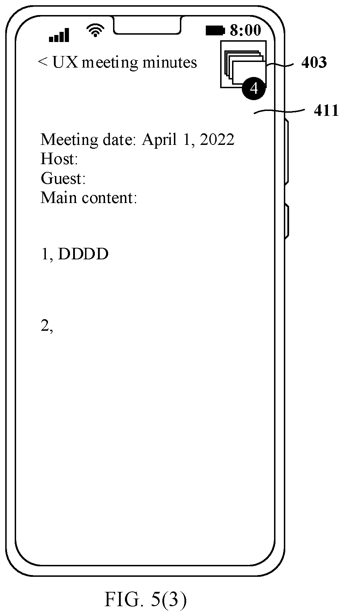

In some examples, the user may exit the application 1 or switch the application 1 to run in the background, and start another application, for example, start a memo application. The mobile phone displays an interface 409 shown in FIG. 5(1). In some examples, because the user does not exit the transfer station, the floating window 403 is displayed in the interface 409, and a number of stored target objects (for example, a number "3" is displayed) is displayed in the floating window 403. In some other examples, the floating window 403 is not initially displayed in the interface 409. Instead, the floating window 403 is displayed after an operation similar to the foregoing example is received, for example, a selected text 408 is touched and held. Alternatively, the memo application may invoke the floating window 403 in another manner. Optionally, the floating window 403 may further display an indicator of the stored target object. In some examples, when detecting that duration in which the user touches and holds the target object 408 reaches preset duration T₁, the mobile phone displays an interface 410 shown in FIG. 5(2). A floating layer 412 is displayed in the interface 410. Further, when detecting that the user drags the floating layer 412 closer to the floating window 403, and a distance between the floating layer 412 and the floating window 403 is equal to or less than the threshold D₁, the mobile phone stores the target object in the transfer station, and displays an interface 411 shown in FIG. 5(3). An indicator of the newly stored target object is displayed in the floating window 403 of the interface 411. In an example, the indicator of the newly stored target object and the indicator of the original existing target object at the transfer station may be displayed in the stacked form. For example, the indicator of the newly stored target object is located at a layer above the indicator of the original existing target object. Certainly, the indicator of the newly stored target object and the indicator of the original existing target object of the transfer station may also be displayed in a tiled form. Optionally, the quantity mark of the target objects in the floating window 403 is updated (updated from the original number "3" to a number "4"). For other implementations, refer to the foregoing examples. Details are not described again in the following.

It should be noted that this application provides a plurality of operations related to the transfer station, for example, a plurality of O₁ provided in the foregoing example and a plurality of operations mentioned in the following example. For different applications, a same operation may be used to implement functions related to the transfer station, or different operations may be used to implement functions related to the transfer station.

(2) Touch and hold the target object, and then quickly slide the target object in a preset direction (for example, in a direction of the target object facing the floating window of the transfer station).

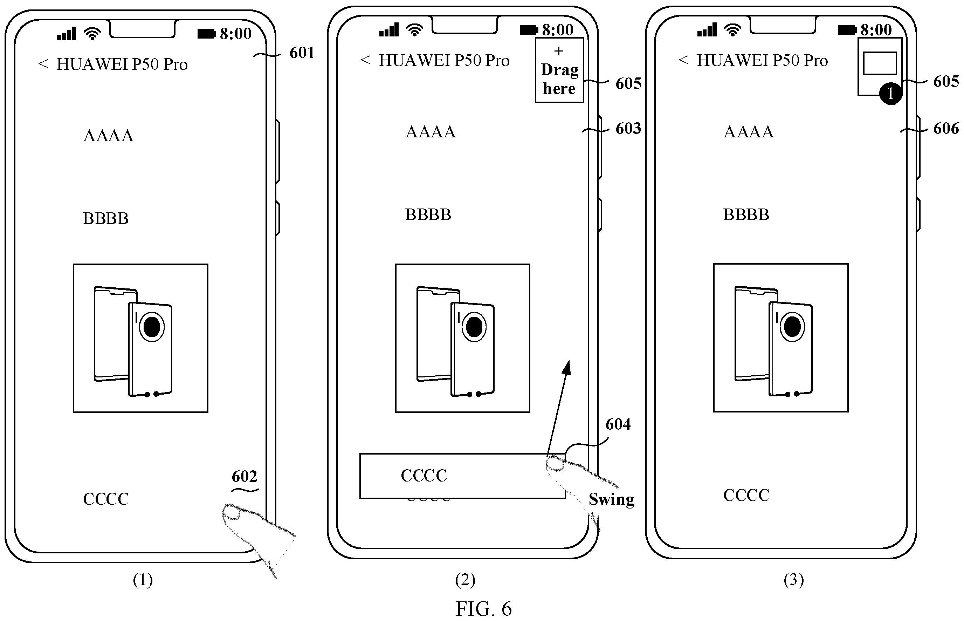

In some examples, as shown in (1) in FIG. 6, the mobile phone displays an interface 601, and a target object 602 is selected in the interface 601. In response to detecting that duration in which the user touches and holds the target object 602 is equal to or greater than preset duration T₁, the mobile phone displays an interface 603 shown in (2) in FIG. 6. A floating layer 604 is displayed in the interface 603, and is used to present content of the target object 602. In this case, the finger of the user does not leave a screen of the mobile phone. The floating layer 604 may be located under the finger of the user, and the floating layer 604 may move with movement of the finger. A floating window 605 of the transfer station is also displayed in the interface 603. Further, in response to detecting an operation that the user presses the floating layer 604 and quickly slides in a direction of the floating window 603 of the transfer station (that is, an operation of pressing the floating layer 604 and swinging in the direction of the floating window 603 of the transfer station), the mobile phone stores content of the target object 602 in the transfer station. Optionally, the mobile phone displays an interface 606 shown in (3) in FIG. 6. Optionally, a subscript of the floating window 605 in the interface 606 changes, indicating that a new target object is stored in the transfer station.

It can be learned that, in some scenarios, even if a distance between the selected target object and the floating window of the transfer station is long, the mobile phone may be quickly indicated to store the target object in the transfer station through an operation of touching and holding the target object and quickly sliding in a preset direction, so that a long drag path can be avoided. This improves efficiency of interaction between the user and the mobile phone.

It may be understood that, in the manner provided in this example, the dragging storage provided in the foregoing example is replaced with the "swinging" storage. For other implementations, for example, whether the finger is allowed to leave the screen, a floating window display occasion/method, and an implementation of storing a plurality of target objects at a time, refer to the foregoing examples. Details are not described again in the following.

It should be noted that this application provides a plurality of operations related to the transfer station, for example, a plurality of O₁ provided in the foregoing example and a plurality of operations mentioned in the following example. For different applications, a same operation or a plurality of operations may be used to implement functions related to the transfer station, or different operations may be used to implement functions related to the transfer station. For example, the browser application supports dragging the target object to be stored in the transfer station, and the memo application supports "swinging" the target object to the transfer station. Alternatively, both operations of the two applications are supported, and the user may select any one of the operations to store the target object in the transfer station.

(3) Touch and hold the target object, and then shake the target object.

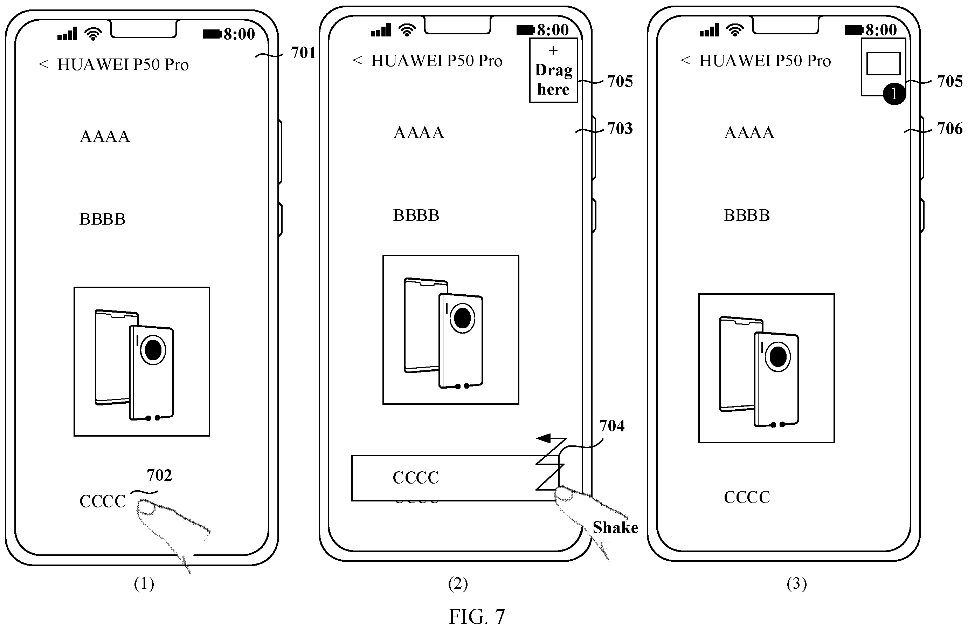

In some examples, as shown in (1) in FIG. 7, the mobile phone displays an interface 701, and a target object 702 is selected in the interface 701. In response to detecting that duration in which the user touches and holds the target object 702 is equal to or greater than the preset duration T₁, the mobile phone displays an interface 703 shown in (2) in FIG. 7. A floating layer 704 is displayed in the interface 703 and is used to present content of the target object 702. In this case, the finger of the user does not leave the screen of the mobile phone, the floating layer 704 may be located under the finger of the user, and the floating layer 704 may move along with movement of the finger. A floating window 705 of the transfer station is further displayed in the interface 703. Further, in response to detecting that the user presses the floating layer 704 and shakes the floating layer 704 left and right, the mobile phone stores the content of the target object 702 in the transfer station. Optionally, the mobile phone displays an interface 706 shown in (3) in FIG. 7. Optionally, a subscript of the floating window 705 in the interface 706 changes, indicating that a new target object is stored in the transfer station.

It can be learned that, in some scenarios, even if a distance between the selected target object and the floating window of the transfer station is long, the mobile phone may be quickly indicated to store the target object in the transfer station through an operation of touching and holding the target object and shaking, so that a long drag path can be avoided. This improves efficiency of interaction between the user and the mobile phone.

It may be understood that, in the manner provided in this example, the dragging storage or "swinging" storage provided in the foregoing example is replaced with the "shaking" storage. For implementations of other steps, refer to the foregoing example. Details are not described again in the following.

(4) The operation O₁ is two-finger (or three-finger) sliding, and two fingers (or three fingers) slide in a direction of the floating window of the transfer station.

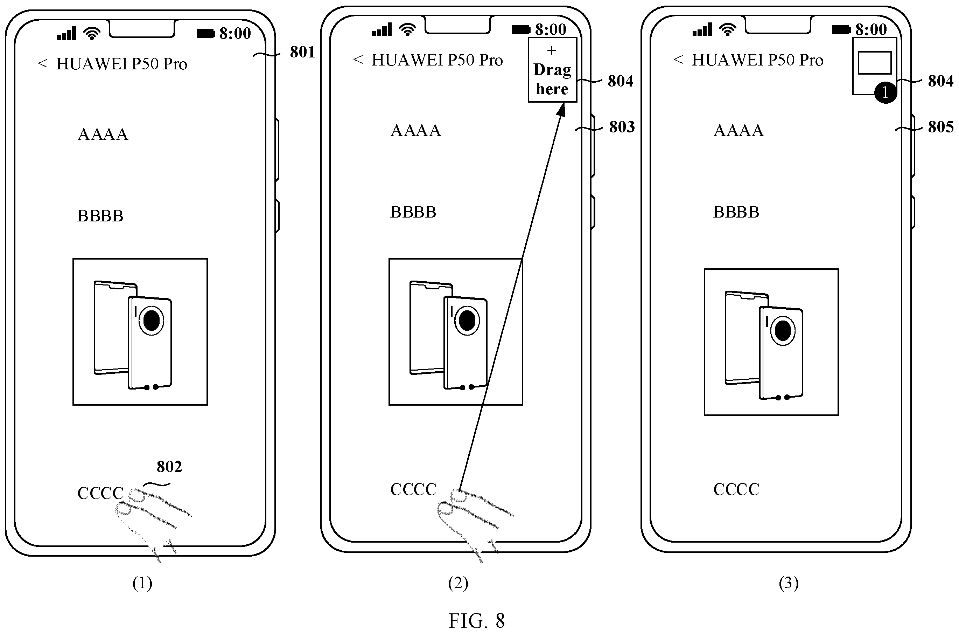

In some examples, as shown in (1) in FIG. 8, the mobile phone displays an interface 801, and a target object 802 is selected in the interface 801. In response to detecting that duration in which the user touches and holds the target object 802 by using two fingers is equal to or greater than preset duration T₁ (or may be another preset duration), the mobile phone displays the interface 803 shown in (2) in FIG. 8. A floating window 804 of the transfer station is displayed in the interface 803. In this case, the finger of the user does not leave a screen of the mobile phone. Further, in response to detecting that an operation of moving in a direction of the floating window 804 of the transfer station by using the two fingers of the user, the mobile phone stores the content of the target object 802 in the transfer station. Optionally, the mobile phone displays an interface 805 shown in (3) in FIG. 8. A subscript of the floating window 804 in the interface 805 changes, indicating that a new target object is stored in the transfer station.

It can be learned that the user may alternatively directly store the target object in the transfer station in a preset gesture manner (dragging the target object with two fingers or three fingers) without displaying the floating window of the target object. Optionally, the floating window that includes the target object in this example may alternatively be displayed. For a display manner, refer to the foregoing example. Alternatively, another display manner may be used. This is not limited in this application.

(5) Touch and hold the target object, and then drag the target object to a shortcut of the transfer station.

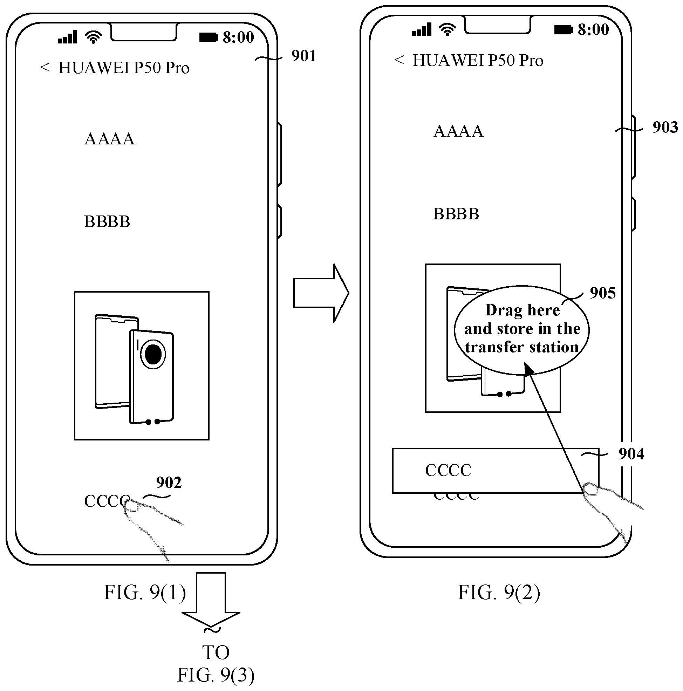

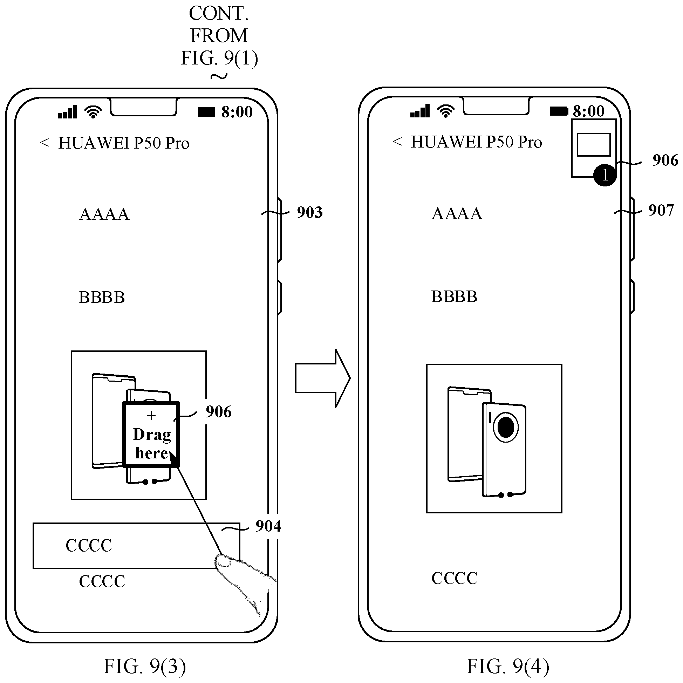

In some examples, as shown in FIG. 9(1), the mobile phone displays an interface 901, and a target object 902 is selected in the interface 901. In response to detecting that duration in which the user touches and holds the target object 902 is equal to or greater than the preset duration T₁, the mobile phone displays an interface 903 shown in FIG. 9(2). A floating layer 904 is displayed in the interface 903, and is used to present content of the target object 902. The floating layer 904 may move with movement of a finger. A shortcut 905 of the transfer station is also displayed near the floating layer 904 of the target object. Optionally, the shortcut 905 may further include indication information, indicating the user to drag the selected target object here. For example, as shown in FIG. 9(2), the shortcut 905 is a circular object, and indication information "Drag here to store in the transfer station" is displayed inside the circular object. Further, in some examples, in response to detecting that the user presses the floating layer 904 and drags the floating layer 904 to the shortcut 905, the mobile phone stores the content of the target object 902 in the transfer station. Optionally, the mobile phone displays an interface 907 shown in FIG. 9(4). Optionally, a subscript of the floating window 905 of the transfer station in the interface 907 changes, indicating that a new target object is stored in the transfer station.

In some other examples, the shortcut of the transfer station may alternatively be implemented as a dot, a box, a text segment, a three-dimensional graphic (for example, a black hole-like graphic that expresses a crossing effect), or another form. This is not described one by one in this application.

It can be learned that, in some scenarios, even if a distance between the selected target object and the floating window of the transfer station is long, the shortcut of the transfer station may be displayed near the target object, to shorten a drag path and improve efficiency of interaction between the user and the mobile phone.

(6) Touch and hold the target object, move the floating window of the transfer station near the target object, and then drag the target object to the floating window of the transfer station.

In some examples, as shown in FIG. 9(1), the mobile phone displays an interface 901, and a target object 902 is selected in the interface 901. In response to detecting that duration in which the user touches and holds the target object 902 is equal to or greater than the preset duration T₁, the mobile phone displays an interface 903 shown in FIG. 9(3). A floating layer 904 is displayed in the interface 903, and is used to present content of the target object 902. The floating layer 904 may move with movement of a finger. In some examples, as shown in the interface 903, the mobile phone directly displays a floating window 906 of the transfer station near the floating layer 904. In some other examples, the mobile phone first displays the floating window 906 of the transfer station in another position (for example, an upper right of the screen), and then the floating window 906 of the transfer station is moved near the floating layer 904. Further, in some examples, in response to detecting that the user presses the floating layer 904 and drags the floating layer 904 to the floating window 906 of the transfer station (or when a distance between the floating layer 904 and the floating window 906 is equal to or less than a specific threshold), the mobile phone stores the content of the target object 902 in the transfer station. Optionally, the mobile phone may display an interface 907 shown in FIG. 9(4).

It can be learned that, in some scenarios, even if a distance between the selected target object and the floating window of the transfer station is long, the floating window of the transfer station may be moved near the target object, to shorten a drag path and improve efficiency of interaction between the user and the mobile phone.

(7) Touch and hold the target object, pop up a menu bar, and then select an option "Store in the transfer station" in the menu bar.

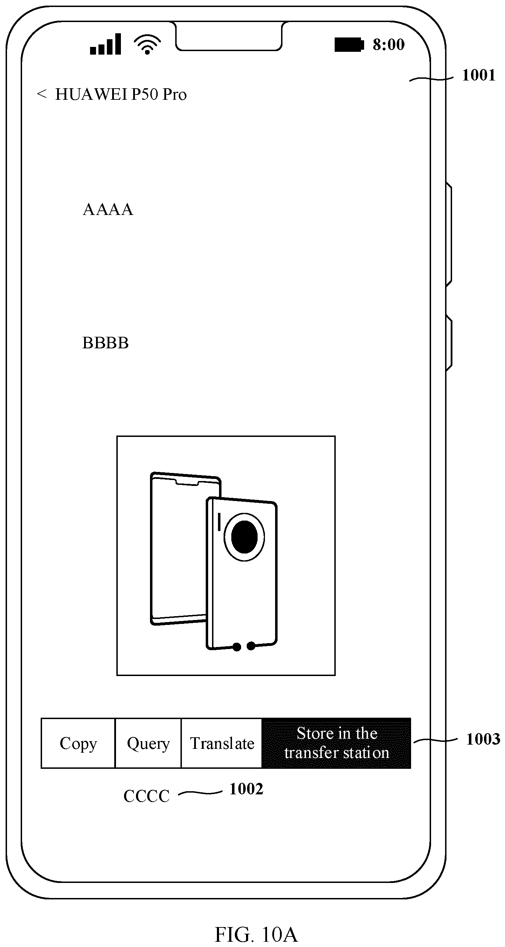

In some examples, in an interface 1001 shown in FIG. 10A, after selecting the target object 1002, the user may open a menu bar 1003 by performing an operation, for example, a touch and hold (or double-tap or hard press) operation. The menu bar 1003 may include one or more menus. In some examples, the menu bar 1003 is displayed near the target object 1002 (as shown in FIG. 10A). In some other examples, the menu bar 1003 may alternatively be displayed in another position. For example, when both hands operate the same screen, the target object is selected by a left hand, and the menu bar may be displayed near a right hand instead of near the selected target object. Further, in some examples, the selected target object 1002 is stored in the transfer station after an operation of selecting "Store in the transfer station" in the menu bar 1003.

In some other examples, the menu bar 1003 may be a menu that supports a plurality of selections. In other words, the user may select a plurality of operations at the same time. For example, the user may select two operations: "Translate" and "Store in the transfer station" at the same time. Thereafter, the selected target object 1002 may be stored in the transfer station, and the selected target object 1002 is translated into another language. Optionally, the translated target object 1022 may also be stored in the transfer station.

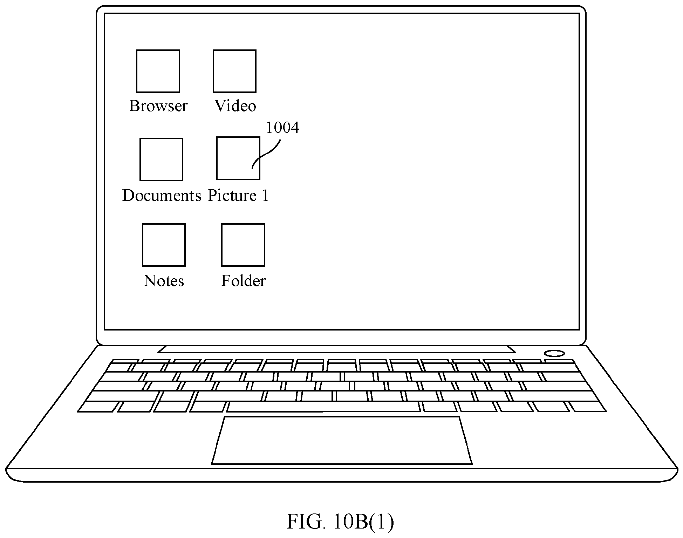

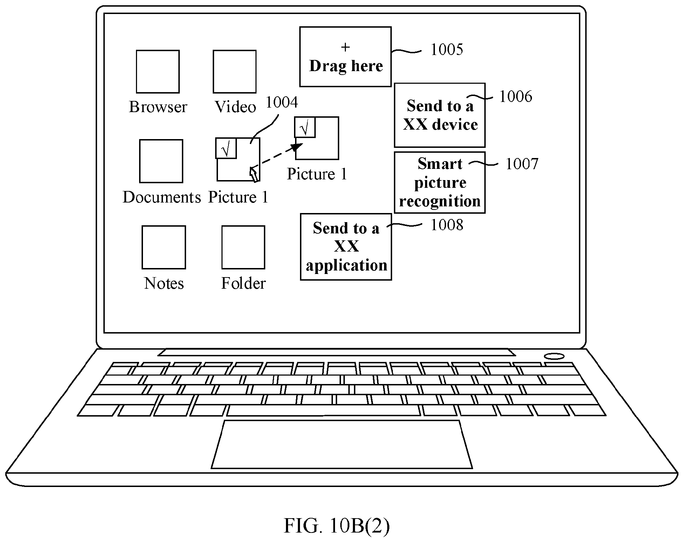

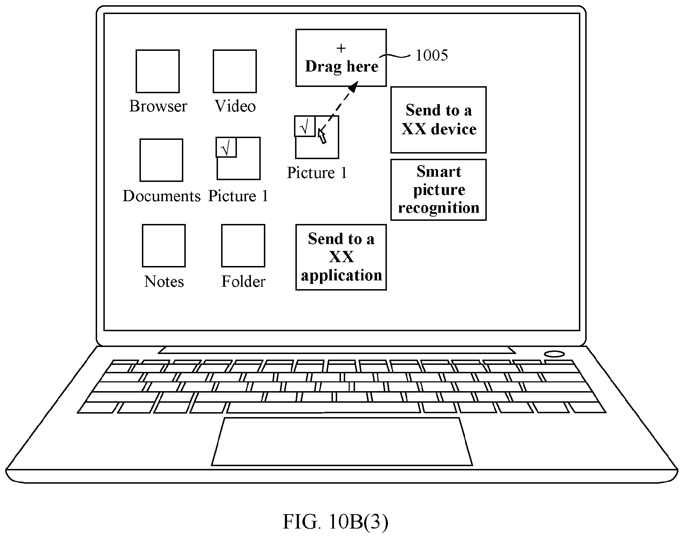

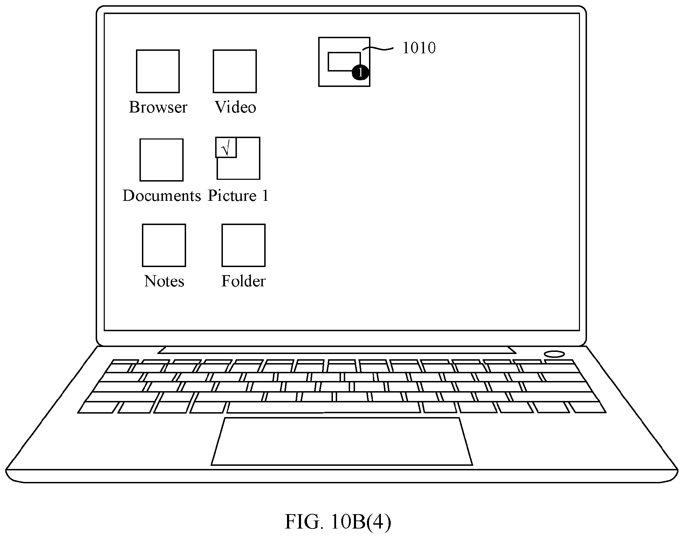

In some other examples, the menu bar may also be popped up through another type of operation, for example, selecting (for example, clicking, tapping, or touching and holding with a finger) a target object and shaking the target object, to trigger to pop up the menu bar; or drawing a circle or another shape or letter after selecting the target object, to trigger to pop up the menu bar. For example, a menu display manner may be a manner in which the menu bar 1003 is shown in FIG. 10A, or may be shown in FIG. 10B(2). A plurality of menu items may be arranged circularly around the target object.

In an example, the electronic device 100 is a computer. As shown in FIG. 10B(1), the computer displays a desktop, and a plurality of icons are displayed on the desktop, where the plurality of icons may include an application icon, a file icon, a folder icon, and the like. If detecting that the user operates one of the icons, for example, an operation of clicking and dragging the icon to an icon 1004 of a picture 1 by using a mouse, as shown in FIG. 10B(2), the computer displays a menu item 1005 of the transfer station around the icon 1004. As shown in FIG. 10B(3), when detecting that the user drags the icon 1004 to contact or coincide with the menu item 1005, the computer starts the transfer station, and stores a file (for example, the picture 1) corresponding to the icon 1004 in the transfer station. As shown in FIG. 10B(4), the computer displays the floating window 1005 of the transfer station, and an indicator of the picture 1 (for example, a thumbnail of the picture 1) is displayed in the floating window 1005 of the transfer station.

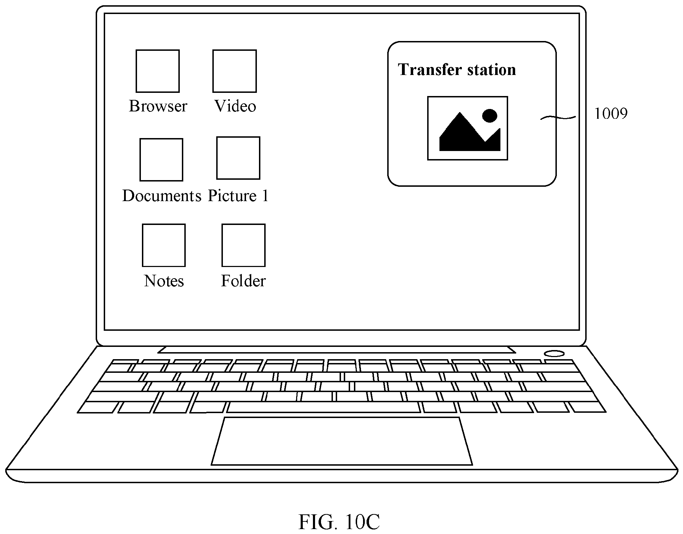

Further, the user may further expand a home screen of the transfer station by operating the floating window 1005 of the transfer station. For example, when detecting that the floating window 1005 of the transfer station is singly clicked (left clicked or right clicked) or double clicked by using the mouse, the computer displays a home screen 1009 of the transfer station shown in FIG. 10C. For content of the home screen 1009 of the transfer station, refer to the following description. Details are not described herein. Optionally, as shown in FIG. 10B(2), the computer may further display a menu item 1008 of "Send to a XX application", a menu item 1007 of "Smart picture recognition", a menu item 1006 of "Send to a XX device", and the like. If a corresponding menu item is selected, an operation indicated by the menu item is performed on the target object. For example, a transfer station solution provided in this embodiment of this application may be implemented on the computer. In this case, the menu item 1006 of "Send to a mobile phone" may be displayed. If the menu item 1006 of "Send to a mobile phone" is clicked, the computer sends the target object to the mobile phone. For example, the mobile phone may be a mobile phone that has a communication connection to the computer, a mobile phone that logs in to a unified account, or the like. For another example, when detecting that the menu item 1007 of "Smart picture recognition" is operated, the computer starts a smart picture recognition function to perform smart recognition on the picture. For another example, when detecting that the menu item 1008 of "Send to a XX application" is operated, the computer starts a sharing panel, where the sharing panel includes a plurality of forwarding applications (for example, an SMS message, an instant messaging application, a mailbox, or a Wi-Fi direct connection). The user may forward the target object to another user or another device by using the selected application in the sharing panel.

(8) Touch and hold the target object, drag the target object to a preset range, and then suck the target object into the transfer station.

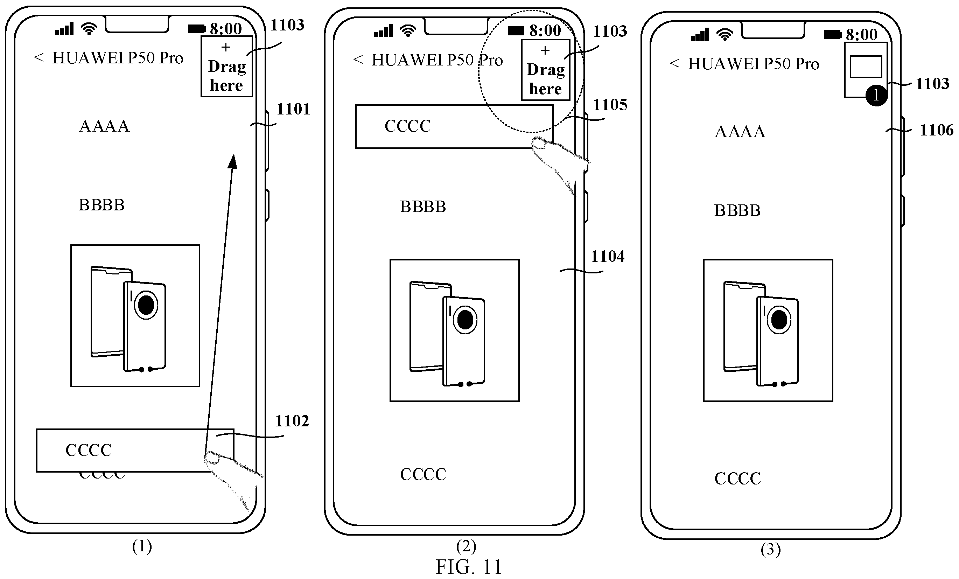

In some examples, in an interface 1101 shown in (1) in FIG. 11, after the user touches and holds the target object, the mobile phone displays a floating window 1102 of the target object. Further, in an interface 1104 shown in (2) in FIG. 11, when it is detected that the user drags the floating layer 1102 of the target object to reach a preset region (for example, a region 1105) and releases (or does not release) the floating layer 1102, the floating layer 1102 of the target object is automatically sucked into a floating window 1103 of the transfer station. The mobile phone stores the target object in the transfer station, and displays an interface 1106 shown in (3) in FIG. 11. For example, the preset region is a region whose distance from a border of the floating window 1103 or a center of the floating window 1103 of the transfer station falls within a preset distance value.

Optionally, after the floating layer 1102 of the target object is dragged to the preset region, the floating window 1103 of the transfer station may become larger, and then the floating layer 1102 of the target object automatically gradually shrinks and enters the floating window 1103 of the transfer station. The user is visually given experience of the floating layer 1102 being sucked into the floating window 1103 of the transfer station.

In addition to the examples described above, the system may also provide other types of entrances to the transfer station.

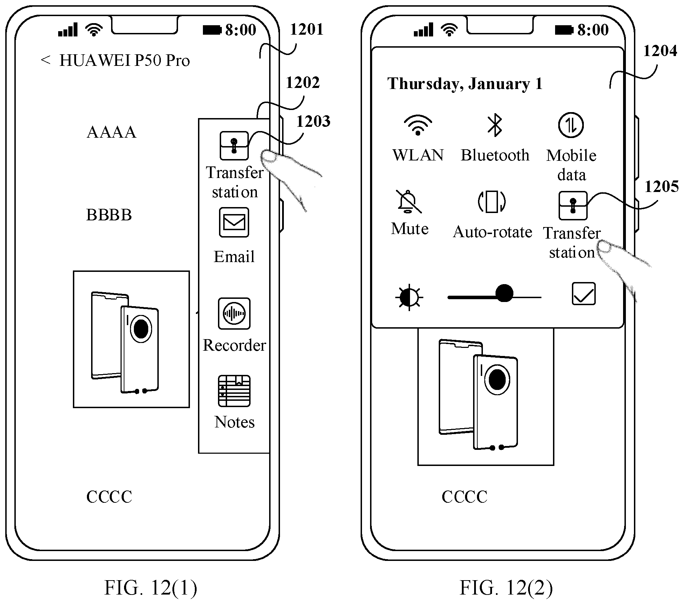

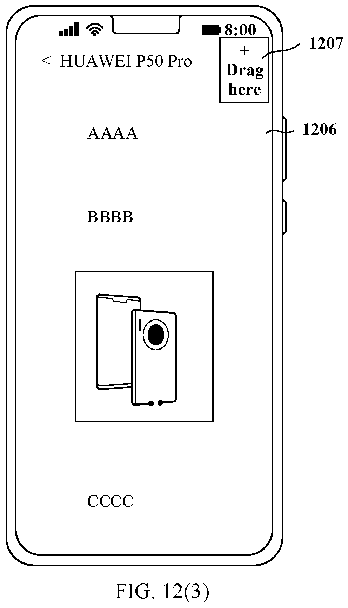

In some examples, the mobile phone may set a switch control of the transfer station in a sidebar. The mobile phone displays an interface 1201 shown in FIG. 12(1) in response to detecting that the user performs an operation of sliding leftward on a right border of the screen of the mobile phone and hovering. A sidebar 1202 is displayed in the interface 1201. Further, when detecting that the user operates an icon 1203 of the transfer station (that is, a switch control of the transfer station), the mobile phone enables a transfer station function. Optionally, after the transfer station is enabled, an interface 1206 shown in FIG. 12(3) may be displayed. The interface 1206 includes a floating window 1207 of the transfer station. Alternatively, the floating window 1207 is displayed only after the user selects the target object (for details, refer to the foregoing example). Then, for operations of selecting and storing the target object, refer to the foregoing example. Details are not described again in the following. In some other examples, the mobile phone may set the switch control of the transfer station in the following menu bar or in the leftmost screen. In response to detecting that the user performs an operation of sliding down a top border of the screen of the mobile phone, the mobile phone displays a drop-down menu bar 1204 shown in FIG. 12(2). Further, when detecting that the user operates an icon 1205 (namely, a switch control of the transfer station) of the transfer station, the mobile phone enables a transfer station function, and an interface 1206 shown in FIG. 12(3) may be displayed. The interface 1206 may or may not display a floating window 1207 of the transfer station. Then, for operations of selecting and storing the target object, refer to the foregoing example. Details are not described again in the following.

It should be noted that, in this application, the mobile phone is mostly used as an example to describe implementations of the solution. In most of the foregoing embodiments, the common "touching and holding" operation on the mobile phone is used as an example of the operation of selecting the target object. It may be understood that another operation may alternatively replace the touch and hold operation, and the another operation may be, for example, a single-tap (for example, a finger tap or a mouse click) operation, a double-tap operation, or a pressure-sensitive operation.

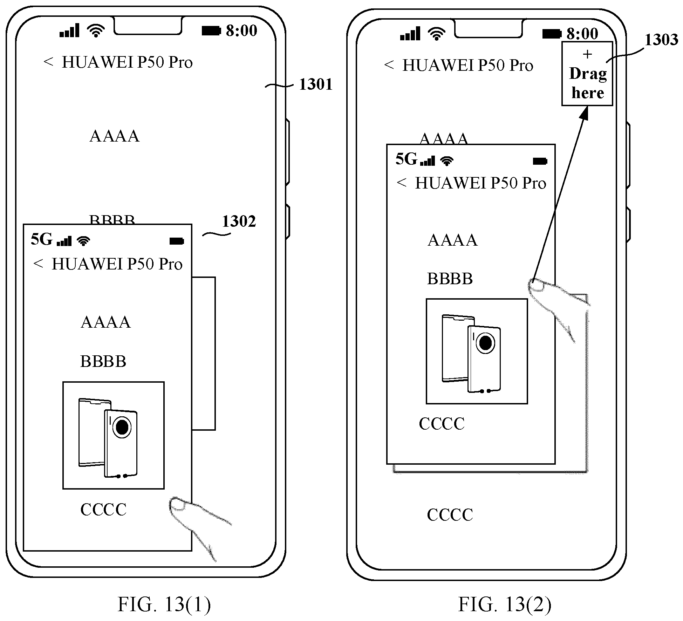

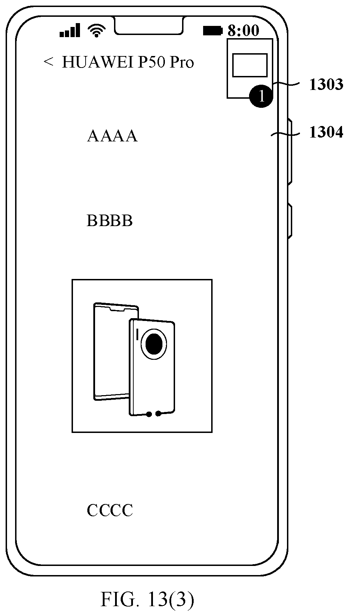

The foregoing describes a plurality of manners of selecting the target object and storing the target object in the transfer station. A plurality of examples of the various manners may be mutually referenced or combined. The following describes types of target objects that can be selected by the user. It may be understood that, the plurality of types of target objects described below may be selected and stored in the transfer station by referring to the method in the foregoing example. Details are not described in this application again.
(1) The target object may be all or a part of selected content in the current interface, for example, a text, a picture, or a combination of a text and a picture in the current interface. For this part of content, refer to descriptions of related content in FIG. 3(1) to FIG. 11. Details are not described again in the following.
(2) The target object may be a screenshot of the current interface.
   In some examples, as shown in FIG. 13(1), the mobile phone displays a screenshot 1302 in the current interface 1301 in response to detecting a screen capture operation of the user. In some examples, when detecting that duration in which the user touches and holds the screenshot 1302 reaches preset duration, the mobile phone displays a floating window 1303 of the transfer station that is shown in FIG. 13(2). Further, the user may drag the screenshot 1302. In response to detecting that the user drags the screenshot 1302 to the floating window 1303 of the transfer station and releases the screenshot 1302, the mobile phone stores the screenshot 1302 in the transfer station, and displays an interface 1304 shown in FIG. 13(3). In some other examples, in response to detecting the screen capture operation of the user, the mobile phone displays a screenshot picture in the current interface, and displays the floating window of the transfer station. Then, the user may store the screenshot picture in the transfer station by dragging the screenshot picture to the floating window of the transfer station. In some examples, if the user does not perform any operation on the screenshot picture within preset duration, the screenshot picture may disappear. Optionally, the floating window of the transfer station may also disappear.
(3) Alternatively, the target object may be an entire page of the current interface.

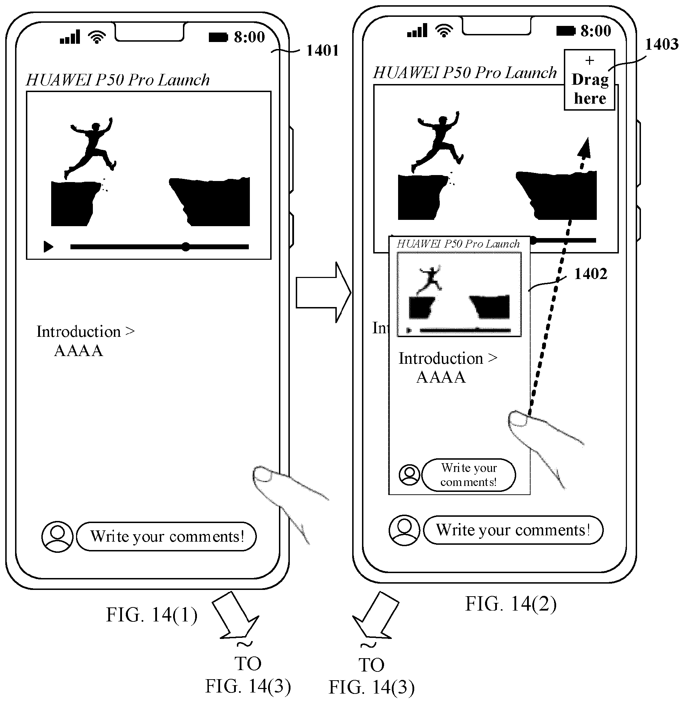

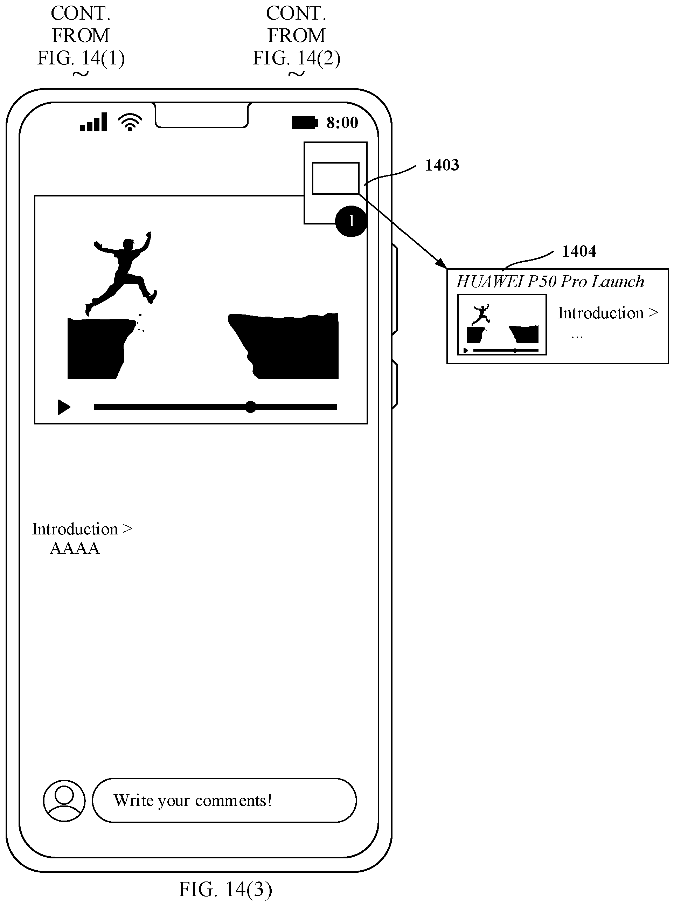

In some examples, the mobile phone displays an interface 1401 shown in FIG. 14(1). In response to detecting that the user performs a preset operation, where the preset operation is, for example, performing a touch and hold operation in a blank position or a title region in the interface 1401, or performing a four-finger grab operation on the screen, or shaking the mobile phone, or performing a horizontal sliding operation on the interface 1401, the mobile phone displays a floating layer 1402 of the target object and the floating window 1403 of the transfer station shown in FIG. 14(2). Then, when detecting that the user drags the floating layer 1402 of the target object to the floating window 1403 of the transfer station, the mobile phone stores the target object (that is, the interface 1401) in the transfer station, and displays an interface shown in FIG. 14(3).

In some examples, if the target object is one or more FA widgets, the mobile phone may store the one or more FA widgets in the transfer station.

In some examples, if the target object (for example, a web page) corresponds to one network link, the mobile phone may store the network link of the target object in the transfer station. In some examples, the transfer station may present the target object by using a unified template. For example, although the transfer station stores the network link, to improve user experience, a part of content of the target object may be selected, and then the content of the target object is typeset through a preset template. In other words, the transfer station may present the target object of the corresponding network link by using a unified preset template. The preset template includes, for example, content like a title, a picture preview, and an introduction description. The preset template may further predefine a layout of each content, and the like. For example, as shown in FIG. 14(3), the mobile phone may extract the title, the picture preview, the introduction description, and the like of the target object 1401, arrange the content by using a layout of the preset template, and finally present the content in the floating window 1403 of the transfer station as a target object 1404.

In some examples, if the target object is neither one or more FA widgets nor corresponds to one network link, the mobile phone takes a screenshot of the target object, and then stores the screenshot in the transfer station. Alternatively, the mobile phone may further recognize the text in the target object, and then store the text in the target object in the transfer station.

(4) Alternatively, the target object may be one or more items, one or more grids, or the like in a list in the current interface.

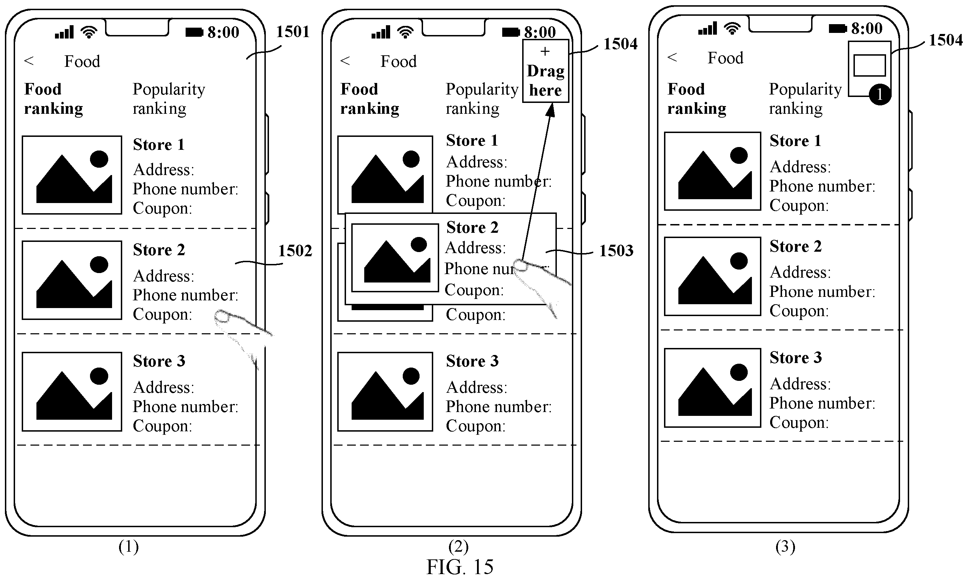

An example in which the mobile phone is indicated to store the target object in a manner of touching and holding the target object and dragging the target object to the transfer station is used for description. The interface 1501 described in (1) in FIG. 15 includes a list, and the list includes a plurality of items. The interface 1501 is, for example, a ranking list of restaurants/stores/commodities, and the ranking list includes information about a plurality of restaurants/stores/commodities. In some examples, in response to detecting that duration in which the user touches and holds an item 1502 in the list reaches preset duration, as shown in (2) in FIG. 15, the mobile phone displays a floating layer 1503 of the item 1502 and a floating window 1504 of the transfer station. Further, in response to detecting that the user drags the floating layer 1503 to a position of the floating window 1504, the mobile phone stores the item 1502 in the transfer station, and the mobile phone displays an interface shown in (3) in FIG. 15. Optionally, a subscript displayed in the floating window 1504 in the interface indicates that a new target object is stored.

In some examples, if each item in the list corresponds to one FA widget, the mobile phone stores a FA widget corresponding to the selected item (for example, the item 1502) in the transfer station. In some other examples, if each item in the list corresponds to one network link, the mobile phone may store the network link corresponding to the selected item (for example, the item 1502) in the transfer station. Optionally, the transfer station may present only the network link, or may present more information. For example, the mobile phone may obtain content (for example, a picture or a text) of the item 1502, then typeset the content of the item 1502 through a preset template, and then present the content in the transfer station. In other words, the mobile phone stores the content of the item 1502 by using the unified preset template. In some other examples, the mobile phone automatically recognizes the picture and the text in the selected item (for example, the item 1502), and stores the recognized picture and the text in the transfer station.

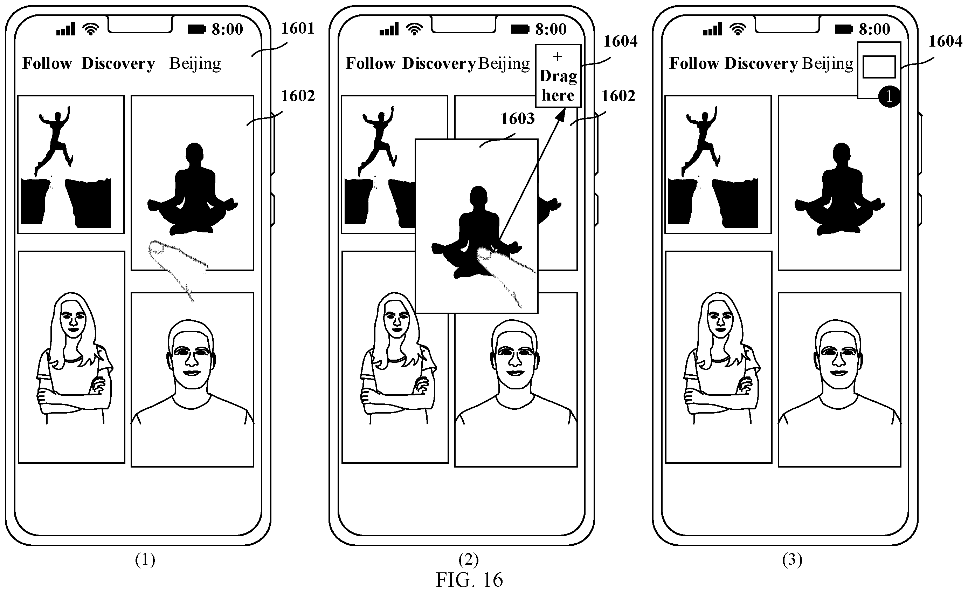

Still, an example in which the mobile phone is indicated to store the target object in a manner of touching and holding the target object and dragging the target object to the transfer station is used for description. An interface 1601 shown in (1) in FIG. 16 includes a plurality of grids, where each grid corresponds to one or more pictures/videos/web page files or the like. In some examples, in response to detecting that duration in which the user touches and holds a grid 1602 in an interface 1602 reaches preset duration, as shown in (2) in FIG. 16, the mobile phone displays a floating window 1603 of the grid 1602 and a floating window 1604 of the transfer station. Further, in response to detecting that the user drags the floating layer 1603 to a position of the floating window 1604, the mobile phone stores the grid 1602 in the transfer station, and the mobile phone displays an interface shown in (3) in FIG. 16.

If each grid corresponds to one network link, in some examples, the mobile phone may store, in the transfer station, a network link corresponding to the selected grid (for example, the grid 1602). In some other examples, the mobile phone automatically identifies a picture and/or text in the selected grid (for example, the grid 1602), and stores the recognized picture and/or text in the transfer station.

(5) Alternatively, the target object may be one or more widgets in the multi-task interface.

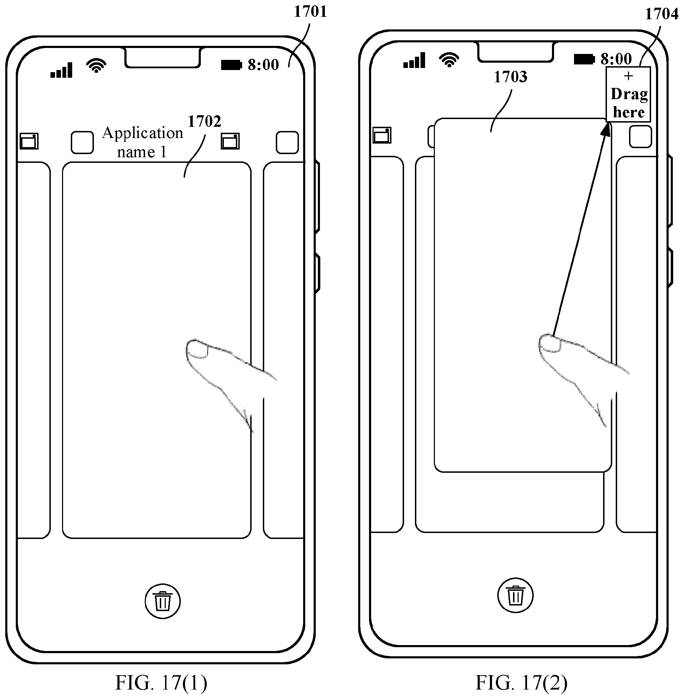

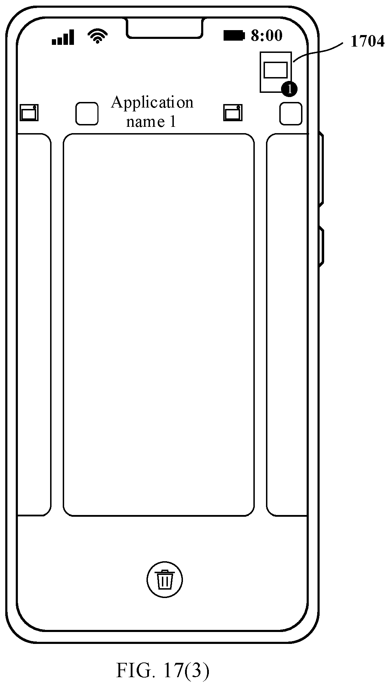

An example in which the mobile phone is indicated to store the target object in a manner of touching and holding the target object and dragging the target object to the transfer station is used for description. The mobile phone displays a multi-task interface 1701 shown in FIG. 17(1), where the multi-task interface 1701 includes a plurality of widgets (completely displayed widgets or incompletely displayed widgets). In some examples, in response to detecting that duration in which the user touches and holds a widget 1702 in the multi-task interface 1701 reaches preset duration, as shown in FIG. 17(2), the mobile phone displays a floating window 1704 of the transfer station, and the widget 1702 may be dragged. Optionally, as shown in FIG. 17(2), the mobile phone may further display a floating layer 1703 of the widget 1702 above the widget 1702. Further, in response to detecting that the user drags the widget 1702 (or the floating layer 1703) to a position of the floating window 1704, the mobile phone stores the widget 1702 in the transfer station, and the mobile phone displays an interface shown in FIG. 17(3).

(6) Alternatively, the target object may be one or more widgets on a leftmost screen or a desktop.

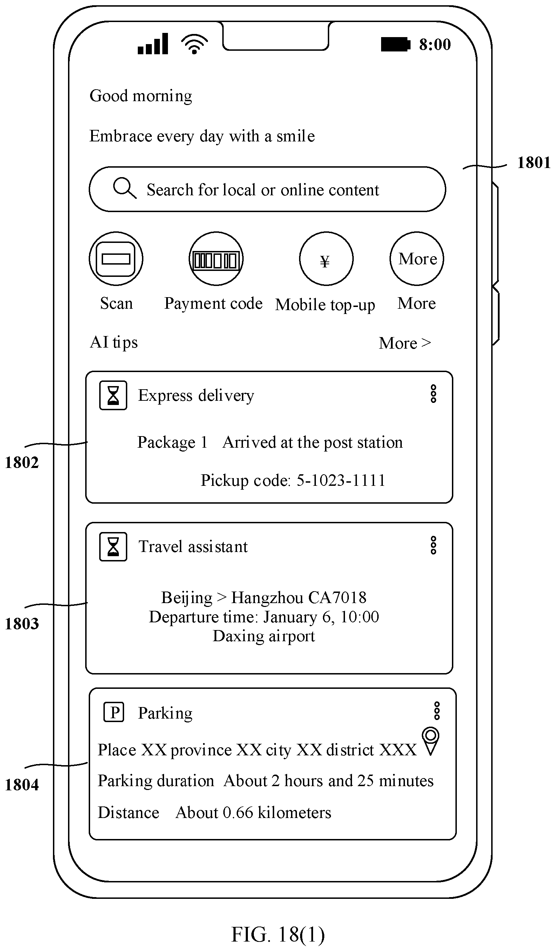

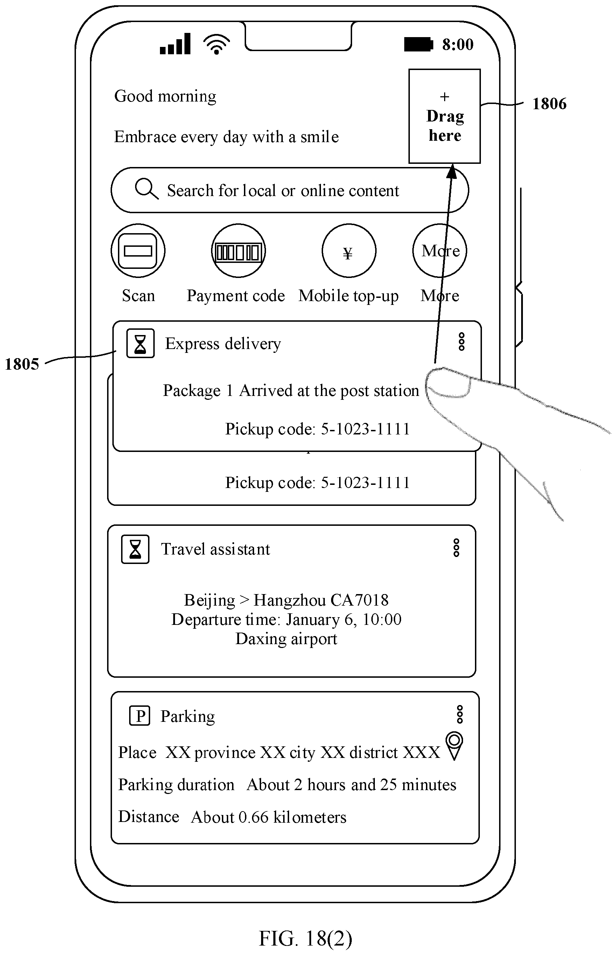

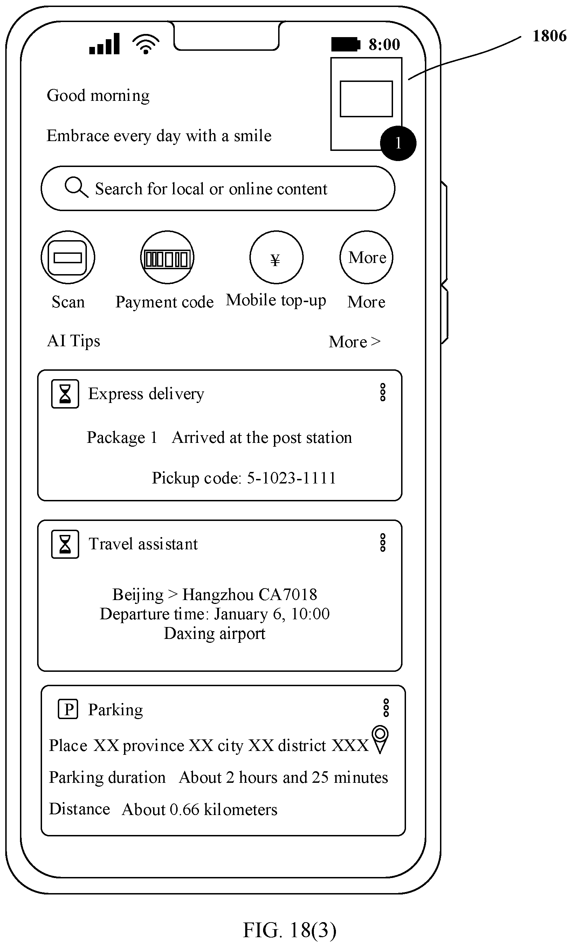

In some examples, the application 1 is a leftmost screen application or a desktop application, and the target object is one or more FA widgets. An example in which the mobile phone is indicated to store the target object in a manner of touching and holding the target object and dragging the target object to the transfer station is used for description. As shown in FIG. 18(1), the user enables a leftmost screen 1801 of the mobile phone. The leftmost screen 1801 includes a plurality of widgets of AI tips, for example, an express widget 1802 (displaying express information corresponding to a mobile phone number registered by a mobile phone user), a travel assistant widget 1803 (displaying travel information corresponding to the mobile phone number registered by the mobile phone user, for example, flight information, train information, and taxi information), and a parking widget 1804 (displaying parking information corresponding to a license plate number registered by the mobile phone user). In some examples, in response to detecting that duration in which the user touches and holds the express widget 1802 reaches preset duration, as shown in FIG. 18(2), the mobile phone displays a floating layer 1805 of the express widget 1802 and a floating window 1806 of the transfer station. Further, in response to detecting that the user drags the floating layer 1805 to a position of the floating window 1806, the mobile phone stores the express widget 1802 in the transfer station, and the mobile phone displays an interface shown in FIG. 18(3), where a subscript displayed in the floating window 1806 in the interface indicates that a new target object (that is, the express widget 1802) is stored. In some other examples, the express widget 1802 may be dragged directly to the transfer station without displaying an additional floating window, for example, the floating layer 1805.

In some examples, the express widget 1802, the travel assistant widget 1803, and the parking widget 1804 included in the leftmost screen 1801 respectively correspond to one or more FA widgets. In this case, in response to receiving an indication that the user indicates to store the express widget 1802 in the transfer station, the mobile phone stores the one or more FA widgets corresponding to the express widget 1802 in the transfer station.

### 2. A plurality of display manners of the transfer station

### (1) Floating window of the transfer station

In some examples, the mobile phone may display the floating window of the transfer station at a fixed position (for example, an upper right corner of the screen) on the screen. In some other examples, the mobile phone may further choose, based on content in the current interface, to display the floating window of the transfer station at a blank position or a position at which interface content is not important.

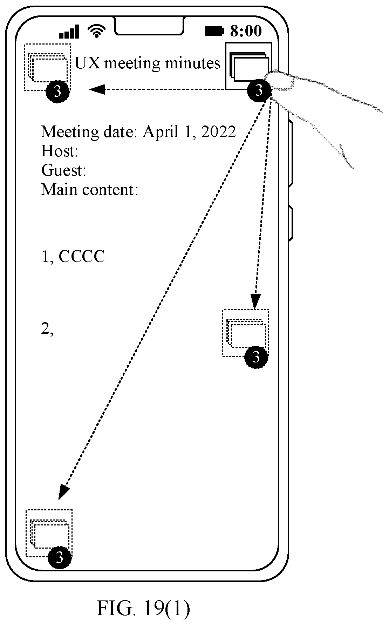

In some examples, the user may manually adjust a position of the floating window of the transfer station by dragging the floating window of the transfer station. For example, as shown in FIG. 19(1), the user may press the floating window of the transfer station and drag the floating window to any position (for example, an upper left corner/an upper right corner/a lower left corner/a lower right corner/a middle position of a left border/a middle position of a right border/a center position of a screen).

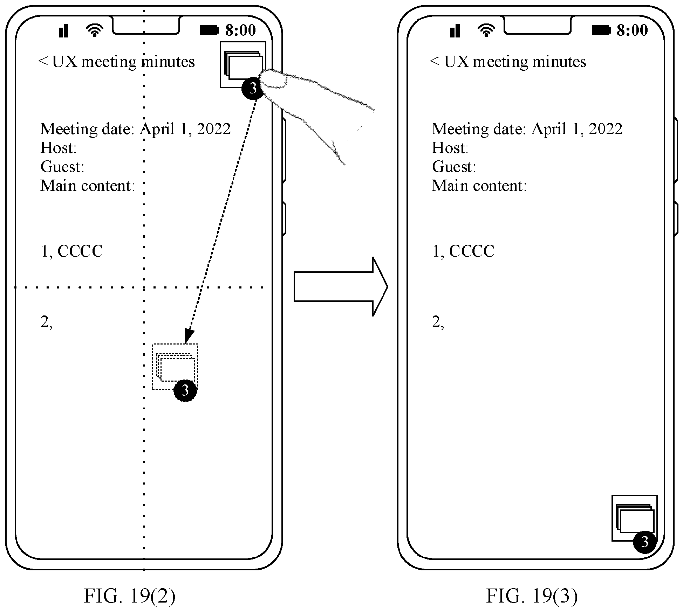

In some other examples, the mobile phone determines, based on a dragging operation of the user, a specific preset position closest to a release position of the user. For example, the mobile phone is provided with four preset positions that can be used to display the floating window of the transfer station. The four preset positions are an upper left corner, an upper right corner, a lower left corner, and a lower right corner, respectively. In an example, the mobile phone may display the floating window of the transfer station in the upper right corner by default. As shown in FIG. 19(2), the mobile phone may divide the screen into an upper left region, an upper right region, a lower left region, and a lower right region. In response to detecting an operation that the user drags the floating window of the transfer station, the mobile phone determines, based on a release position of the user, a specific preset position at which the floating window of the transfer station is displayed. For example, if the release position of the user is in the lower right region, the mobile phone moves the floating window of the transfer station to the lower right corner, as shown in FIG. 19(3). If the release position of the user is in the lower left region, the mobile phone moves the floating window of the transfer station to the lower left corner. If the release position of the user is in the upper left region, the mobile phone moves the floating window of the transfer station to the upper left corner. If the release position of the user is in the upper right region, the mobile phone still keeps the floating window of the transfer station displayed in the upper left corner. For another example, the mobile phone is provided with two preset positions that may be used to display the floating window of the transfer station, such as a left side on a top of the screen (that is, an upper left corner) and a right side on the top of the screen (that is, an upper right corner). In this case, in response to detecting an operation that the user drags the floating window of the transfer station, the mobile phone determines, based on a release position of the user, a specific preset position at which the floating window of the transfer station is displayed. For example, if the release position of the user is closer to a left border of the screen, the mobile phone moves the floating window of the transfer station to the upper left corner. If the release position of the user is closer to a right border of the screen, the mobile phone moves the floating window of the transfer station to the upper right corner.

It may be understood that a rule in which the mobile phone determines the position of the floating window of the transfer station based on the dragging operation of the user is merely an example. A specific rule is not limited in the example in this application.

### (2) Switching between the floating window of the transfer station and a side strip of the transfer station

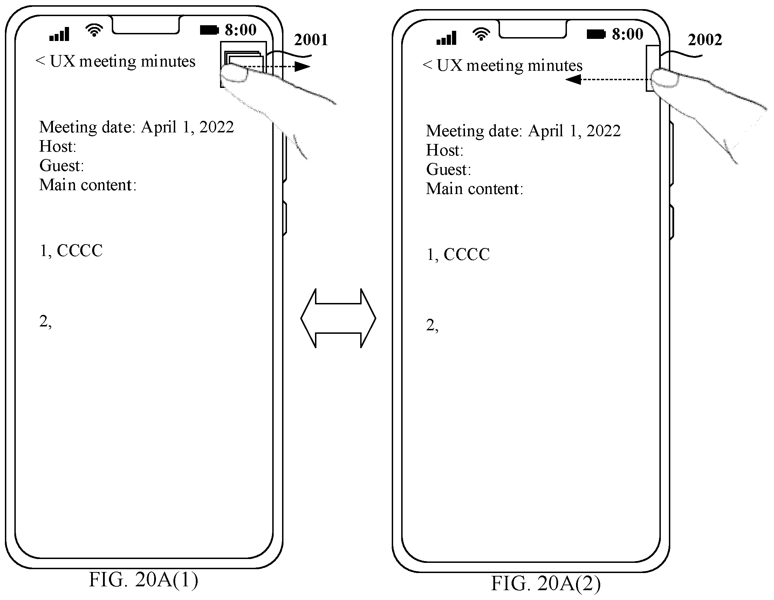

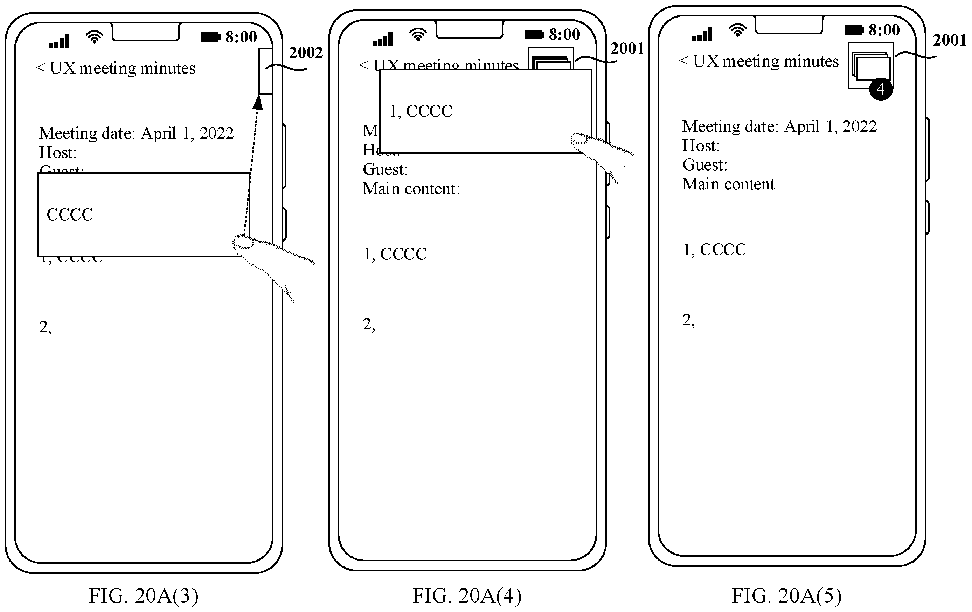

In some examples, after starting the transfer station, the mobile phone may display the transfer station in a form of a floating window by default. For example, after starting the transfer station, the mobile phone may display a floating window 2001 shown in FIG. 20A(1) at a specific position (for example, an upper right corner of the screen) on the current interface. The floating window 2001 indicates that the mobile phone has started the transfer station currently. It may be noted that the mobile phone displays a complete floating window 2001 in this time, and it may be seen that an indicator of the target object, for example, a thumbnail or a preview image, is displayed in the floating window 2001. Optionally, the floating window 2001 further displays a quantity of target objects stored in the transfer station. In some examples, one side of the floating window 2001 is in contact with the border of the screen. For example, a right border of the floating window 2001 is in contact with the right border of the screen. In some other examples, neither side of the floating window 2001 is in contact with the border of the screen.

In some examples, in response to detecting that the user performs an operation of switching the floating window 2001 to a side strip for display, the mobile phone displays an interface shown in FIG. 20A(2), that is, the original floating window 2001 is changed to the side strip 2002, and is used to prompt the user that the mobile phone has enabled the transfer station. The side strip may be a part of content of the floating window 2001 (or referred to as the floating window 2001 with incomplete display) or another type of mark. For example, the switching operation may be as follows: The user touches and holds the floating window 2001 and drags the floating window 2001 to the border of the screen, or the user taps or double taps the floating window 2001, or the user slides the floating window 2001 toward a side of the screen, or the user makes a sliding gesture to a side of the screen, or a voice instruction, or another type of operation instruction. In some examples, as shown in FIG. 20A(2), a screen area occupied by the side strip 2002 becomes smaller. Therefore, the side strip 2002 may no longer display information about an indicator of the target object, for example, a thumbnail or a preview image, a quantity of target objects stored in the transfer station, or the like. It can be understood that the side strip 2002 basically does not block content of the current interface. This helps the user view the content of the current interface. In some other examples, for example, when the screen is large, even if the floating window 2001 is switched to another state for display, information about the content of the target object and/or the quantity of target objects or the like may continue to be displayed.

In some other examples, when detecting that the user does not operate the floating window 2001 within preset duration, the mobile phone may also automatically switch the floating window 2001 to the side strip 2002 for display.

In some examples, when the mobile phone displays the side strip 2002 at the border of the screen, the user may still select the target object and store the target object in the transfer station. As shown in FIG. 20A(3), when detecting that the user drags the selected target object to the side strip 2002, optionally, the mobile phone displays an interface shown in FIG. 20A(4). In this case, the side strip 2002 is automatically expanded, that is, the floating window 2003 is switched back (or the floating window may not be switched back). Further, when detecting that the user drags the target object to the floating window 2001, the mobile phone stores the target object to the transfer station. Optionally, as shown in FIG. 20A(5), an interface is displayed, in which the floating window 2001 is completely displayed (or the side strip continues to be displayed instead), and a quantity of transfer stations that is indicated by the floating window 2001 has been updated.

In some examples, as shown in FIG. 20A(2), after the mobile phone displays the side strip 2002 at the border of the screen, the user may perform an operation of switching back to display the floating window (for example, an operation that the user sliding from a position of the side strip 2002 in a direction away from the side strip 2002), so that the mobile phone switches back to display the floating window 2001 shown in FIG. 20A(1). For example, as shown in FIG. 20A(2), the mobile phone displays the complete floating window 2001 shown in FIG. 20A(1) in response to detecting an operation that the user slides from the position of the side strip 2002 in the direction away from the side strip 2002.

### (3) Other display manners

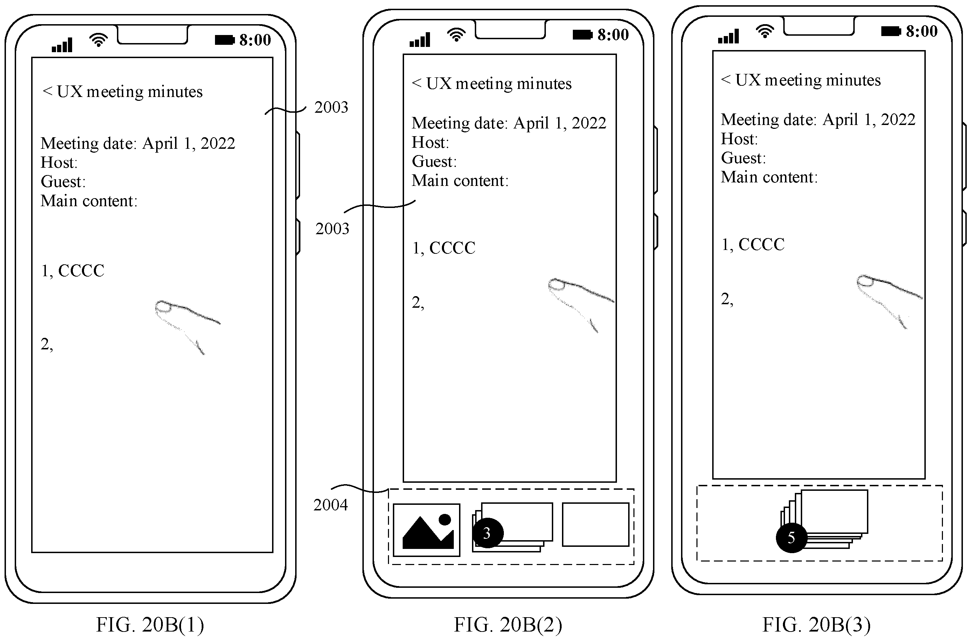

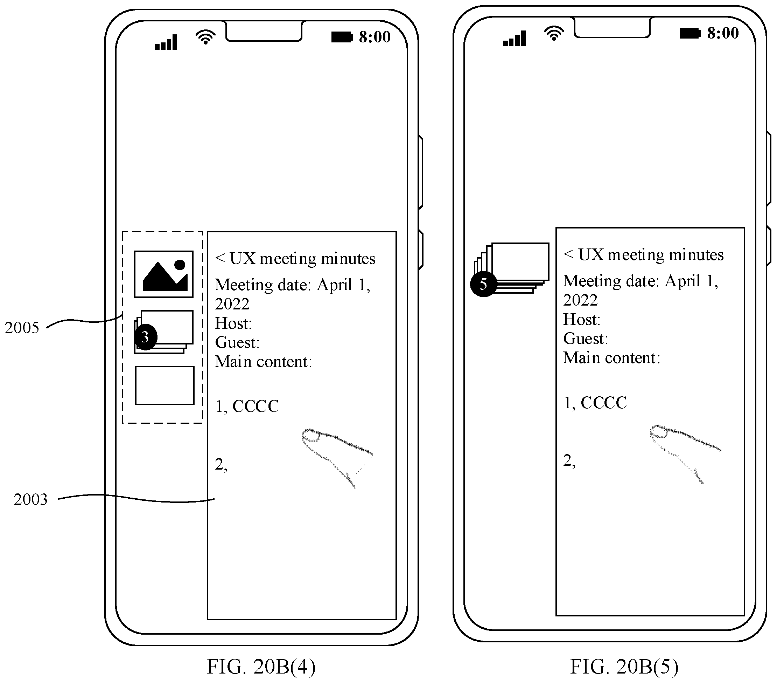

In some examples, the transfer station may alternatively be displayed in a form of a non-floating window. For example, in an interface 2003 shown in FIG. 20B(1), after detecting that the user touches and holds the selected target object for preset duration, the mobile phone may display an interface shown in FIG. 20B(2), and the original interface 2003 is zoomed out. In addition, content of the transfer station is displayed in a region 2004 at the bottom (or may be the top) of the reduced interface 2003, for example, a target object stored in the transfer station is displayed. In some examples, as shown in FIG. 20B(2), the region 2004 directly expands the target objects already stored in the transfer station. In another example, as shown in FIG. 20B(3), the region 2004 may also display all target objects in a stacked form. Further, in some examples, the user may drag the selected target object to the region 2004, and then release the selected target object, and the transfer station stores the new target object.

In some other examples, in the interface 2003 shown in FIG. 20B(1), after detecting that the user touches and holds the selected target object for preset duration, the mobile phone may display an interface shown in FIG. 20B(4). The original interface 2003 is zoomed out and moved to the lower right of the entire screen (to facilitate a single-hand operation of the user), and content of the transfer station is displayed in a region 2005 on a left side (or may be displayed in a region on the top) of the zoomed-out interface 2003, for example, a target object stored in the transfer station is displayed. In some examples, as shown in FIG. 20B(4), the region 2005 directly expands target objects already stored in the transfer station. In some other examples, as shown in FIG. 20B(5), the region 2005 may alternatively display all target objects in a stacked form. Further, in some examples, the user may drag the selected target object to the region 2005, and then release the selected target object, and the mobile phone stores the new target object.

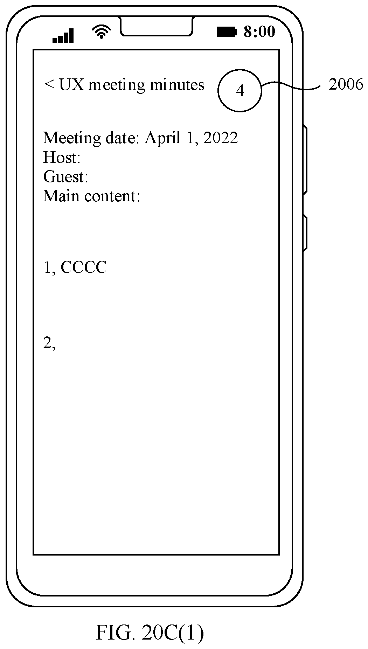

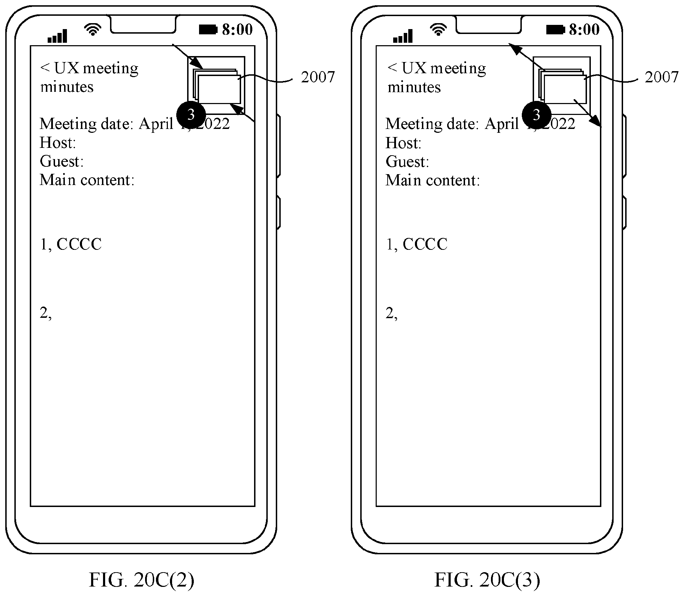

In some other examples, in an interface shown in FIG. 20C(1), when the mobile phone just starts the transfer station, the mobile phone may display a mark 2006 to mark that a transfer station function is currently enabled. In an example, the mark 2006 may be a number, and indicates a quantity of target objects stored in the transfer station. Optionally, the user may expand, by operating the mark 2006, the target objects stored in the transfer station, that is, display a home screen of the transfer station. Content of the home screen of the transfer station is described in detail below, and is not described herein.

In some other examples, in an interface shown in FIG. 20C(2), when the mobile phone displays a floating window 2007 of the transfer station, when the mobile phone detects that the user performs a two-finger pinch-in (two-finger approaching) operation, a double-tap operation, or a single-tap operation at a position of the floating window 2007 of the transfer station, the mobile phone may switch to the interface shown in FIG. 20C(1). That is, the floating window 2007 of the transfer station is changed to the mark 2006, so as to prevent the floating window of the transfer station from blocking the content in the current interface of the mobile phone.

In some other examples, in an interface shown in FIG. 20C(3), when the mobile phone displays the floating window 2007 of the transfer station, when the mobile phone detects that the user performs a two-finger separating (two fingers away from each other) operation, a single-tap operation, or a double-tap operation at the position of the floating window 2007 of the transfer station, the mobile phone may expand the target object stored in the transfer station, that is, display the home screen of the transfer station. Content of the home screen of the transfer station is described in detail below, and is not described herein.

### 3. Select the target object in the transfer station and share the target object to the application 2

In some examples, after the user selects the target object of the transfer station to share with the application 2, the transfer station still retains the target object. In other words, the mobile phone shares the target object with the application 2 in a copy manner. In some other examples, after the user selects the target object of the transfer station to share with the application 2, the transfer station no longer retains the target object. In other words, the mobile phone shares the target object with the application 2 in a cut manner. In a specific implementation, an option may be set in a system setting of the mobile phone, so that the user chooses to use the copy manner or the cut manner to implement sharing of the target object in the transfer station. Certainly, the mobile phone may alternatively use any one of the manners by default. This is not limited herein.

In some examples, the application 2 and the application 1 are located in the same device. For example, the application 2 and the application 1 are applications installed in a same mobile phone. In some other examples, the application 2 and the application 1 are located in different devices. For example, the application 1 is installed in the mobile phone, and the transfer station in the mobile phone stores a part of content of the application 1. Then, the application 2 is started on the laptop, and the content of the application 1 is shared with the application 2 by using a sharing function of the transfer station of the mobile phone and a communication connection between the mobile phone and the laptop.

In some examples, the method provided in this application may be used in combination with another technology. For example, in a projection scenario, the method provided in this application may be applied. For example, a mobile phone projects a screen to a laptop, and the laptop displays an interface of the application 2 on the mobile phone. In this case, the user may insert, by using a dragging operation, an object of the application 1 that is stored in the transfer station of the laptop in the interface of the application 2, where the application 1 is an application installed in the laptop. This enables object transfer between two different devices. Optionally, the application 1 may alternatively be an application installed on the mobile phone. In the following example, an example in which the mobile phone shares the target object in the transfer station with the application 2 in the copy manner is used for description.

### (1) Share all target objects in the transfer station with the application 2

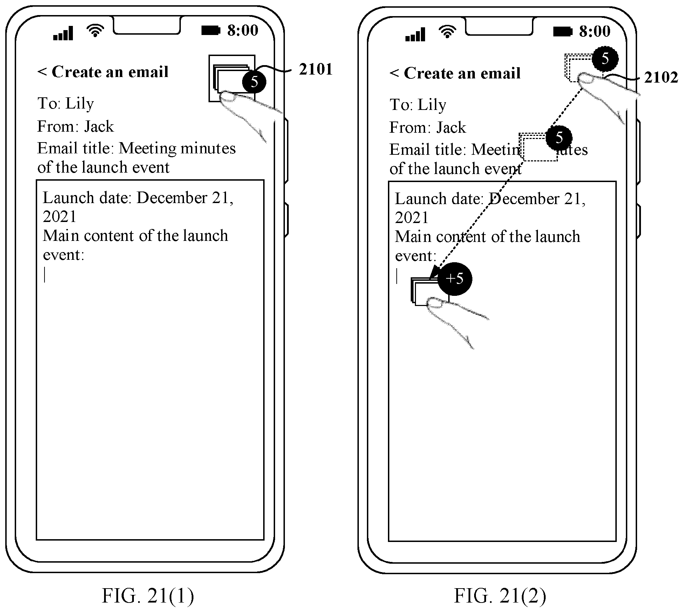

In some examples, the user may drag all content in the transfer station to the target position in the application 2 at a time. For example, as shown in FIG. 21(1), the mobile phone displays an interface of the application 2 (for example, an email sending interface of an email application). The interface of the application 2 displays a floating window 2101 of the transfer station, and the floating window 2101 of the transfer station displays a mark. For example, a quantity of target objects stored in the transfer station is marked with a subscript. (The figure shows that the transfer station stores 5 target objects.) When it is detected that duration in which the user touches and holds the floating window 2101 of the transfer station is equal to or greater than preset duration, as shown in FIG. 21(2), all target objects 2102 in the floating window 2101 of the transfer station float as a whole. Optionally, the floating target object 2102 is displayed by using a style 1. For example, the style 1 is "a blue background + a quantity of target objects". Optionally, the floating window 2101 of the transfer station may be temporarily hidden. Further, when it is detected that the user drags the floating target object 2102, the floating target object 2102 moves with movement of the finger of the user. Optionally, when the floating target object 2102 is dragged to a non-insertable region, the floating target object 2102 keeps the style 1 for display. When the floating target object 2102 is dragged to an insertable region, the floating target object 2102 is displayed by using a style 2. The style 2 is different from the style 1. For example, the style 2 is "a green background + a plus icon + a quantity of target objects". It should be noted that, in a specific implementation, the mobile phone may use a floating layer or a floating window to implement the floating target object 2102. In this case, the floating target object 2102 is displayed by using the style 1, including that the mobile phone may display the floating layer or the floating window by using the style 1, or the mobile phone may display all target objects in the floating layer or the floating window by using the style 1. Similarly, the floating target object 2102 is displayed by using the style 2, including that the mobile phone may display the floating layer or the floating window by using the style 2, or the mobile phone may display all target objects in the floating layer or the floating window by using the style 2. For the following description of the display style, refer to the description herein. Details are not described again in the following.

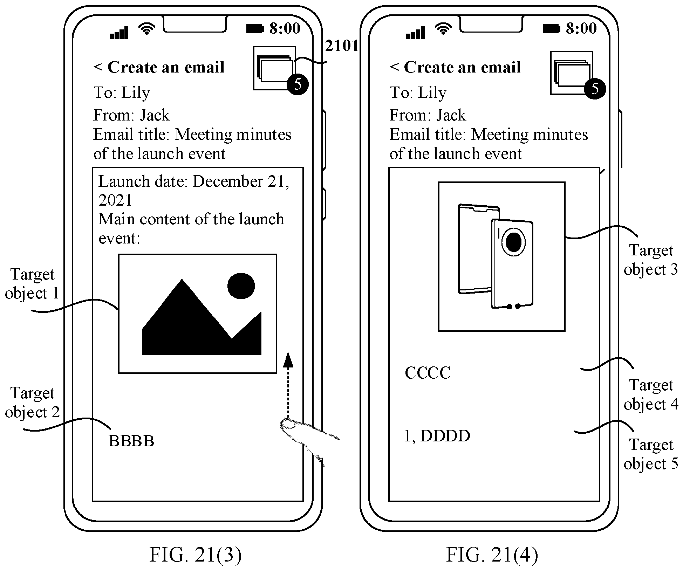

In some examples, in response to detecting that the user releases objects at the target position, the mobile phone inserts all the objects in the transfer station into the target position of the application 2, and displays an interface shown in FIG. 21(3). Content of the target object is displayed in the interface of the application 2. Optionally, the floating window 2101 of the transfer station is restored to display. It may be understood that, when there is a large amount of content of the target object in the transfer station, the user may view, by performing a slide-up operation on the current interface, a target object that is not displayed. For example, as shown in FIG. 21(3), content of a target object 1 and a target object 2 is displayed in the interface of the application 2. When detecting the slide-up operation of the user, the mobile phone displays an interface shown in FIG. 21(4), and content of a target object 3, a target object 4, and a target object 5 is displayed in the interface.

Certainly, in some other examples, when it is detected that duration in which the user touches and holds the floating window 2101 of the transfer station is equal to or greater than preset duration, as shown in FIG. 21(2), all target objects 2102 in the floating window 2101 of the transfer station may not float. That is, the user may directly drag the floating window of the transfer station to the target position in the application 2, and the mobile phone inserts all target objects in the transfer station into the target position in the application 2.

It should be noted that the foregoing example describes a solution in which the mobile phone receives, when the interface of the application 2 is displayed, an operation of dragging the selected target object by the user to the application 2, to insert the target object into the application 2. In some other examples, when the mobile phone does not display the interface of the application 2 (including a case in which the application 2 is not started), the mobile phone may alternatively implement, based on a dragging operation of the user, a solution of inserting the target object into the application 2. For example, when the mobile phone does not start the application 2, when detecting that the floating window of the transfer station is dragged to an identifier corresponding to the application 2 (for example, an icon of the application 2 and a shortcut entrance to the application 2), the mobile phone can automatically start the application 2, and inserts all target objects in the floating window into a default position (for example, an end of a document, a position at which the cursor was located when the application last exited). For another example, when the mobile phone has started the application 2, but the application 2 is switched to run in the background or is switched to a minimized window, when detecting that the floating window of the transfer station is dragged to a specific position (for example, a minimized window), the mobile phone inserts all target objects in the floating window into a default position of the application 2 (for example, a cursor position before the application 2 is switched to the background or to the minimized window for display).

### (2) Select one or more target objects in the transfer station to share with the application 2

In some examples, the user may operate a floating window of the transfer station, and expand a home screen (which may also be referred to as a level-1 interface) of the transfer station, to view details of the target objects stored in the transfer station, and perform an operation on a target object in the target objects.

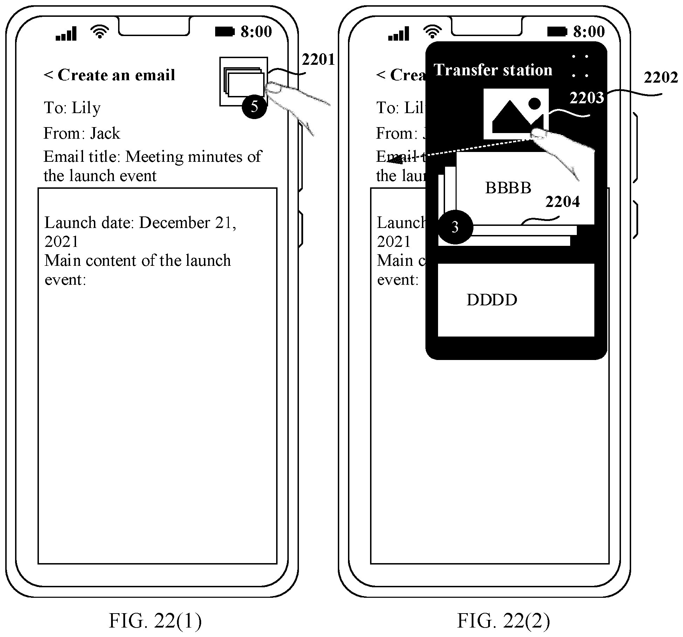

For example, the floating window 2201 of the transfer station is displayed in the interface of the application 2 shown in FIG. 22(1). Optionally, content in the floating window 2201 is displayed in a stacked state. In response to detecting an operation that the user expands the transfer station (for example, singly tapping the floating window 2201 of the transfer station), the mobile phone displays a home screen 2202 of the transfer station shown in FIG. 22(2). The home screen 2202 of the transfer station displays each stored target object. In some examples, the target object stored through each drag is displayed independently. If a plurality of target objects are stored in a single drag, the plurality of target objects may form a target object group, and the plurality of target objects in the target object group may be displayed in the stacked form, so as to prompt the user that the several target objects (for example, the target objects 2204) are stored in the single drag. Optionally, the mobile phone may further mark a quantity of target objects that are included in the target object group and that are displayed in the stacked form. Optionally, the user may further move a display position of the home screen 2202 of the transfer station, for example, in a dragging manner. For example, the home screen 2202 of the transfer station is dragged from a right side of the screen to a left side of the screen.

When the home screen of the transfer station is displayed, the user may directly drag the target object in the home screen 2202 to the application 2, so as to insert the target object in the transfer station into the interface of the application 2.

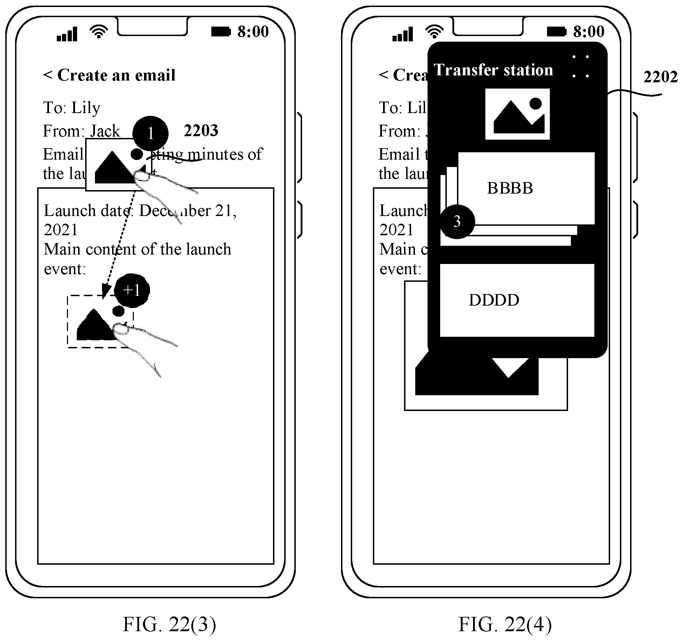

In some examples, the user can drag one target object at a time. For example, in response to detecting an operation that the user touches and holds the target object 2203 in the home screen 2202 of the transfer station, the target object 2203 floats. Further, the user continues to drag the target object 2203 out of the home screen 2202 of the transfer station until dragging to the target position of the application 2. In some examples, as shown in FIG. 22(3), when the user starts to drag the floating target object 2203, or when the user drags the floating target object 2203 out of the home screen 2202 of the transfer station, the mobile phone hides the home screen 2202 of the transfer station. The home screen 2202 of the transfer station is prevented from blocking the interface of the application 2, so that the user can drag the floating target object 2202 to the target position of the application 2. Optionally, when the floating target object 2202 is dragged to the non-insertable region, the floating target object 2102 keeps the style 1 for display, and when the floating target object 2202 is dragged to the insertable region, the floating target object 2102 is displayed in the style 2. The style 1 is different from the style 2. When detecting that the user drags the floating target object 2202 to the target position and releases the floating target object 2202, the mobile phone displays an interface shown in FIG. 22(4), that is, the mobile phone inserts the target object 2202 into the target position. Optionally, the mobile phone may resume displaying the home screen of the transfer station, or display the floating window of the transfer station.

In some examples, the user may also drag all the target objects in the target object group at a time. For example, in the home screen 2202 of the transfer station shown in FIG. 22(2), the user may touch and hold a target object group 2204 (including a plurality of target objects), and the target object group 2204 floats. Then, the user continuously drags the floating target object group 2204 to the target position of the application 2, and the mobile phone inserts the target object group 2204 (including the plurality of target objects) into the target position. For other content, refer to descriptions of related content that the user drags the target object 2202. Details are not described again in the following.

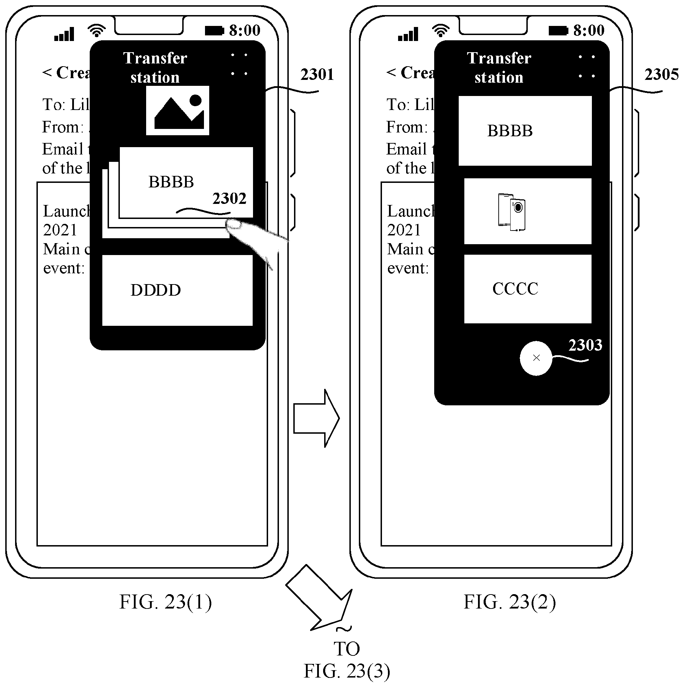

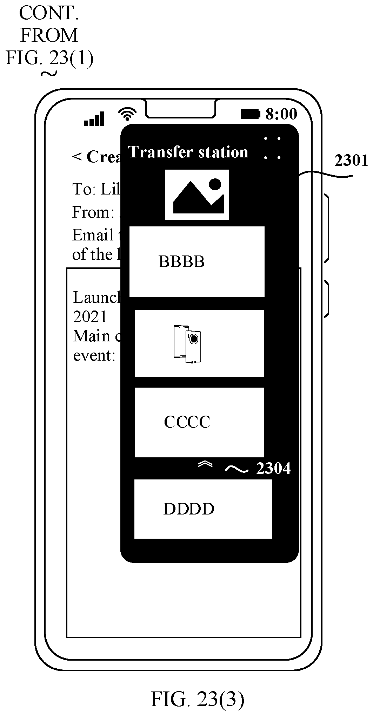

In some examples, the user may further expand a plurality of target objects in the target object group, and select and drag one or more of the target objects. That is, although the plurality of objects in the target object group are dragged to the transfer station at a time, the user may drag these objects out of the transfer station for a plurality of times. Specifically, in some examples, as shown in FIG. 23(1), a home screen 2301 of the transfer station is displayed on a right side of the screen of the mobile phone. In response to detecting an operation that the user expands the target object group 2302 (for example, an operation of tapping the target object group 2302), the mobile phone displays an interface shown in FIG. 23(2), or displays an interface shown in FIG. 23(3).

In the interface shown in FIG. 23(2), the transfer station displays a next-level interface (also referred to as a secondary interface) 2305 of the home screen, where a plurality of target objects in the target object group 2302 are tiled in the interface. In this case, the user may perform an operation on any tiled target object, for example, touching and holding one of the target objects and dragging the target objects to a target position of the application 2, so as to insert the target object into the target position of the application 2. Optionally, in a process in which the user drags the target object, the mobile phone may temporarily hide the interface 2305. After the dragging operation is completed, that is, after the mobile phone completes inserting the target object into the target position of the application 2, the mobile phone may restore the interface 2305 or restore the level-1 interface for display. For other content, refer to the foregoing related content. Details are not described again in the following. Alternatively, the user may exit the interface 2305 by using a deletion control 2303 in the interface 2305 of the transfer station, and return to the home screen 2301.

In the interface shown in FIG. 23(3), the transfer station directly expands the plurality of target objects in the target object group 2302 in the home screen. The user can directly perform an operation on any tiled target object. The user may further collapse the plurality of tiled target objects by using a collapse control 2304, that is, restore the stacked display state again. For other content, refer to the foregoing related content. Details are not described again in the following.

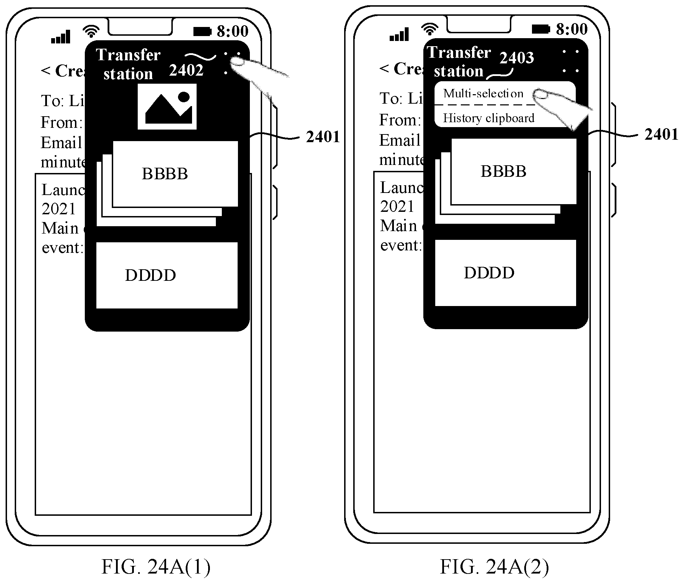

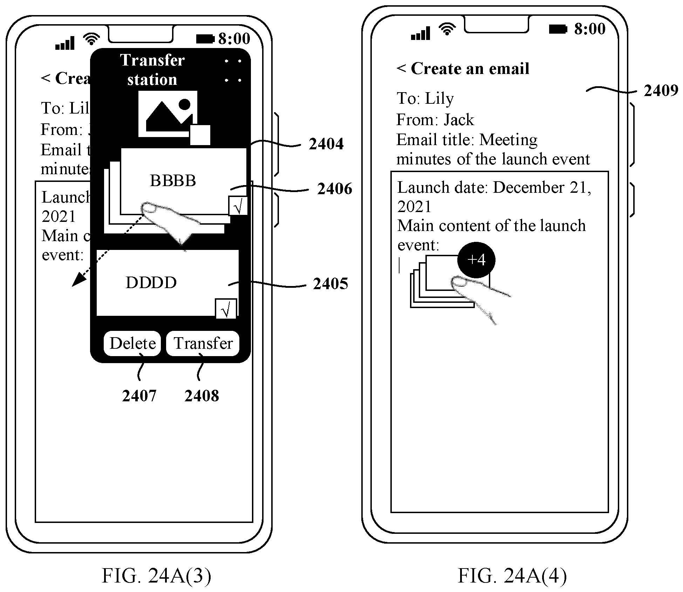

In some other examples, the user may alternatively select a plurality of target objects that are displayed independently. That is, the user may select a plurality of target objects that are dragged and stored in the transfer station for a plurality of times. For example, as shown in FIG. 24A(1), a home screen 2401 of the transfer station includes a control 2402. In response to detecting that the user operates the control 2402, the mobile phone displays a menu 2403 shown in FIG. 24A(2). The menu 2403 includes a multi-selection option, and optionally, may further include a history clipboard option. In response to detecting that the user selects the multi-selection option, the mobile phone displays a transfer station interface 2404 shown in FIG. 24A(3). In the transfer station interface 2404, each target object (one target object is dragged for storage in the transfer station at a time) or each target object group (a plurality of target objects are dragged for a plurality of times for storage in the transfer station) corresponds to a check box. That is, the transfer station enters a multi-selection state. The user can select a plurality of target objects or target object groups. The check boxes corresponding to the selected target objects or target object groups are in a selected state. In some examples, as shown in FIG. 24A(3), the user presses a selected target object 2405 or a selected target object group 2406, and drags the target object 2405 and the target object group 2406 to the target position of the application 2. Optionally, in an interface 2409 shown in FIG. 24A(4), when the user starts to drag the target object 2405 and the target object group 2406, or when the user drags the target object 2405 and the target object group 2406 out of the interface 2402 of the transfer station, the mobile phone may temporarily hide the interface 2402 of the transfer station. Subsequently, when detecting a releasing operation of the user in a region into which the target object can be inserted in the application 2 (a release position is a target position), the mobile phone inserts all target objects included in the target object 2405 and the target object group 2406 into the target position.

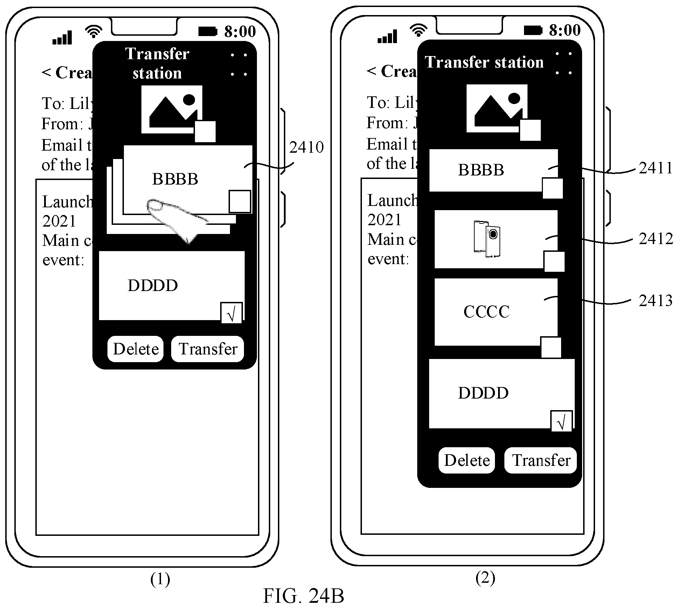

In addition, it should be further noted that, in some examples, after the transfer station enters the multi-selection state, the user may further expand the target object group, and select one or more target objects in the target object group. For example, in a transfer station interface shown in (1) in FIG. 24B, when the user taps a check box in the target object group 2410, the target object group 2410 is selected. When the user taps another position in the target object group 2410 other than the check box, the mobile phone expands the target object group 2410, and displays the interface of the transfer station shown in (2) in FIG. 24B. It can be seen that the mobile phone has tiled each target object in the target object group 2410 (including a target object 2411, a target object 2412, and a target object 2413). In addition, each target object also corresponds to a check box, and the user may select any one or more target objects.

In some examples, in the interface 2404 of the transfer station shown in FIG. 24A(3), after the transfer station enters the multi-selection state, the interface 2404 may further display a deletion control 2407 and a transfer control 2408. The user may delete the selected target object and/or the selected target object group from the transfer station by using the deletion control 2407. Optionally, after the user operates the deletion control 2407, the mobile phone may further display a secondary confirmation pop-up window to ask the user whether to determine to delete the selected target object. Alternatively, the user may share the selected target object and/or the selected target object group with another device by using the transfer control 2408. In some examples, after the another device receives the target object shared by the mobile phone, a transfer station of the another device displays the target object.

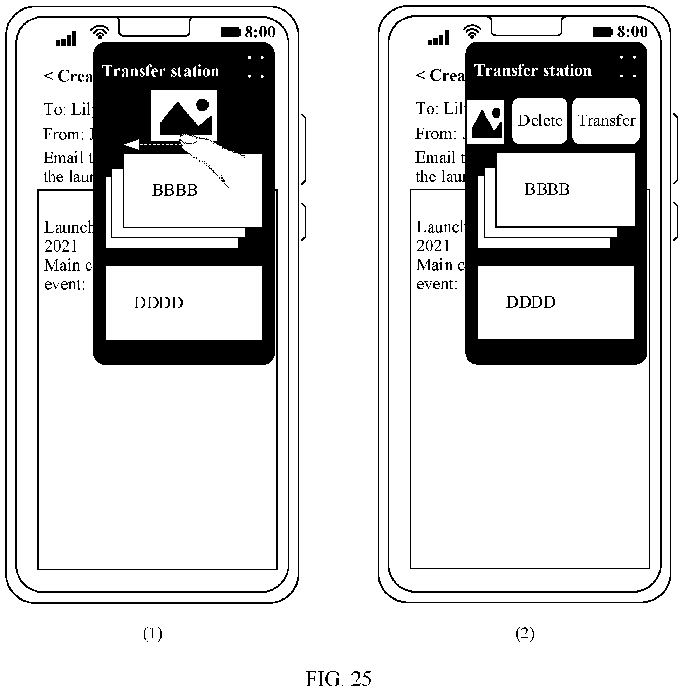

It should be noted that, when the transfer station does not enter the multi-selection state, the user may alternatively perform an operation of deleting or transferring a single target object or a single target object group. In some examples, the user may invoke a delete and/or transfer control for the target object through a specific operation (for example, horizontally sliding the target object). For example, as shown in (1) in FIG. 25, in response to an operation that the user presses a specific target object (or a target object group) and slides leftwards, the mobile phone displays function controls shown in (2) in FIG. 25 for the target object (or the target object group), such as a deletion control and a transfer control. In this case, the user may delete the target object by using the deletion control, and share the target object with another device by using the transfer control. It may be understood that the user may further expand the target object group, and perform a similar function for any target object in the target object group. Details are not described one by one again.

In some examples, the transfer station may also provide a function of the history clipboard. The history clipboard includes an object copied or clipped by the mobile phone, for example, a text, a picture, or a video.

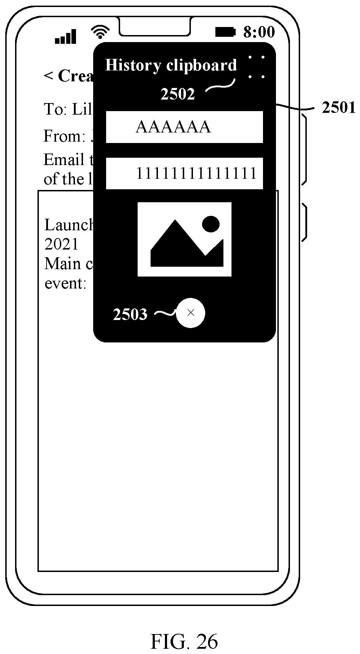

An entrance to the transfer station is not limited in this application. In some examples, the entrance to the history clipboard may be displayed in the home screen of the transfer station. In some other examples, the history clipboard may be accessed through a menu accessed through a home screen button. For example, referring to FIG. 24A(1) and FIG. 24A(2), after detecting that the user selects the "history clipboard" option in the menu 2403, the mobile phone displays a history clipboard interface. In some examples, as shown in FIG. 26, a history clipboard interface 2501 includes an object copied or clipped by the mobile phone, for example, a text, a picture, or a video. Optionally, the user may further directly drag an object (namely, the target object) in the history clipboard to the application 2, so as to quickly send the object in the history clipboard to the application 2 or insert the object into a target position of the application 2. Optionally, the interface 2501 may further include a "More" control 2502. In some examples, the user may open a menu by using the "More" control 2502, and select a multi-selection control, so that the history clipboard enters a multi-selection state. In some other examples, the multi-selection control may be directly displayed in the interface 2501. In a multi-selection manner, the user may transfer a plurality of target objects in the history clipboard to the application 2 by dragging at a time. For a related interface, refer to the interface when the transfer station enters the multi-selection state. Details are not described again in the following. The interface 2501 further includes a deletion control 2503, and the user may exit the history clipboard by using the deletion control 2503, and return to the interface of the transfer station, that is, return to the home screen 2401 of the transfer station shown in FIG. 24A(2).

In some other examples, the transfer station may also provide historical data for the transfer station. In some examples, the historical data of the transfer station includes a target object stored by the transfer station before the transfer station exits last time. In some examples, after a mobile phone exits the transfer station, the mobile phone clears the target object stored before the transfer station exits, and retains, in only historical data of the transfer station, a target object stored before the mobile phone exits this time.

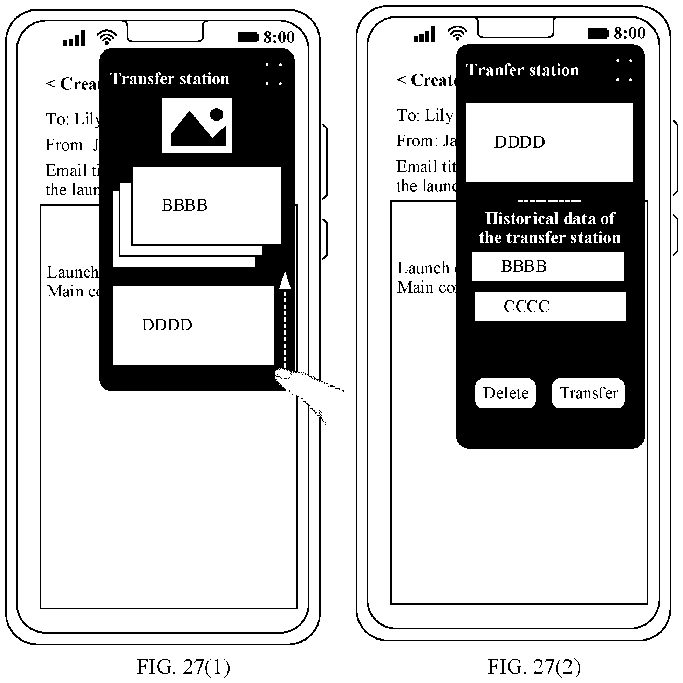

For example, as shown in FIG. 27(1), the mobile phone displays a home screen of the transfer station. At this time, the transfer station does not enter the multi-selection state. The user can switch the content displayed in the current home screen of the transfer station by, for example, a slide-up operation. In some examples, all the target objects stored in the transfer station have displayed in the current home screen of the transfer station, and in response to the slide-up operation performed by the user, the mobile phone starts to display the historical data of the transfer station, such as the interface of the transfer station shown in FIG. 27(2). Optionally, the transfer station may set a dividing line and a text prompt between the historical data and other data, or prompt the user in another manner. In some other examples, the current home screen of the transfer station does not display all target objects of the transfer station, and in response to the slide-up operation performed by the user, the mobile phone switches to display another target object. At the end of the target objects stored in the transfer station, the historical data of the transfer station starts to be displayed. In some other examples, the current home screen of the transfer station may display both the stored target object and the historical data of the transfer station. In some other examples, the home screen of the transfer station may directly display an entrance to historical data, and a historical data interface is displayed by tapping the entrance. In some examples, the user may directly drag any target object in the historical data of the transfer station to share with the application 2. A related operation is the same as a method for dragging a target object stored in the transfer station. Details are not described again in the following.

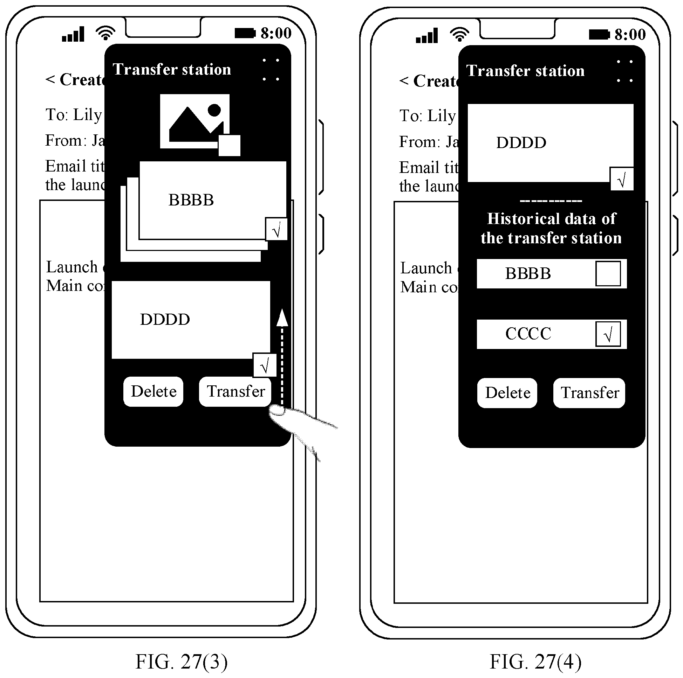

In some other examples, as shown in FIG. 27(3), the mobile phone displays a home screen of the transfer station. At this time, the transfer station has entered the multi-selection state. Similar to that in which the transfer station does not enter the multi-selection state, the user may switch, by performing, for example, the slide-up operation, content currently displayed in the home screen of the transfer station, for example, an interface shown in FIG. 27(4), where the interface includes historical data of the transfer station. Optionally, in this case, each target object or target object group in the historical data of the transfer station that is displayed by the mobile phone corresponds to a check box, and the user may directly select the target object or the target object group. It may be understood that, in some examples, after the user expands the target object group, each target object in the target object group also corresponds to a check box. In other words, the user may select a target object in the historical data by using a check box, and then perform an operation, for example, a sharing operation, a deleting operation, or a transferring operation. This improves operation efficiency of the user.

It may be noted that, according to the method provided by some of the foregoing examples, the user may simultaneously select the target object in the transfer station (the target object stored during the startup of the transfer station) and the target object in the historical data of the transfer station (the target object stored in the transfer station when the transfer station exits last time), and share with the another application at a time. This avoids operation inconvenience caused by data loss that may be caused by the user unintentionally exiting the transfer station, and improves user experience.

For other content, refer to related content in the foregoing example of directly dragging the floating window of the transfer station. Details are not described again in the following.

### (3) Examples of different types of applications 2

In some examples, the application 2 may be a document/picture editing application, for example, a document application, a PPT application, a table application, a memo application, a picture application, or an email application. When the target object is dragged to a to-be-input region in this type of application, the target object may be directly inserted into the to-be-input region.

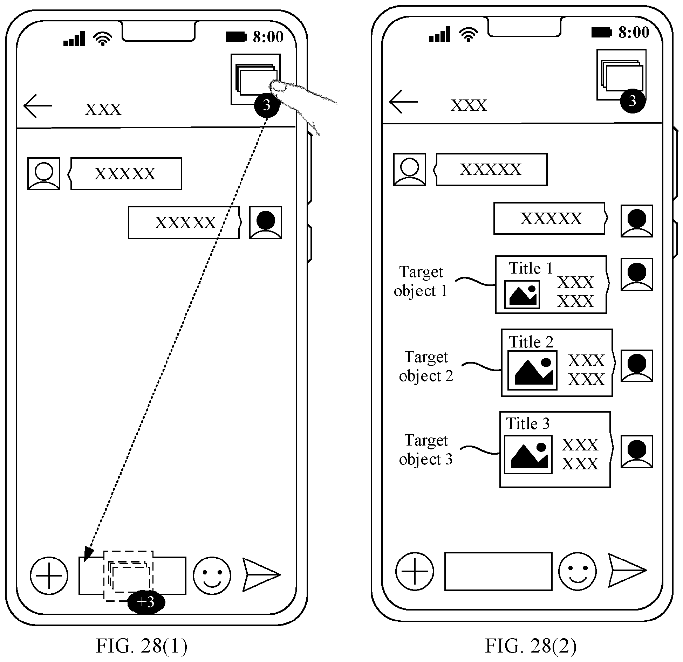

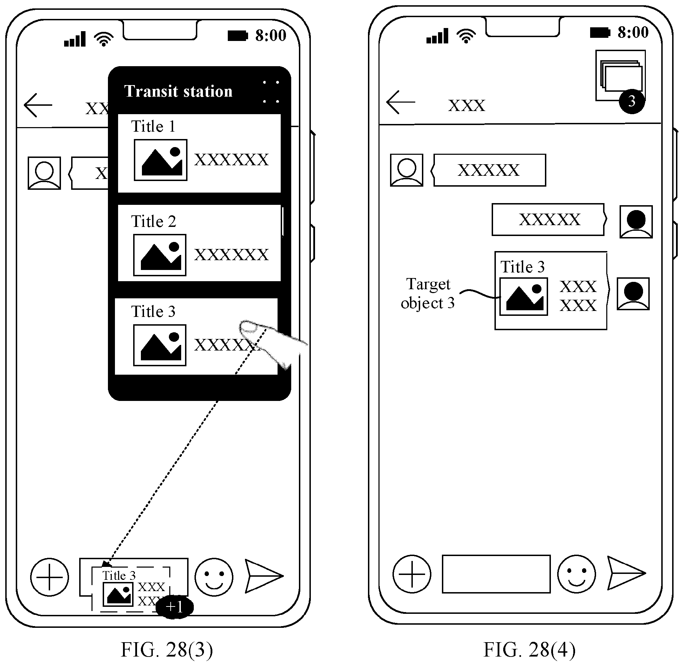

In some other examples, the application 2 may alternatively be a communication application, for example, a short message messaging application or an instant messaging application. When the target object is dragged to a to-be-input region in this type of application, the target object may be directly inserted into the to-be-input region, or the target object may be directly sent. For example, in a dialog interface shown in FIG. 28(1), when detecting that the user directly drags the floating window of the entire transfer station to a message box and releases the floating window, the mobile phone sends all target objects in the transfer station, and displays the interface shown in FIG. 28(2). For another example, in an interface shown in FIG. 28(3), when detecting that the user drags a specific target object in the transfer station to the message box and releases the specific target object, the mobile phone sends the selected target object, and displays an interface shown in FIG. 28(4).

It can be learned that the mobile phone may share the target object of the transfer station with the application 2 by dragging the target object from the transfer station, so that an operation process in the application 2 is avoided. For example, in the foregoing example, the user does not need to tap the sending control after inputting the to-be-sent content in the message box, to implement a function of sending a message.

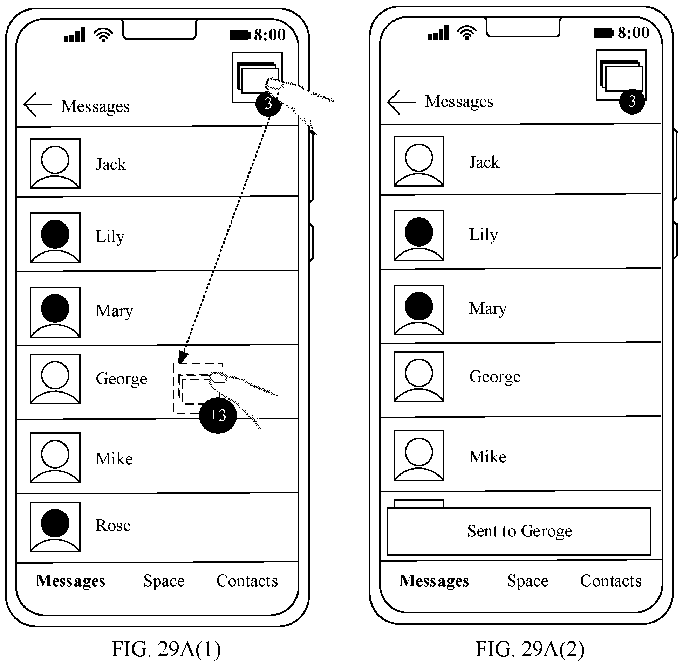

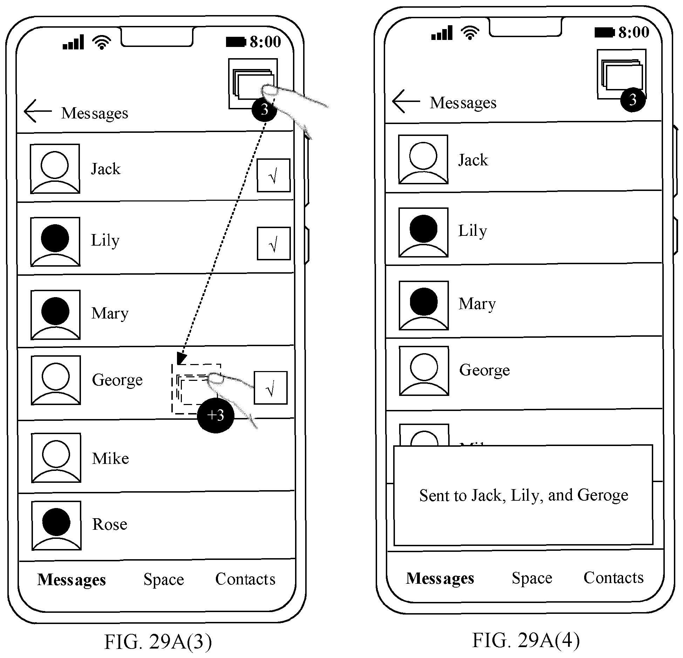

In some other examples, the target object in the transfer station may be sent by dragging the target object to a contact list or a message list. For example, in an interface shown in FIG. 29A(1), when detecting that the user drags the floating window of the transfer station to any contact in the message list/contact list and releases the floating window, the mobile phone sends all target objects in the transfer station to the corresponding contact. In some examples, the mobile phone may display a prompt pop-up box shown in FIG. 29A(2), to prompt "Sent to George". In some other examples, the mobile phone may display a dialog interface with George. For details, refer to FIG. 28(2). It may be understood that, in some other examples, the user may also expand the home screen of the transfer station, and select one or more target objects from the home screen, and send the target objects to another contact. Details are not described again in the following.

It can be learned that the mobile phone shares the target object of the transfer station with the application 2 by dragging the target object from the transfer station, so that an operation process in the application 2 is avoided. For example, a series of operations in which the user opens a chat interface of a contact, enters to-be-sent content in a message box, and taps a sending control are avoided in the foregoing example, so as to implement a function of quickly sending a message.

In still some examples, the target object in the transfer station may be sent to a plurality of contacts at a time by selecting a plurality of contacts. For example, in an interface shown in FIG. 29A(3), the user may select a plurality of contacts in the message list/contact list, for example, "Jack", "Lily", and "George" in the figure. In response to detecting that the user drags the floating window of the transfer station to any selected contact and releases the floating window, the mobile phone sends all target objects in the transfer station to the plurality of selected contacts. Optionally, the mobile phone may display a prompt pop-up box shown in FIG. 29A(4), to prompt "Sent to Jack, Lily, and George". It may be understood that, in some other examples, the user may also expand the home screen of the transfer station, and select one or more target objects from the home screen, and send the target objects to another contact. Details are not described again in the following. It can be learned that a function of sending a message to a plurality of contacts is implemented through a drag behavior. This greatly simplifies an operation of the user.

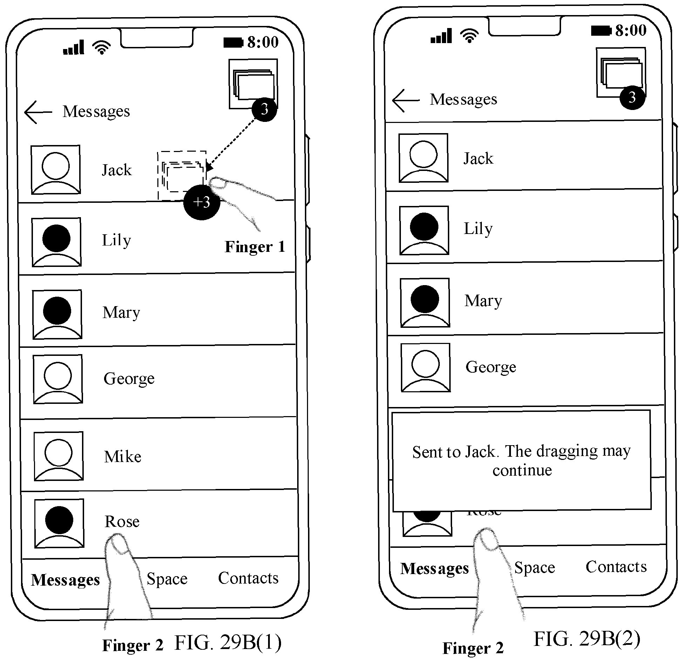

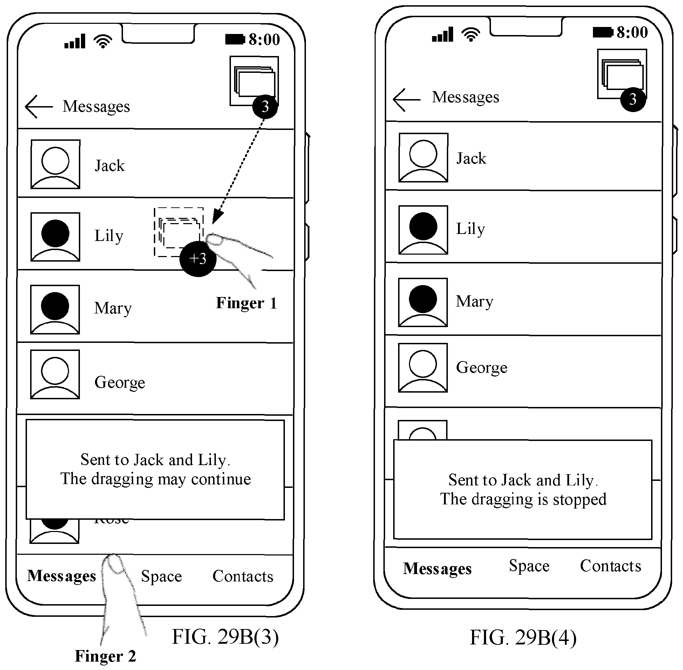

In another example, a function of sending a message to a plurality of contacts may be implemented through a drag behavior cooperated by two fingers or hands. For example, as shown in FIG. 29B(1), when detecting that a finger 1 drags the floating window of the transfer station to a contact 1 (for example, Jack) and releases the floating window, and further detecting that a finger 2 presses a specific position or any position on the screen, the mobile phone sends all the target objects of the transfer station to the contact 1, and an interface shown in FIG. 29B(2) is displayed. A prompt pop-up window is displayed in the interface, and is used to prompt "Sent to Jack. The dragging may continue". When further detecting that the finger 1 drags the floating window of the transfer station to a contact 2 (for example, Lily) and releases the floating window, and further detecting that the finger 2 presses a specific position or any position on the screen, the mobile phone sends all target objects of the transfer station to a contact 2, and an interface shown in FIG. 29B(3) is displayed. A prompt pop-up window may be displayed in the interface, and is used to prompt "Sent to Jack and Lily. The dragging may continue". If the mobile phone detects that the finger 2 leaves the screen, the mobile phone displays an interface shown in FIG. 29B(4). A prompt pop-up window is displayed in the interface, and is used to prompt "Sent to Jack and Lily. The dragging is stopped".

It should be noted that the finger 1 shown in FIG. 29B(3) is only used to distinguish that the finger 1 and the finger 2 are different fingers, and it is not limited that the finger 1 herein and the finger 1 shown in FIG. 29B(1) are a same finger, and may actually be a same finger or different fingers. In addition, it may be understood that the finger 1 and the finger 2 herein may be different fingers of a same hand, or may be fingers of different hands.

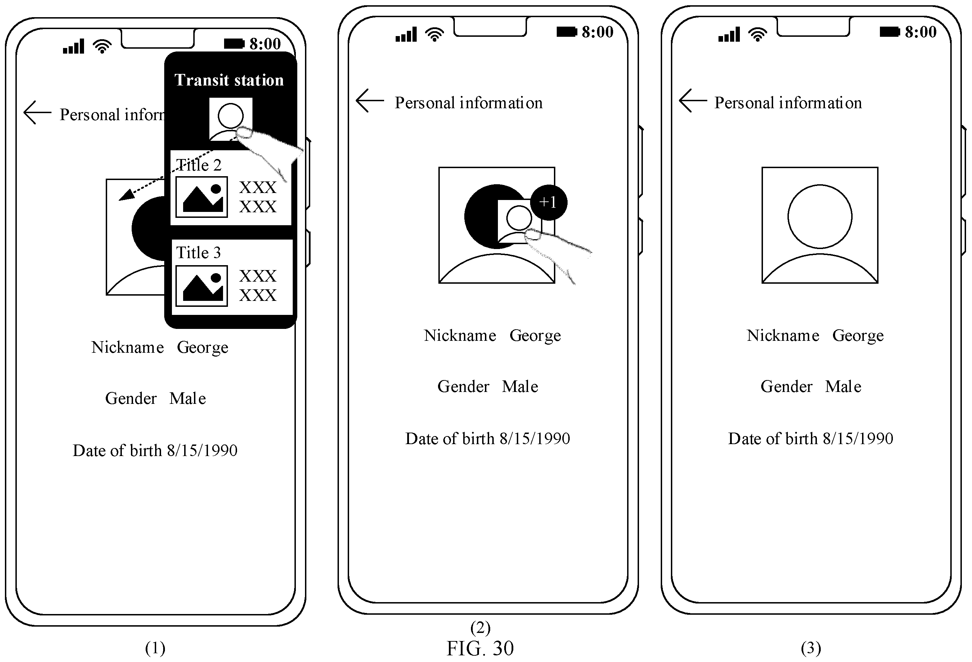

In still some examples, the user may modify or replace the object of the transfer station by dragging the object to a specific position of the application. For example, in a personal information interface shown in (1) in FIG. 30, the personal information interface includes a profile picture of the user. The user can drag a picture of the transfer station to a position of the profile picture in the personal information interface to directly change the profile picture of the user. In response to detecting that the user drags the new profile picture from the transfer station to move out of the interface of the transfer station, in an interface shown in (2) in FIG. 30, the mobile phone may hide the interface of the transfer station. When the user drags the new profile picture to the profile picture in the personal information interface, and the user releases the new avatar image, the mobile phone replaces the profile picture of the user in the personal information interface with the new avatar image, and displays an interface shown in (3) in FIG. 30.

(4) After the target object is dragged to the application 2, intelligent conversion is performed on the target object.

When the target object is dragged to the transfer station, how the transfer station converts the target object and stores a converted target object is described above. Similarly, when the target object is dragged from the transfer station to the application 2, the mobile phone may alternatively perform intelligent conversion on the target object according to an actual requirement. In some examples, the mobile phone may perform intelligent conversion on the target object based on a type of the target object that is supported by the application 2. For example, the mobile phone may perform intelligent conversion on the dragged target object based on a type of the target object that can be supported by the drag position, to match the type of the target object that can be supported by the drag position. For example, the target object stored in the transfer station is an FA widget, and the mobile phone preferably inserts the target object into the application 2 in a form of the FA widget. If the application 2 does not support the FA widget, the FA widget is converted into a network link and inserted into the application 2 in a form of the network link (for example, in a form of the preset template), or if the application 2 does not support the network link, the FA widget is converted into a picture and inserted into the application 2 in a form of the picture, or may be converted into a text and inserted into the application 2 in a form of the text.

It should be further noted that the foregoing example is described by using an example in which the user drags the target object from the home screen or another interface of the transfer station to the application 2, and inserts the dragged target object into the application 2. It may be understood that, in some other examples, a non-dragging operation may be used to insert the selected target object into the application 2. For example, if detecting that the user performs, for example, a double-click operation or a touch and hold operation after selecting one or more target objects in the home screen or the another interface of the transfer station, the mobile phone inserts the selected one or more target objects into a position in which a cursor is located in a currently displayed application (for example, the application 2) by default. In summary, a specific operation of indicating to insert the target object in the transfer station into the application is not limited in this example of this application.

### 4. Exit the transfer station

In some examples, after receiving an operation that the user indicates to exit the transfer station, the mobile phone exits the transfer station. Optionally, the mobile phone deletes the target object that has been stored before exiting the transfer station. Optionally, the mobile phone may store, in the historical data of the transfer station, the target object stored before the mobile phone exits the transfer station this time. Optionally, the mobile phone may store, in the historical data of the transfer station, the target object stored in a process in which the mobile phone starts the transfer station this time.

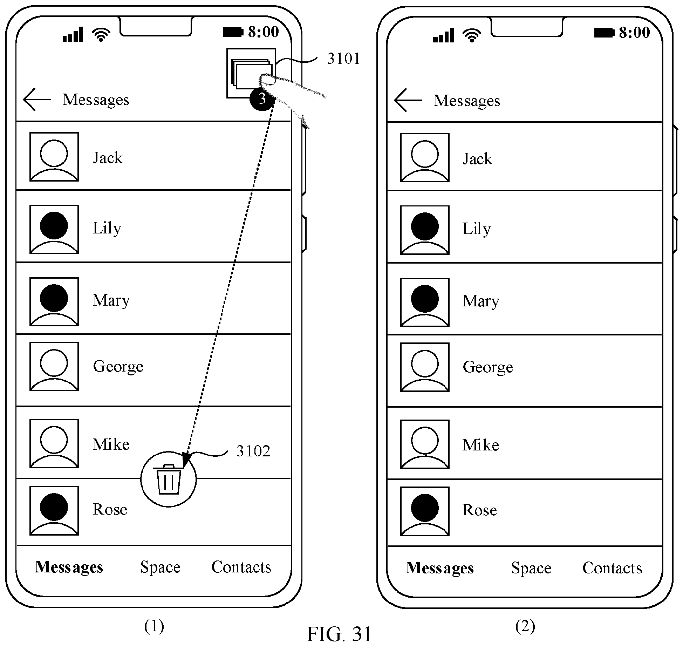

For example, in an interface shown in (1) in FIG. 31, the mobile phone starts the transfer station. When detecting that the user drags the floating window 3101 of the transfer station, the mobile phone displays the deletion control 3102. Optionally, the finger of the user does not leave the screen. Further, when detecting that the user drags the floating window 3104 of the transfer station to the deletion control 3102, and then releases the floating window 3104, the mobile phone exits the transfer station, and an interface shown in (2) in FIG. 31 is displayed.

In some other examples, when detecting that the user drags the floating window 3104 of the transfer station to the deletion control 3102, and then releases the floating window 3104, the mobile phone may not display the floating window 3104 of the transfer station, but the mobile phone does not exit the transfer station. The user may further indicate, by performing the operation O₁ or by using the entrance to the transfer station, the mobile phone to re-display the floating window 3104 of the transfer station. For specific content, refer to the foregoing description.

In some other examples, when detecting that duration in which the user touches and holds the floating window 3101 of the transfer station reaches preset duration T₄ and is less than the preset duration T₁, the mobile phone displays the deletion control 3102, so that the user indicates the mobile phone to exit the transfer station. When detecting that duration in which the user touches and holds the floating window of the transfer station reaches the preset duration T₁, the mobile phone may float all target objects in the transfer station, and further drag the floating target objects, so that the user shares the floating target objects to another application.

In still some examples, an exit instruction of the transfer station may alternatively be a voice instruction, or an operation, for example, double-tapping, or sliding in a specific direction.

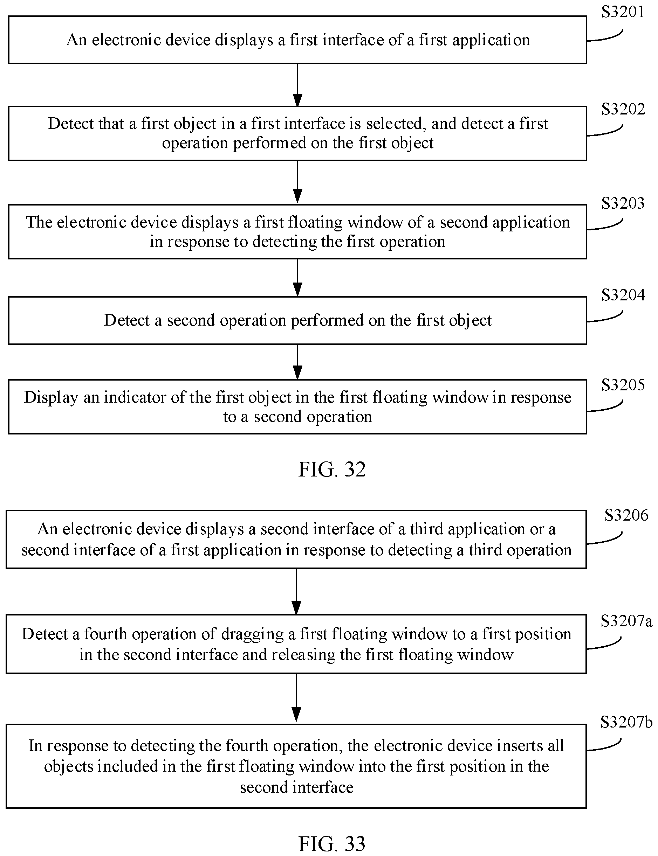

FIG. 32 is a schematic flowchart of an application information transfer method according to an example of this application. The method includes the following steps.

S3201: The electronic device displays a first interface of a first application.

S3202: Detect that a first object in the first interface is selected, and detect a first operation performed on the first object.

The first application may be the application 1 in the foregoing example, and may be any application installed on the electronic device.

For example, the first application is a document application, a browser application, a memo application, or the like. The first interface is, for example, the interface 301 shown in FIG. 3(1), the interface 409 shown in FIG. 5(1), or the interface 1301 shown in FIG. 13(1), or the interface 1501 shown in (1) in FIG. 15, or the interface 1601 shown in (1) in FIG. 16, or the interface 1701 shown in FIG. 17(1).

For another example, the first application is a desktop application, and the first interface is a desktop. For another example, the first application is a leftmost screen application, and the first interface is an interface 1801 shown in (1) in FIG. 18, that is, a leftmost screen interface.

For another example, the first application is a historical task bar, and the first interface is a multi-task interface 1701 shown in FIG. 17(1).

The first object may be any one or any combination of a text and a picture in the first interface, a list in the interface, a grid or an FA file (for example, an FA widget) in the interface. For content about the first object, refer to the foregoing content about "The following describes types of target objects that can be selected by the user". Details are not described again in the following.

In some examples, when the first object includes different types of content, the electronic device may determine the different types of content as different objects, that is, determine the first object as the plurality of objects. In still some examples, when the selected first object is discontinuous content, the electronic device determines the discontinuous content as a plurality of objects. When the selected first object is continuous content and the continuous content includes different types of content, the electronic device determines the first object as a plurality of objects.

The operation of selecting the first object includes but is not limited to: selecting the first object in the first interface by using a sliding operation; or performing a screen capture operation indicating to generate a picture corresponding to all objects in the first interface, and selecting the screenshot picture as the first object; or performing an operation performed on a specific position (for example, a title bar) in the first interface (for example, performing a horizontal sliding operation at the specific position in the first interface), and selecting the first interface or all objects in the first interface as the first object.

S3203: In response to detecting the first operation, the electronic device displays a first floating window of a second application.

The second application may be the transfer station in the foregoing example.

In an example, before the electronic device detects the first operation, the electronic device has not started the second application. In this case, in response to the first operation, the electronic device starts the second application, and displays the first floating window of the second application. The first floating window is, for example, the floating window 305 shown in FIG. 3(2).

In another example, before the electronic device detects the first operation, the electronic device has started the transfer station, but the electronic device has hidden the first floating window of the second application. In this case, in response to the first operation, the electronic device resumes displaying the first floating window of the second application.

In still another example, before the electronic device detects the first operation, the electronic device has started the transfer station, and when the electronic device displays the first interface of the first application, the electronic device has displayed the first floating window of the second application, for example, the floating window 403 described in FIG. 5(1).

S3204: Detect a second operation performed on the first object.

The second operation and the first operation may be different operations, or may be a same operation, or may be a series of consecutive operations. The series of continuous operations refers to a series of operations performed by the finger of the user when the finger does not leave the screen.

For example, the first operation is a touch and hold operation, and the second operation is performed when the finger of the user does not leave the screen. The second operation is, for example, a dragging operation, an operation of quickly sliding in a preset direction, or a shaking operation. In other words, the first operation and the second operation herein are denoted as the operation O₁ in the foregoing example, for example, any one of a touch-and-hold then drag (or referred to as drag-and-drop or the like) operation, an operation of touch-and-hold and then quickly sliding in a preset direction, a shaking operation, or a two-finger sliding operation. For specific content, refer to the foregoing description of operation O₁. Details are not described again in the following.

S3205: Display an indicator of the first object in the first floating window in response to the second operation.

The indicator of the first object may be, for example, a text indicator (for example, including all or some texts in the target object), or may be a picture indicator, for example, a thumbnail of the target object, or an icon applied to a source of the target object. Optionally, the indicator may further display a quantity of first objects.

Refer to the foregoing descriptions of FIG. 5(1) to FIG. 5(3). Before the first object is dragged to the first floating window, the indicator of the second object is already displayed in the first floating window, and after the first object is dragged to the first floating window, the indicator of the first object and the indicator of the second object are displayed in a stacked form in the first floating window. Optionally, the indicator of the first object is located at a layer above the indicator of the second object.

It can be learned that this embodiment provides an example of how to start the transfer station and how the transfer station is configured to relay the target object.

In some other examples, the electronic device may insert the target object in the transfer station into the target application. FIG. 33 is a schematic flowchart of another information transfer method according to an embodiment. It should be noted that an electronic device may start a transfer station by using the method shown in FIG. 32, or may start a transfer station by using another method. In addition, the electronic device may start the transfer station before performing the following step S3206. In some other examples, the electronic device may alternatively start the transfer station after the following step S3206. This is not specifically limited in this embodiment. The method includes the following steps.

S3206: The electronic device displays a second interface of a third application or a second interface of the first application in response to a detected third operation.

The third operation is starting the third application, or switching to the second interface of the third application, or switching to the second interface of the first application. The third application herein may be specifically the application 2 in the foregoing example.

S3207a: Detect a fourth operation of dragging the first floating window to a first position in the second interface and releasing the first floating window.

The first floating window is a floating window of the transfer station, and the first floating window includes indicators of a plurality of target objects that are displayed in a stacked form.

S3207b: In response to detecting the fourth operation, the electronic device inserts all objects included in the first floating window into the first position in the second interface.

That is, in some examples, the user may insert all objects stored in the second application into the second interface by directly dragging the first floating window to the first position. For specific content, refer to related content in the foregoing "(1) Share all target objects in the transfer station with the application 2". Details are not described again in the following.

It can be learned that, in this example of this application, a function of inserting a plurality of objects into the second interface can be implemented by using one drag behavior. This simplifies a user operation in a process of information sharing between applications, and improves efficiency of interaction between the user and the electronic device.

It may be understood that the user may further drag the first floating window to another interface again, to implement a function of quickly inserting a plurality of objects into a plurality of interfaces.

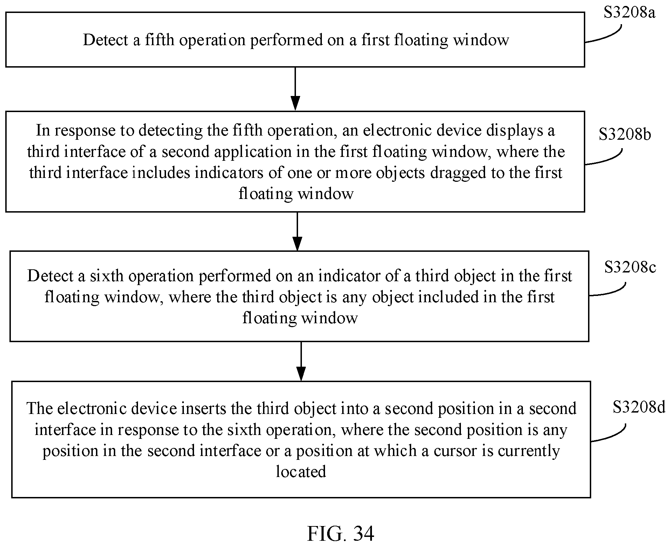

FIG. 34 shows another information transfer method provided in this embodiment. A user may expand a home screen of a transfer station, select a target object from the home screen, and quickly insert the selected target object into a target application. The method includes the following steps.

S3208a: Detect a fifth operation performed on a first floating window.

It should be noted that the electronic device may start the first floating window of the transfer station by using the method shown in FIG. 32, or may start the first floating window of the transfer station by using another method.

The fifth operation is different from the fourth operation of dragging the first floating window to a first position in a second interface and releasing the first floating window in step S3207a. The fifth operation is, for example, a tap operation.

S3208b: In response to detecting the fifth operation, the electronic device displays a third interface of the second application in the first floating window, where the third interface includes indicators of one or more objects dragged to the first floating window.

The third interface of the second application may be the home screen of the transfer station in the foregoing example, for example, the home screen 2202 of the transfer station shown in FIG. 22(4). In some examples, when the second operation is a dragging operation, an indicator of an object stored in each dragging operation is displayed independently, that is, displayed in a tiled form. If a plurality of objects are stored through a single drag, indicators of the plurality of objects may be displayed in a stacked form, to prompt the user that these objects (for example, the objects 2204) are stored through a single drag. Of course, the indicators of the plurality of objects stored through the single drag may alternatively be displayed in a tiled form.

S3208c: Detect a sixth operation performed on an indicator of a third object in the first floating window, where the third object is any object included in the first floating window.

For example, the third object herein may be any object displayed in the tiled form, or may be any object after the plurality of objects displayed in the stacked form are expanded. For specific content herein, refer to the foregoing descriptions of FIG. 22(1) to FIG. 23(3). Details are not described again in the following.

S3208d: The electronic device inserts the third object into a second position in the second interface in response to the sixth operation, where the second position is any position in the second interface or a position at which a cursor is currently located.

Therefore, this embodiment provides an example of how to select a specific target object in the transfer station and insert into the target application.

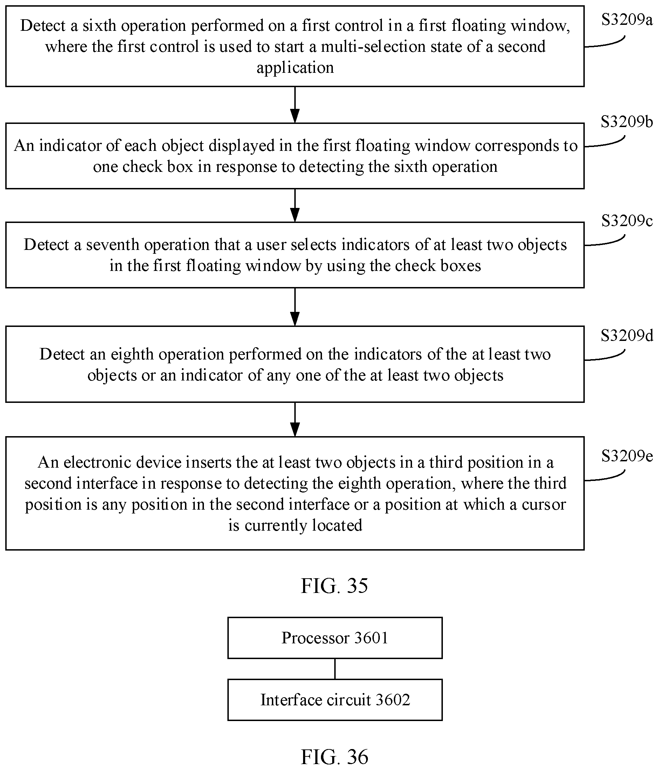

FIG. 35 shows another information transfer method according to this embodiment. A user may expand a home screen of a transfer station, select a plurality of target objects from the home screen, and quickly insert the selected target objects into a target application. The method includes the following steps.

S3209a: Detect a sixth operation performed on a first control in the first floating window, where the first control is used to enable a multi-selection state of the second application.

It should be noted that the electronic device may start the first floating window of the transfer station by using the method shown in FIG. 32, or may start the first floating window of the transfer station by using another method.

S3209b: An indicator of each object displayed in the first floating window corresponds to one check box in response to detecting the sixth operation.

S3209c: Detect a seventh operation that a user selects indicators of at least two objects in the first floating window by using the check boxes.

S3209d: Detect an eighth operation performed on indicators of the at least two objects or an indicator of any one of the at least two objects.

S3209e: The electronic device inserts the at least two objects into a third position in the second interface in response to detecting the eighth operation, where the third position is any position in the second interface or a position at which a cursor is currently located.

For the foregoing step S3209a to step S3209e, refer to the foregoing description of FIG. 24A(1) to FIG. 24B. Details are not described again in the following.

Therefore, this embodiment provides an example of how to select a plurality of specific target objects in the transfer station and insert into the target application.

It should be noted that, for ease of description, step S3207a and step S3207b, step S3208a to step S3208d, and step S3209a to step S3209e are all described when it is detected that the user performs different operations in the "second interface". It may be understood that the "second interface" herein may be a same interface, or may be different interfaces.

After the object of the second application that is selected by the user is inserted into the second interface, the user may further exit the second application. In some other examples, the second application further provides historical data, and may retain an object stored before the second application is exited last time. The user may share, by using historical data, the object stored before the second application is exited last time.

It should be further noted that, in still some examples, a function of a history clipboard may be further integrated into the second application. In this case, the user may share the object in the history clipboard with another application by using a method similar to that of sharing the object stored in the second application.

For other content of this example, refer to related descriptions in the foregoing other examples. Details are not described again in the following.

An example of this application further provides a chip system. As shown in FIG. 36, the chip system includes at least one processor 3601 and at least one interface circuit 3602. The processor 3601 and the interface circuit 3602 may be interconnected by using a line. For example, the interface circuit 3602 may be configured to receive a signal from another apparatus (for example, a memory of the electronic device 100). For another example, the interface circuit 3602 may be configured to send a signal to another apparatus (for example, the processor 3601). For example, the interface circuit 3602 may read instructions stored in the memory, and send the instructions to the processor 3601. When the instructions are executed by the processor 3601, the electronic device may be enabled to perform steps performed by the electronic device 100 (for example, the mobile phone) in the foregoing example. Certainly, the chip system may further include another discrete device. This is not specifically limited in this example of this application.

An example of this application further provides an apparatus. The apparatus is included in an electronic device, and the apparatus has a function of implementing behavior of the electronic device in any method in the foregoing examples. The function may be implemented by hardware, or may be implemented by hardware executing corresponding software. The hardware or the software includes at least one module or unit corresponding to the foregoing function, for example, a detection module or unit, a display module or unit, a determining module or unit, and a calculation module or unit.

An example of this application further provides a computer storage medium, including computer instructions. When the computer instructions are run on an electronic device, the electronic device is enabled to perform any method in the foregoing examples.

An example of this application further provides a computer program product. When the computer program product runs on a computer, the computer is enabled to perform any method in the foregoing examples.

An example of this application further provides a graphical user interface in an electronic device. The electronic device has a display, a camera, a memory, and one or more processors. The one or more processors are configured to execute one or more computer programs stored in the memory. The graphical user interface includes a graphical user interface displayed when the electronic device performs any method in the foregoing examples.

It may be understood that, to implement the foregoing functions, the electronic device or the like includes a corresponding hardware structure and/or software module for performing each function. A person skilled in the art should easily be aware that, in combination with units and algorithm steps of the examples described in examples disclosed in this specification, examples of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the examples of the present invention.

In the examples of this application, the electronic device or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in examples of the present invention, module division is an example, and is merely a logical function division. During actual implementation, another division manner may be used.

A person skilled in the art may clearly learn from the foregoing description of the implementations that, for convenience and brevity of description, division into the foregoing functional modules is only used as an example for description. During actual application, the foregoing functions may be allocated to different function modules for implementation based on a requirement, that is, an inner structure of an apparatus is divided into different functional modules, to complete all or some of the functions described above. For a detailed working process of the foregoing system, apparatus, and unit, refer to a corresponding process in the foregoing method examples. Details are not described again in the following.

Functional units in examples of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of examples of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in examples of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An information transfer method, comprising:
displaying, by an electronic device, a first interface of a first application;
detecting that a first object in the first interface is selected, and detecting a first operation performed on the first object;
displaying, by the electronic device, a first floating window of a second application in response to detecting the first operation;
detecting a second operation performed on the first object;
displaying an indicator of the first object in the first floating window in response to the second operation;
displaying, by the electronic device, a second interface of a third application or a second interface of the first application in response to detecting a third operation; and
detecting a fourth operation of dragging the first floating window to a first position in the second interface and releasing the first floating window, or detecting a fourth operation of dragging all content displayed in a stacked form in the first floating window to a first position in the second interface and releasing all the content; and inserting, by the electronic device in response to detecting the fourth operation, all or some objects comprised in the second application into the first position in the second interface.

2. The method according to claim 1, wherein before the first object is dragged to the first floating window, an indicator of a second object is already displayed in the first floating window, and after the first object is dragged to the first floating window, the displaying an indicator of the first object in the first floating window comprises displaying the indicator of the first object and the indicator of the second object in the stacked form in the first floating window.

3. The method according to claim 2, wherein the indicator of the first object is located at a layer above the indicator of the second object.

4. The method according to any one of claims 1 to 3, wherein the method further comprises:
detecting a fifth operation performed on the first floating window; and
displaying, by the electronic device, a third interface of the second application in the first floating window in response to detecting the fifth operation, wherein the third interface comprises indicators of one or more objects dragged to the first floating window.

5. The method according to any one of claims 1 to 4, wherein the method further comprises:
detecting a sixth operation performed on an indicator of a third object in the first floating window, wherein the third object is any object comprised in the first floating window; and
inserting, by the electronic device, the third object into a second position in the second interface in response to the sixth operation, wherein the second position is any position in the second interface or a position at which a cursor is currently located.

6. The method according to any one of claims 1 to 5, wherein the method further comprises:
detecting a sixth operation performed on a first control in the first floating window, wherein the first control is used to start a multi-selection state of the second application;
corresponding, by an indicator of each object displayed in the first floating window, to one check box in response to detecting the sixth operation;
detecting a seventh operation that a user selects indicators of at least two objects in the first floating window by using the check boxes;
detecting an eighth operation performed on indicators of the at least two objects or an indicator of any one of the at least two objects; and
inserting, by the electronic device, the at least two objects into a third position in the second interface in response to detecting the eighth operation, wherein the third position is any position in the second interface or a position at which the cursor is currently located.

7. The method according to any one of claims 1 to 6, wherein
when the electronic device determines the selected first object as a plurality of objects, and each object in the plurality of objects corresponds to one indicator, the displaying an indicator of the first object in the first floating window comprises:
displaying a plurality of indicators of the plurality of objects in the stacked form in the first floating window, or
displaying a plurality of indicators of the plurality of obj ects in a tiled form in the first floating window.

8. The method according to claim 4, wherein
when the electronic device determines the selected first object as a plurality of objects, the electronic device displays the plurality of first objects in the stacked form in the third interface of the second application.

9. The method according to claim 7 or 8, wherein that the electronic device determines the selected first object as a plurality of objects comprises:
when the selected first object comprises different types of content, the electronic device determines the first object as the plurality of objects.

10. The method according to claim 7 or 8, wherein that the electronic device determines the selected first object as a plurality of objects comprises:
when the selected first object is discontinuous content, the electronic device determines the discontinuous content as the plurality of objects; or
when the selected first object is continuous content and the continuous content comprises different types of content, the electronic device determines the first object as the plurality of objects.

11. The method according to any one of claims 7 to 10, wherein
when displaying a plurality of identifiers of the plurality of objects in the stacked form, the electronic device further displays first indication information in the first floating window, wherein the first indication information indicates a quantity of the plurality of objects.

12. The method according to claim 4 or 5, wherein after the displaying, by the electronic device, a third interface of the second application in the first floating window, the method further comprises:
detecting a ninth operation performed on a plurality of objects displayed in the stacked form in the third interface; and
inserting, by the electronic device, the plurality of first objects into a fourth position in the second interface in response to the ninth operation, wherein the fourth position is any position in the second interface or a position at which the cursor is currently located.

13. The method according to any one of claims 1 to 8, wherein the method further comprises:
further displaying, by the electronic device, a floating layer in response to detecting the first operation, wherein all or a part of content of the first object is displayed in the floating layer; and
the displaying an indicator of the first object in the first floating window in response to the second operation comprises:
displaying, by the electronic device, the indicator of the first object in the first floating window in response to detecting that the floating layer is dragged to the first floating window and then released.

14. The method according to any one of claims 1 to 13, wherein the method further comprises:
switching, by the electronic device, the first floating window to a side strip in response to detecting a tenth operation performed on the first floating window, wherein the side strip displays a part of content or a specific mark of the first floating window, and a screen area occupied by the side strip is less than a screen area occupied by the first floating window.

15. The method according to any one of claims 1 to 14, wherein the detecting that a first object in the first interface is selected comprises:
detecting a screen capture operation, wherein the screen capture operation is used to generate a picture corresponding to all objects in the first interface, and the first object is the picture.

16. The method according to any one of claims 1 to 15, wherein the method further comprises:
in a process of dragging the first floating window to the first position in the second interface,
when the first floating window is dragged to a region into which content cannot be inserted in the second interface, presenting, by the electronic device, the first floating window in a first style or presenting, by the electronic device, an object in the first floating window in a first style; or
when the first floating window is dragged to a region into which content can be inserted in the second interface, presenting, by the electronic device, the first floating window in a second style or presenting, by the electronic device, an object in the first floating window in a second style, wherein
the second style is different from the first style.

17. The method according to claim 4, wherein after the displaying, by the electronic device, a third interface of the second application in the first floating window, the method further comprises:
detecting an operation performed on a second control in the first floating window, wherein the second control is used to start a history clipboard in the second application; and
displaying, by the electronic device, the history clipboard in the first floating window in response to detecting the operation performed on the second control in the first floating window.

18. The method according to claim 4, wherein after the displaying, by the electronic device, a third interface of the second application in the first floating window, the method further comprises:
displaying, by the electronic device, historical data in the first floating window in response to detecting a slide-up operation in the third interface, wherein the historical data comprises all objects stored before the second application is exited last time.

19. The method according to any one of claims 1 to 14, wherein the method further comprises:
displaying, by the electronic device, a third control in response to detecting an operation of touching and holding the first floating window, wherein the third control indicates to exit the second application or close the first floating window; and
in response to detecting that the first floating window is dragged to the third control, exiting, by the electronic device, the second application or no longer displaying the first floating window.

20. The method according to any one of claims 1 to 19, wherein before the detecting a fourth operation of dragging the first floating window to a first position in the second interface and releasing the first floating window, the electronic device further detects the operation of touching and holding the first floating window.

21. The method according to any one of claims 1 to 20, wherein the detecting that a first object in the first interface is selected comprises detecting an operation performed on a specific position in the first interface, and selecting the first interface or all the objects in the first interface as the first object.

22. The method according to any one of claims 1 to 21, wherein the first operation is an operation of touching and holding the selected first object.

23. The method according to any one of claims 1 to 21, wherein the second operation is an operation of dragging the first object to the first floating window, an operation of shaking the first object, an operation of swinging the first object, or a click operation performed on a fourth control, wherein the fourth control indicates to store the first object in the second application.

24. An information transfer method, comprising:
displaying, by an electronic device, a first interface of a first application;
detecting that a first object in the first interface is selected, and detecting a first operation performed on the first object;
displaying, by the electronic device, a first floating window in a first state in response to detecting the first operation, wherein the first floating window comprises an indicator of a second obj ect;
detecting a second operation performed on the first object;
displaying an indicator of the first object in the first floating window in response to the second operation, wherein the indicator of the second object and the indicator of the first object are in a stacked state, and the indicator of the first object is located at a layer above the indicator of the second object;
displaying, by the electronic device, a second interface in response to detecting a third operation, wherein the second interface is an interface of a third application or the second interface is a second interface of the first application;
changing the first floating window from a first state to a second state in response to detecting a fourth operation, wherein the indicator of the first object comprised in the first floating window and the indicator of the second object are displayed in a tiled manner; and
inserting the first object or the second object into the second interface in response to an operation performed by a user on the indicator of the first object or the indicator of the second obj ect.

25. The method according to claim 24, wherein the first floating window in the second state further comprises indicators of a plurality of third objects that are displayed in a stacked form, and the method comprises:
displaying the indicators of the plurality of third objects in the tiled form in the first floating window in response to an operation performed on the plurality of third objects.

26. An electronic device, comprising a processor, a memory, and a touchscreen, wherein the memory and the touchscreen are coupled to the processor, the memory is configured to store computer program code, the computer program code comprises computer instructions, and when the processor reads the computer instructions from the memory, the electronic device is enabled to perform the information transfer method according to any one of claims 1 to 25.

27. A computer-readable storage medium, comprising computer instructions, wherein when the computer instructions are run on an electronic device, the electronic device is enabled to perform the information transfer method according to any one of claims 1 to 25.

28. A chip system, comprising one or more processors, wherein when the one or more processors execute instructions, the one or more processors perform the information transfer method according to any one of claims 1 to 25.
